# EUROPEAN PATENT APPLICATION

(11) **EP 4 506 314 A1**
(43) Date of publication of application: **12.02.2025**
(21) Application number: 22813876.4
(22) Date of filing: 20.05.2022
(51) Int. Cl.: C03B 33/033

(54) **SNAPPINGLY DIVIDING SYSTEM AND SNAPPINGLY DIVIDING PROCESSING METHOD**

(30) Priority: 08.04.2022 JP 2022064199
(71) Applicant: Bando Kiko Co., Ltd, Tokushima-shi, Tokushima 770-0871 (JP)
(72) Inventor: BANDO Kazuaki, Tokushima-shi Tokushima 7700871 (JP)
(74) Representative: J A Kemp LLP
(86) International application number: PCT/JP2022/020919
(87) International publication number: WO 2023/195189

(57) **Abstract**

To provide a bend-breaking system capable of smoothly and reliably bend-breaking an edge portion of a glass plate to be processed in bend-breaking processing.

In a bend-breaking system 10a, after a bend-breaking cutter wheel lowered in an up-down direction by a holder raising/lowering mechanism (first raising/lowering mechanism) forms an end cutting line at an edge portion of a glass plate, the bend-breaking cutter wheel is raised by the holder raising/lowering mechanism, after the first pressing member is lowered by the first pressing member raising/lowering mechanism (second raising/lowering mechanism) to sandwich a main body portion and the edge portion of the glass plate between the first pressing member and the first and second support members, and the first pressing member a and the first and second support members sandwich the main body portion and the edge portion of the glass plate, the second support member is lowered by the second support member raising/lowering mechanism (fourth raising/lowering mechanism), and the second pressing member is lowered by the second pressing member raising/lowering mechanism (third raising/lowering mechanism) to press the edge portion of the glass plate extending to an outer side of a contour cutting line downward while maintain sandwiching of the main body portion of the glass plate by the first pressing member and the first support member and bend-breaks the edge portion.

## Description

### Technical Field

The present invention relates to a bend-breaking system that bend-breaks an edge portion of a glass plate to be processed, such as a window glass plate or a liquid crystal glass plate of an automobile, and also relates to a bend-breaking processing method for bend-breaking an edge portion of a glass plate to be processed.

### Background Art

There is disclosed a glass plate processing system including: a loading conveyor that loads a glass plate; a cutting processing area located in front of the loading conveyor; a bend-breaking processing area located in front of the cutting processing area; a grinding processing area located in front of the bend-breaking processing area; an unloading conveyor located in front of the grinding processing area; and a conveyance mechanism that conveys the glass plate from the loading conveyor to each processing area (see Patent Literature 1).

The cutting processing area of the glass plate processing system includes a cutting processing table having a first moving mechanism that moves in the width direction with the positioned glass plate placed thereon, and a cutting device that is movable in the front-rear direction. In the cutting processing area, after the cutting device moves rearward in the front-rear direction toward the outer side in the width direction of an edge portion of the glass plate placed on the cutting processing table, the cutting processing table is moved in the width direction toward the cutting device by the first moving mechanism, and a contour cutting line is formed on the glass plate placed on the cutting processing table using the cutting device. The bend-breaking processing area includes a bend-breaking processing table on which the positioned glass plate subjected to the cutting processing is placed, and a bend-breaking device movable in the front-rear direction. In the bend-breaking processing area, after the bend-breaking device moves rearward in the front-rear direction toward the bend-breaking processing table, an end cutting line (scribe) is formed at the edge portion of the glass plate placed on the bend-breaking processing table using the bend-breaking device, and the edge portion of the glass plate is bend-broken.

The grinding processing area includes a grinding processing table having a second moving mechanism that moves in the width direction with a main body portion of the positioned glass plate subjected to the bend-breaking processing placed thereon, and a grinding device that is movable in the front-rear direction. In the grinding processing area, after the grinding device moves rearward in the front-rear direction toward the outer side in the width direction of the edge of the main body of the glass plate placed on the grinding processing table, the grinding processing table moves in the width direction toward the grinding device by the second moving mechanism, and the edge of the main body portion of the glass plate placed on the grinding processing table is ground using the grinding device. Note that the cutting processing and the grinding processing are performed in synchronization.

### Citation List

### Patent Literature

Patent Literature 1: JP 2020-040877 A

### Summary of Invention

### Technical Problem

As shown in Fig. 32, a bend-breaking device 140 of the glass plate processing system disclosed in Patent Literature 1 includes a bend-breaking jig 141, a first raising/lowering mechanism 142 (air cylinder), a pressing roller 143, and a second raising/lowering mechanism 144 (air cylinder). The bend-breaking jig 141 includes a bend-breaking cutter wheel 145 that forms an end cutting line (scribe) at an edge portion of a glass plate, and a bend-breaking cutter holder 146 that is located above the bend-breaking cutter wheel 145 and supports the bend-breaking cutter wheel 145. The bend-breaking cutter holder 146 includes a holder main body including a coupling portion, and a holder head attached to a distal end of the holder main body. The bend-breaking cutter holder 146 rotates in the circumferential direction (around the axis) with respect to the cutter holder center axis extending in the up-down direction by the rotation of a θ-axis servomotor 147. Although not shown, a support device that supports a lower surface of the glass plate is disposed on a side of the lower surface of the glass plate. The support device includes a first support member having a circular first support surface and a second support member extending in a direction around the first support member and having an annular second support surface.

The bend-breaking processing in the glass plate processing system disclosed in Patent Literature 1 is as follows. The bend-breaking jig 141 and the pressing roller 143 of the bend-breaking device 140 are moved in the front-rear direction (X direction) and the width direction (Y direction) by an X-axis actuator and a Y-axis actuator, the bend-breaking cutter wheel 145 of the bend-breaking jig 141 is positioned in the vicinity of the contour cutting line of the glass plate, and the pressing roller 143 is positioned at the edge portion of the outer side of the contour cutting line of the glass plate. Furthermore, the support device is positioned immediately below the bend-breaking device 140 with the glass plate interposed therebetween. Next, after the bend-breaking jig 141 is lowered toward the upper surface of the glass plate by the first raising/lowering mechanism 147, the bend-breaking cutter wheel 145 abuts on the upper surface of the glass plate, and the rolling direction of the bend-breaking cutter wheel 145 becomes the same as the moving direction of the bend-breaking jig 141, the bend-breaking device 140 moves toward the edge of the edge portion of the glass plate, so that an end cutting line is formed at the edge portion of the glass plate by the bend-breaking cutter wheel 145.

After the end cutting line is formed at the edge portion of the glass plate, the bend-breaking jig 141 of the bend-breaking device 140 moves to a predetermined position of the edge portion of the glass plate, and the first and second support members of the support device are raised in the up-down direction, so that the first and second support surfaces abut on the lower surface of the edge portion of the glass plate across the contour cutting line. Next, the second support member of the support device is lowered in the up-down direction, the pressing roller 143 is lowered toward the upper surface of the glass plate by the second raising/lowering mechanism 144, and the pressing roller 143 abutting on the upper surface of the glass plate presses the edge portion of the glass plate downward, whereby the edge portion of the glass plate is bend-broken from the main body portion of the glass plate. In the bend-breaking processing in the glass plate processing system disclosed in Patent Literature 1, there is a case where, when the pressing roller 143 presses the edge portion of the glass plate downward, the edge portion of the glass plate extending to the vicinity of the contour cutting line and the vicinity of the end cutting line is elastically deformed and the edge portion is curved upward, so that the edge portion of the glass plate cannot be bend-broken at the contour cutting line and the end cutting line, and the edge portion of the glass plate cannot be bend-broken smoothly and reliably.

Further, in the bend-breaking device 140 of the glass plate processing system disclosed in Patent Literature 1, when the θ-axis servomotor 147 rotates, the bend-breaking cutter holder 146 rotates in a direction around the cutter holder center axis (θ direction), and the rolling direction of the bend-breaking cutter wheel 145 changes to a direction in which the virtual end cutting line extends at the edge portion of the glass plate (moving direction of the bend-breaking jig 126). In the bend-breaking processing in the glass plate processing system disclosed in Patent Literature 1, the rotation of the θ-axis servomotor 147 changes the rolling direction of the bend-breaking cutter wheel 145 to the direction in which the virtual end cutting line extends at the edge portion of the glass plate. However, it is necessary to install the θ-axis servomotor 147 and a transmission member (such as a pulley and a belt) that transmits the rotation force of the θ-axis servomotor 147 to the bend-breaking cutter holder 146 in the glass plate processing system, and it is not possible to achieve miniaturization, energy saving, and cost reduction of the system. Furthermore, in the bend-breaking processing, the rolling direction of the bend-breaking cutter wheel 145 needs to be made the same as the direction in which the virtual end cutting line extends at the edge portion of the glass plate by rotating the θ-axis servomotor 147, and the rolling direction of the bend-breaking cutter wheel 145 needs to be changed using the θ-axis servomotor 147 every time the end cutting line is formed, so that it is not possible to shorten the time and improve the efficiency of the bend-breaking processing.

An object of the present invention is to provide a bend-breaking system and a bend-breaking processing method capable of smoothly and reliably bend-breaking an edge portion of a glass plate to be processed in bend-breaking processing. An object of the present invention is to provide a bend-breaking system and a bend-breaking processing method capable of easily changing a rolling direction of a bend-breaking cutter wheel in bend-breaking processing to a direction in which a virtual end cutting line extends at an edge portion of a glass plate (moving direction of a bend-breaking device) without using a θ-axis servomotor or a transmission member (a pulley, a belt, or the like), and achieving miniaturization, energy saving, and cost reduction. Another object of the present invention is to provide a bend-breaking system and a bend-breaking processing method capable of shortening the time and improving the efficiency of bend-breaking processing.

### Solution to Problem

A first premise of the present invention for solving the above problems is a bend-breaking system that bend-breaks an edge portion of a glass plate to be processed.

A feature of the bend-breaking system of the present invention in the first premise is that the bend-breaking system includes a bend-breaking device that is positioned on a side of an upper surface of the glass plate and bend-breaks the edge portion of the glass plate, and a support device that is positioned on a side of a lower surface of the glass plate and supports the glass plate, that the bend-breaking device includes a bend-breaking cutter wheel that forms an end cutting line on an outer side of a contour cutting line formed at the edge portion of the glass plate, a first pressing member that presses a main body portion of the glass plate extending to an inner side of the contour cutting line downward, a second pressing member that presses the edge portion of the glass plate extending to the outer side of the contour cutting line downward, a first raising/lowering mechanism that raises and lowers the bend-breaking cutter wheel in an up-down direction, a second raising/lowering mechanism that raises and lowers the first pressing member in the up-down direction, and a third raising/lowering mechanism that raises and lowers the second pressing member in the up-down direction, that the support device includes a first support member that supports the main body portion of the glass plate, a second support member that supports the edge portion of the glass plate, and a fourth raising/lowering mechanism that raises and lowers the second support member in the up-down direction, and that the bend-breaking system includes a cutter wheel raising means that raises the bend-breaking cutter wheel in the up-down direction by the first raising/lowering mechanism after the bend-breaking cutter wheel lowered in the up-down direction by the first raising/lowering mechanism forms an end cutting line at the edge portion of the glass plate, a glass plate sandwiching means that lowers the first pressing member in the up-down direction by the second raising/lowering mechanism so that the first pressing member and the first and second support members sandwich the main body portion and the edge portion of the glass plate, a second support member lowering means that lowers the second support member in the up-down direction by the fourth raising/lowering mechanism after the first pressing member and the first and second support members sandwich the main body portion and the edge portion by the glass plate sandwiching means, and an edge portion bend-breaking means that lowers the second pressing member in the up-down direction by the third raising/lowering mechanism and presses the edge portion of the glass plate extending to the outer side of the contour cutting line downward while maintaining the sandwiching of the main body portion by the first pressing member and the first support member and bend-breaks the edge portion of the glass plate.

As an example of the bend-breaking system of the present invention, the second pressing member is located in a vicinity of an outer side of the bend-breaking cutter wheel and extends in a direction around the bend-breaking cutter wheel, and the first pressing member is located in a vicinity of an outer side of the second pressing member and extends in a direction around the second pressing member, and, in the glass plate sandwiching means, when the first pressing member is lowered by the second raising/lowering mechanism, the first pressing member abuts on an upper surface of the edge portion of the glass plate extending to the vicinity of the outer side of the contour cutting line across the contour cutting line and an upper surface of the main body portion of the glass plate extending to a vicinity of an inner side of the contour cutting line, and in the edge portion bend-breaking means, when the second pressing member is lowered by the third raising/lowering mechanism, the second pressing member abuts on the upper surface of the edge portion of the glass plate extending to the vicinity of the outer side of the contour cutting line.

As another example of the bend-breaking system of the present invention, the first pressing member has a first pressing surface having a predetermined area that abuts on the upper surface of the glass plate, the second pressing member has a second pressing surface having a predetermined area that abuts on the upper surface of the glass plate, the second pressing surface of the second pressing member is formed in an annular shape surrounding the bend-breaking cutter wheel, and a first pressing surface of the first pressing member is formed in a semi-annular shape surrounding the second pressing member, and, in the glass plate sandwiching means, when the first pressing member is lowered by the second raising/lowering mechanism, the first pressing surface formed in the semi-annular shape abuts on the upper surface of the edge portion of the glass plate extending to the vicinity of the outer side of the contour cutting line across the contour cutting line and the upper surface of the main body portion of the glass plate extending to the vicinity of the inner side of the contour cutting line, and in the edge portion bend-breaking means, when the second pressing member is lowered by the third raising/lowering mechanism, the second pressing surface formed in the annular shape abuts on the upper surface of the edge portion of the glass plate extending to the vicinity of the outer side of the contour cutting line.

As another example of the bend-breaking system of the present invention, the second support member is positioned in a vicinity of an outer side of the first support member and extends in a direction around the first support member, and, in the glass plate sandwiching means, when the second support member is raised by the fourth raising/lowering mechanism, the second support member supports a lower surface of the edge portion of the glass plate extending to a vicinity of the outer side of the contour cutting line and a lower surface of the main body portion of the glass plate extending to a vicinity of an inner side of the contour cutting line.

As another example of the bend-breaking system of the present invention, the second support member has a second support surface having a predetermined area for supporting the lower surface of the glass plate, and the second support surface of the second support member is formed in an annular shape surrounding the first support member, and, in the glass plate sandwiching means, when the second support member is raised by the fourth raising/lowering mechanism, the second support surface formed in the annular shape supports the lower surface of the edge portion of the glass plate extending to the vicinity of the outer side of the contour cutting line across the contour cutting line and the lower surface of the main body portion of the glass plate extending to the vicinity of the inner side of the contour cutting line.

As another example of the bend-breaking system of the present invention, the first support member has a first support surface having a predetermined area for supporting the lower surface of the glass plate, and the first support surface of the first support member is formed in a perfect circle shape, and, in the glass plate sandwiching means, the first support surface formed in the perfect circle shape supports the lower surface of the main body portion of the glass plate extending to the vicinity of the inner side of the contour cutting line, and a vicinity of an outer peripheral edge of the first support surface supports the lower surface of the edge portion of the glass plate extending to the vicinity of the outer side of the contour cutting line.

As another example of the bend-breaking system of the present invention, the bend-breaking system includes: a bend-breaking device moving means in which the bend-breaking device moves in a horizontal direction on a side of an upper surface of a glass plate after the bend-breaking cutter wheel and the first and second pressing members are raised by the first to third raising/lowering mechanisms; and a support device moving means in which the support device moves in the horizontal direction in synchronization with the bend-breaking device on a side of a lower surface of the glass plate, and after the bend-breaking device and the support device move in synchronization by the bend-breaking device moving means and the support device moving means, the bend-breaking device and the support device cooperate with each other to implement the glass plate sandwiching means and the edge portion bend-breaking means.

As another example of the bend-breaking system of the present invention, the bend-breaking system includes an end cutting line forming means in which the bend-breaking cutter wheel forms an end cutting line at the edge portion of the glass plate in a state where the first and second support members support the lower surface of the edge portion extending to the outer side of the contour cutting line of the glass plate while the bend-breaking device and the support device move in synchronization.

As another example of the bend-breaking system of the present invention, the bend-breaking device includes a bend-breaking cutter holder that is located above the bend-breaking cutter wheel and holds the bend-breaking cutter wheel, a cutter wheel axis extending in an up-down direction of the bend-breaking cutter wheel is eccentric radially outward with respect to a cutter holder center axis extending in an up-down direction of the bend-breaking cutter holder, and the bend-breaking cutter wheel is rotatable by 360° in a direction around the cutter wheel axis with respect to the bend-breaking cutter holder, and the bend-breaking system causes the bend-breaking device to travel slightly in a predetermined direction on the upper surface of the edge portion of the glass plate in parallel to the upper surface, rotates the bend-breaking cutter wheel abutting on the upper surface of the edge portion of the glass plate in the direction around the cutter wheel axis, and further includes a rolling direction changing means that makes a rolling direction of the bend-breaking cutter wheel the same as a traveling direction of the bend-breaking device.

As another example of the bend-breaking system of the present invention, in the end cutting line forming means, after the bend-breaking device is caused to slightly travel in a predetermined direction by the rolling direction changing means to make the rolling direction of the bend-breaking cutter wheel the same as the traveling direction of the bend-breaking device, the bend-breaking device travels in a predetermined direction so that the bend-breaking cutter wheel forms an end cutting line at the edge portion of the glass plate along the traveling direction of the bend-breaking device.

A second premise of the present invention for solving the above problems is a bend-breaking processing method for bend-breaking an edge portion of a glass plate to be processed.

A feature of the bend-breaking processing method of the present invention in the second premise is that the bend-breaking processing method uses a bend-breaking device that is positioned on a side of an upper surface of the glass plate and bend-breaks the edge portion of the glass plate, and a support device that is positioned on a side of a lower surface of the glass plate and supports the glass plate, the bend-breaking device includes a bend-breaking cutter wheel that forms an end cutting line on an outer side of a contour cutting line formed at the edge portion of the glass plate, a first pressing member that presses a main body portion of the glass plate extending to an inner side of the contour cutting line downward, a second pressing member that presses the edge portion of the glass plate extending to the outer side of the contour cutting line downward, a first raising/lowering mechanism that raises and lowers the bend-breaking cutter wheel in an **up-**down direction, a second raising/lowering mechanism that raises and lowers the first pressing member in the up-down direction, and a third raising/lowering mechanism that raises and lowers the second pressing member in the up-down direction, the support device includes a first support member that supports the main body portion of the glass plate, a second support member that supports the edge portion of the glass plate, and a fourth raising/lowering mechanism that raises and lowers the second support member in the up-down direction, and that the bend-breaking processing method includes a cutter wheel raising step of raising the bend-breaking cutter wheel in the up-down direction by the first raising/lowering mechanism after the bend-breaking cutter wheel lowered in the up-down direction by the first raising/lowering mechanism forms an end cutting line at the edge portion of the glass plate, a glass plate sandwiching step of lowering the first pressing member in the up-down direction by the second raising/lowering mechanism so that the first pressing member and the first and second support members sandwich the main body portion and the edge portion of the glass plate, a second support member lowering step of lowering the second support member in the up-down direction by the fourth raising/lowering mechanism after the first pressing member and the first and second support members sandwich the main body portion and the edge portion by the glass plate sandwiching step, and an edge portion bend-breaking step of lowering the second pressing member in the up-down direction by the third raising/lowering mechanism and presses the edge portion of the glass plate extending to the outer side of the contour cutting line downward while maintaining the sandwiching of the main body portion by the first pressing member and the first support member and bend-breaks the edge portion of the glass plate.

As an example of the bend-breaking processing method of the present invention, the second pressing member is located in a vicinity of an outer side of the bend-breaking cutter wheel and extends in a direction around the bend-breaking cutter wheel, and the first pressing member is located in a vicinity of an outer side of the second pressing member and extends in a direction around the second pressing member, and, in the glass plate sandwiching means, when the first pressing member is lowered by the second raising/lowering mechanism, the first pressing member abuts on an upper surface of the edge portion of the glass plate extending to the vicinity of the outer side of the contour cutting line across the contour cutting line and an upper surface of the main body portion of the glass plate extending to a vicinity of an inner side of the contour cutting line, and in the edge portion bend-breaking step, when the second pressing member is lowered by the third raising/lowering mechanism, the second pressing member abuts on the upper surface of the edge portion of the glass plate extending to the vicinity of the outer side of the contour cutting line.

As an example of the bend-breaking processing method of the present invention, the first pressing member has a first pressing surface having a predetermined area that abuts on the upper surface of the glass plate, the second pressing member has a second pressing surface having a predetermined area that abuts on the upper surface of the glass plate, the second pressing surface of the second pressing member is formed in an annular shape surrounding the bend-breaking cutter wheel, and a first pressing surface of the first pressing member is formed in a semi-annular shape surrounding the second pressing member, and, in the glass plate sandwiching step, when the first pressing member is lowered by the second raising/lowering mechanism, the first pressing surface formed in the semi-annular shape abuts on the upper surface of the edge portion of the glass plate extending to the vicinity of the outer side of the contour cutting line across the contour cutting line and the upper surface of the main body portion of the glass plate extending to the vicinity of the inner side of the contour cutting line, and in the edge portion bend-breaking step, when the second pressing member is lowered by the third raising/lowering mechanism, the second pressing surface formed in the annular shape abuts on the upper surface of the edge portion of the glass plate extending to the vicinity of the outer side of the contour cutting line.

As another example of the bend-breaking processing method of the present invention, the second support member is positioned in a vicinity of an outer side of the first support member and extends in a direction around the first support member, and, in the glass plate sandwiching step, when the second support member is raised by the fourth raising/lowering mechanism, the second support member supports a lower surface of the edge portion of the glass plate extending to a vicinity of the outer side of the contour cutting line and a lower surface of the main body portion of the glass plate extending to a vicinity of an inner side of the contour cutting line.

As another example of the bend-breaking processing method of the present invention, the second support member has a second support surface having a predetermined area for supporting the lower surface of the glass plate, and the second support surface of the second support member is formed in an annular shape surrounding the first support member, and, in the glass plate sandwiching step, when the second support member is raised by the fourth raising/lowering mechanism, the second support surface formed in the annular shape supports the lower surface of the edge portion of the glass plate extending to the vicinity of the outer side of the contour cutting line across the contour cutting line and the lower surface of the main body portion of the glass plate extending to the vicinity of the inner side of the contour cutting line.

As another example of the bend-breaking processing method of the present invention, the first support member has a first support surface having a predetermined area for supporting the lower surface of the glass plate, and the first support surface of the first support member is formed in a perfect circle shape, and, in the glass plate sandwiching step, the first support surface formed in the perfect circle shape supports the lower surface of the main body portion of the glass plate extending to the vicinity of the inner side of the contour cutting line, and a vicinity of an outer peripheral edge of the first support surface supports the lower surface of the edge portion of the glass plate extending to the vicinity of the outer side of the contour cutting line.

As another example of the bend-breaking processing method of the present invention, the bend-breaking processing method includes a bend-breaking device moving step of moving the bend-breaking device in a horizontal direction on the side of the upper surface of the glass plate after the bend-breaking cutter wheel and the first and second pressing members are raised by the first to third raising/lowering mechanisms, and a support device moving step of moving the support device in the horizontal direction in synchronization with the bend-breaking device on the side of the lower surface of the glass plate, and, after the bend-breaking device and the support device are moved in synchronization by the bend-breaking device moving step and the support device moving step, the bend-breaking device and the support device cooperate with each other to perform the glass plate sandwiching step and the edge portion bend-breaking step.

As another example of the bend-breaking processing method of the present invention, the bend-breaking processing method includes an end cutting line forming step in which the bend-breaking cutter wheel forms an end cutting line at the edge portion of the glass plate in a state where the first and second support members support the lower surface of the edge portion extending to the outer side of the contour cutting line of the glass plate while the bend-breaking device and the support device move in synchronization.

As another example of the bend-breaking processing method of the present invention, the bend-breaking device includes a bend-breaking cutter holder that is located above the bend-breaking cutter wheel and holds the bend-breaking cutter wheel, a cutter wheel axis extending in an up-down direction of the bend-breaking cutter wheel is eccentric radially outward with respect to a cutter holder center axis extending in an up-down direction of the bend-breaking cutter holder, and the bend-breaking cutter wheel is rotatable by 360° in a direction around the cutter wheel axis with respect to the bend-breaking cutter holder, and the bend-breaking processing method causes the bend-breaking device to travel slightly in a predetermined direction on the upper surface of the edge portion of the glass plate in parallel to the upper surface, rotates the bend-breaking cutter wheel abutting on the upper surface of the edge portion of the glass plate in the direction around the cutter wheel axis, and further includes a rolling direction changing step of making a rolling direction of the bend-breaking cutter wheel the same as a traveling direction of the bend-breaking device.

As another example of the bend-breaking processing method of the present invention, in the end cutting line forming step, after the bend-breaking device is caused to slightly travel in a predetermined direction by the rolling direction changing step to make the rolling direction of the bend-breaking cutter wheel the same as the traveling direction of the bend-breaking device, the bend-breaking device travels in a predetermined direction so that the bend-breaking cutter wheel forms an end cutting line at the edge portion of the glass plate along the traveling direction of the bend-breaking device.

### Advantageous Effects of Invention

According to the bend-breaking system and the bend-breaking processing method according to the present invention, after the bend-breaking cutter wheel lowered in the up-down direction by the first raising/lowering mechanism forms an end cutting line at the edge portion of the glass plate and forms an end cutting line at the edge portion of the glass plate, the bend-breaking cutter wheel is raised in the up-down direction by the first raising/lowering mechanism, the first pressing member is lowered in the up-down direction by the second raising/lowering mechanism so that the first pressing member and the first and second support members sandwich the main body portion and the edge portion of the glass plate, after the first pressing member and the first and second support members sandwich the main body portion and the edge portion, the second support member is lowered in the up-down direction by the fourth raising/lowering mechanism, and the second pressing member is lowered in the up-down direction by the third raising/lowering mechanism and the edge portion of the glass plate extending to the outer side of the contour cutting line is pressed downward while maintaining the sandwiching of the main body portion by the first pressing member and the first support member and the edge portion of the glass plate is bend-broken. Therefore, the main body portion of the glass plate is sandwiched by the first pressing member and the first support member, and the main body portion of the glass plate is fixed by the first pressing member and the first support member. Thus, even if the second pressing member presses the edge portion of the glass plate extending to the outer side of the contour cutting line downward, and the pressing force of the second pressing member acts on the edge portion, elastic deformation of the main body portion and the edge portion of the glass plate extending to the vicinity of the contour cutting line can be prevented, and the edge portion of the glass plate is bend-broken at the contour cutting line and the end cutting line by the pressing force of the second pressing member without curving the main body portion and the edge portion upward, so that the edge portion of the glass plate can be bend-broken smoothly and reliably.

In the bend-breaking system and the bend-breaking processing method, the second pressing member is located in the vicinity of the outer side of the bend-breaking cutter wheel and extends in the direction around the bend-breaking cutter wheel, and the first pressing member is located in the vicinity of the outer side of the second pressing member and extends in the direction around the second pressing member. When the first pressing member is lowered by the second raising/lowering mechanism, the first pressing member abuts on the upper surface of the edge portion of the glass plate extending to the vicinity of the outer side of the contour cutting line across the contour cutting line and the upper surface of the main body portion of the glass plate extending to the vicinity of the inner side of the contour cutting line, and when the second pressing member is lowered by the third raising/lowering mechanism, the second pressing member abuts on the upper surface of the edge portion of the glass plate extending to the vicinity of the outer side of the contour cutting line. When the second pressing member abuts on the upper surface of the edge portion of the glass plate extending to the vicinity of the outer side and presses the edge portion downward, the main body portion of the glass plate is sandwiched between the first pressing member and the first support member which abut on the upper surface of the edge portion of the glass plate extending to the vicinity of the outer side of the contour cutting line across the contour cutting line and the upper surface of the main body portion of the glass plate extending to the vicinity of the inner side of the contour cutting line, and the main body portion of the glass plate is fixed by the first pressing member and the first support member. Therefore, elastic deformation of the main body portion and the edge portion of the glass plate extending to the vicinity of the contour cutting line can be prevented, and the edge portion of the glass plate can be bend-broken at the contour cutting line and the end cutting line by the pressing force of the second pressing member without curving the main body portion and the edge portion upward, so that the edge portion of the glass plate can be bend-broken smoothly and reliably.

In the bend-breaking system and the bend-breaking processing method, the first pressing member has the first pressing surface having a predetermined area that abuts on the upper surface of the glass plate, the second pressing member has the second pressing surface having a predetermined area that abuts on the upper surface of the glass plate, the second pressing surface of the second pressing member is formed in the annular shape surrounding the bend-breaking cutter wheel, and the first pressing surface of the first pressing member is formed in the semi-annular shape surrounding the second pressing member. When the first pressing member is lowered by the second raising/lowering mechanism, the first pressing surface formed in the semi-annular shape abuts on the upper surface of the edge portion of the glass plate extending to the vicinity of the outer side of the contour cutting line across the contour cutting line and the upper surface of the main body portion of the glass plate extending to the vicinity of the inner side of the contour cutting line, and when the second pressing member is lowered by the third raising/lowering mechanism, the second pressing surface formed in the annular shape abuts on the upper surface of the edge portion of the glass plate extending to the vicinity of the outer side of the contour cutting line. When the annular second pressing surface of the second pressing member abuts on the upper surface of the edge portion of the glass plate extending to the vicinity of the outer side of the contour cutting line and presses the edge portion downward, the main body portion of the glass plate is sandwiched between the semi-annular first pressing surface of the first pressing member and the first support member which abut on the upper surface of the edge portion of the glass plate extending to the vicinity of the outer side of the contour cutting line across the contour cutting line and the upper surface of the main body portion of the glass plate extending to the vicinity of the inner side of the contour cutting line, and the main body portion of the glass plate is fixed by the first pressing surface of the first pressing member and the first support member. Therefore, elastic deformation of the main body portion and the edge portion of the glass plate extending to the vicinity of the contour cutting line can be prevented, and the edge portion of the glass plate can be bend-broken at the contour cutting line and the end cutting line by the pressing force of the second pressing member without curving the main body portion and the edge portion upward, so that the edge portion of the glass plate can be bend-broken smoothly and reliably. In the bend-breaking system and the bend-breaking processing method (glass plate processing system), since the first pressing surface of the first pressing member is formed in the semi-annular shape surrounding the second pressing member, when the second pressing member is positioned at the edge portion of the glass plate extending to the vicinity of the outer side of the contour cutting line, a part of the first pressing surface of the first pressing member is always positioned at the upper surface of the main body portion of the glass plate extending to the vicinity of the inner side of the contour cutting line, the main body portion of the glass plate can be reliably sandwiched by the semi-annular first pressing surface of the first pressing member and the first support member, and the main body of the glass plate can be firmly fixed by the first pressing surface of the first pressing member and the first support member.

In the bend-breaking system and the bend-breaking processing method, the second support member is positioned near an outer side of the first support member and extends in a direction around the first support member, and when the second support member is raised by the fourth raising/lowering mechanism, the second support member supports a lower surface of the edge portion of the glass plate extending near the outer side of the contour cutting line and a lower surface of the main body portion of the glass plate extending near an inner side of the contour cutting line. The second support member extending in the direction around the first support member supports the lower surface of the edge portion of the glass plate extending to the vicinity of the outer side of the contour cutting line across the contour cutting line and the lower surface of the main body portion of the glass plate extending to the vicinity of the inner side of the contour cutting line, so that when the first pressing member presses the main body portion and the edge portion of the glass plate downward, it is possible to prevent downward curving of the edge portion of the glass plate extending to the vicinity of the outer side of the contour cutting line supported by the second support member and the main body portion of the glass plate extending to the vicinity of the inner side of the contour cutting line, and to prevent inadvertent cracking or breakage of the main body portion and the edge portion when the first pressing member and the first and second support members sandwich the main body portion and the edge portion of the glass plate.

In the bend-breaking system and the bend-breaking processing method, the second support member has the second support surface having a predetermined area for supporting the lower surface of the glass plate, and the second support surface of the second support member is formed in the annular shape surrounding the first support member, and when the second support member is raised by the fourth raising/lowering mechanism, the second support surface formed in the annular shape supports the lower surface of the edge portion of the glass plate extending to the vicinity of the outer side of the contour cutting line across the contour cutting line and the lower surface of the main body portion of the glass plate extending to the vicinity of the inner side of the contour cutting line. The second support surface formed in the annular shape of the second support member supports the lower surface of the edge portion of the glass plate extending to the vicinity of the outer side of the contour cutting line across the contour cutting line and the lower surface of the main body portion of the glass plate extending to the vicinity of the inner side of the contour cutting line, so that when the first pressing member presses the main body portion and the edge portion of the glass plate downward, it is possible to prevent downward curving of the edge portion of the glass plate extending to the vicinity of the outer side of the contour cutting line supported by the second support surface of the second support member and the main body portion of the glass plate extending to the vicinity of the inner side of the contour cutting line, and to prevent inadvertent cracking or breakage of the main body portion and the edge portion when the first pressing member and the first and second support members sandwich the main body portion and the edge portion of the glass plate.

In the bend-breaking system and the bend-breaking processing method, the first support member has the first support surface having a predetermined area for supporting the lower surface of the glass plate, and the first support surface of the first support member is formed in the perfect circle, and the first support surface formed in the perfect circle shape supports the lower surface of the main body portion of the glass plate extending to the vicinity of the inner side of the contour cutting line, and the vicinity of the outer peripheral edge of the first support surface supports the lower surface of the edge portion of the glass plate extending to the vicinity of the outer side of the contour cutting line. The first support surface having a predetermined area formed in the perfect circle shape supports the lower surface of the main body portion of the glass plate extending to the vicinity of the inner side of the outline cut-out line, and the vicinity of the outer peripheral edge of the first support surface supports the lower surface of the edge portion of the glass plate extending to the vicinity of the outer side of the outline cut-out line, so that the main body portion of the glass plate extending to the vicinity of the contour cutting line can be reliably sandwiched between the first pressing member and the first support surface of the first support member, and the main body portion extending to the vicinity of the contour cutting line is fixed by the first pressing member and the first support surface of the first support member. Therefore, elastic deformation of the main body portion of the glass plate extending to the vicinity of the contour cutting line can be prevented, and the edge portion of the glass plate can be bend-broken at the contour cutting line and the end cutting line by the pressing force of the second pressing member without curving the main body portion and the edge portion upward, so that the edge portion of the glass plate can be bend-broken smoothly and reliably.

In the bend-breaking system and the bend-breaking processing method, after the bend-breaking cutter wheel and the first and second pressing members are raised by the first to third raising/lowering mechanisms, the bend-breaking device is moved in a horizontal direction on the side of the upper surface of the glass plate, and the support device is moved in the horizontal direction in synchronization with the bend-breaking device on the side of the lower surface of the glass plate, and after the bend-breaking device and the support device are moved in synchronization, the bend-breaking device and the support device cooperate with each other to perform the glass plate sandwiching means (glass plate sandwiching step) and the edge portion bend-breaking means (edge portion bend-breaking step). After the bend-breaking device and the support device move in synchronization in the horizontal direction to form a plurality of end cutting lines at the edge portion of the glass plate, the second pressing member is lowered in the up-down direction by the third raising/lowering mechanism to press the edge portion extending to the outer side of the contour cutting line formed at the edge portion of the glass plate downward while maintaining the sandwiching of the main body portion by the first pressing member and the first support member, and the edge portion is bend-broken, so that all of the edge portions extending around the glass plate can be bend-broken smoothly and reliably.

In the bend-breaking system and the bend-breaking processing method, the bend-breaking cutter wheel forms an end cutting line at the edge portion of the glass plate in a state where the first and second support members support the lower surface of the edge portion extending to the outer side of the contour cutting line of the glass plate while the bend-breaking device and the support device move in synchronization. The first and second support members support the lower surface of the edge portion of the glass plate, so that elastic deformation of the edge portion can be prevented, and the end cutting line can be reliably formed at the edge portion of the glass plate in a state where the edge portion of the glass plate is held horizontally.

In the bend-breaking system and the bend-breaking processing method, the bend-breaking device includes the bend-breaking cutter holder that is located above the bend-breaking cutter wheel and holds the bend-breaking cutter wheel, the cutter wheel axis extending in the up-down direction of the bend-breaking cutter wheel is eccentric radially outward with respect to the cutter holder center axis extending in the up-down direction of the bend-breaking cutter holder, and the bend-breaking cutter wheel is rotatable by 360° in the direction around the cutter wheel axis with respect to the bend-breaking cutter holder. Since the cutter wheel axis of the bend-breaking cutter wheel is eccentric radially outward with respect to the cutter holder center axis of the bend-breaking cutter holder, the bend-breaking cutter wheel is rotated in the direction around the cutter wheel axis (around the axis) only by slightly traveling (moving) the bend-breaking jig in a predetermined direction, and the rolling direction of the bend-breaking cutter wheel can be quickly and easily changed. In the bend-breaking system and the bend-breaking processing method, the bend-breaking device travels slightly in a predetermined direction on the upper surface of the edge portion of the glass plate in parallel to the upper surface, the bend-breaking cutter wheel abutting on the upper surface of the edge portion of the glass plate rotates in the direction around the cutter wheel axis, and the rolling direction of the bend-breaking cutter wheel becomes the same as the traveling (moving) direction of the bend-breaking device. Therefore, the rolling direction of the bend-breaking cutter wheel can be easily matched with the traveling direction of the bend-breaking device (direction in which the virtual end cutting line of the edge portion of the glass plate extends), and the rolling direction of the bend-breaking cutter wheel and the traveling direction of the bend-breaking device can be made the same in an initial action of the series of movements of the end cutting line formation in the edge portion of the glass plate. In the bend-breaking system and the bend-breaking processing method, it is not necessary to install a θ-axis servomotor or a transmission member (a pulley, a belt, or the like) that transmits a rotation force of the θ-axis servomotor to the bend-breaking cutter holder, and miniaturization, energy saving, and cost reduction of the bend-breaking device can be achieved. Furthermore, in the bend-breaking processing, the rolling direction of the bend-breaking cutter wheel does not need to be made the same as the direction in which the virtual end cutting line extends at the edge portion of the glass plate (traveling direction of the bend-breaking device) by rotating the θ-axis servomotor, and the rolling direction of the bend-breaking cutter wheel does not need to be changed using the θ-axis servomotor every time the end cutting line is formed, so that it is possible to shorten the time and improve the efficiency of the bend-breaking processing.

In the bend-breaking system and the bend-breaking processing method, after the bend-breaking device is caused to slightly travel in a predetermined direction to make the rolling direction of the bend-breaking cutter wheel the same as the traveling direction of the bend-breaking device, the bend-breaking device travels in a predetermined direction so that the bend-breaking cutter wheel forms an end cutting line at the edge portion of the glass plate along the traveling direction of the bend-breaking device. After the bend-breaking cutter holder is brought into abutment against the upper surface of the edge of the glass plate by the first raising/lowering mechanism, the bend-breaking device is caused to slightly travel in the predetermined direction so that the rolling direction of the bend-breaking cutter wheel can be made the same as the traveling direction of the bend-breaking device, and the rolling direction of the bend-breaking cutter wheel can be reliably matched with the traveling direction of the bend-breaking device (direction in which the virtual end cutting line of the edge of the glass plate extends). In the bend-breaking system and the bend-breaking processing method, after the rolling direction of the bend-breaking cutter wheel is reliably matched with the traveling direction of the bend-breaking device (direction in which the virtual end cutting line of the edge portion of the glass plate extends), the end cutting line is formed at the edge portion of the glass plate along the traveling direction of the bend-breaking device, so that the end cutting line can be reliably formed at the edge portion of the glass plate using the bend-breaking cutter wheel.

### Brief Description of Drawings

Fig. 1 is a side view of a glass plate processing system adopting a bend-breaking system.
Fig. 2 is a top view of a glass plate processing system using a bend-breaking device.
Fig. 3 is a top view showing an example of a glass plate to be processed by the glass plate processing system.
Fig. 4 is a side view of a loading area.
Fig. 5 is a top view of the loading area.
Fig. 6 is a front view of the loading area.
Fig. 7 is a top view of a cutting processing table and a grinding processing table.
Fig. 8 is a side view of the cutting processing table and the grinding processing table.
Fig. 9 is a diagram for explaining movement of the cutting processing table and the grinding processing table.
Fig. 10 is a side view of the cutting device as an example installed in the cutting processing area.
Fig. 11 is a front view of the cutting device.
Fig. 12 is a top view of the cutting device.
Fig. 13 is a top view of a bend-breaking processing table.
Fig. 14 is a side view of the bend-breaking processing table.
Fig. 15 is a side view of the bend-breaking device.
Fig. 16 is a front view of the bend-breaking device.
Fig. 17 is a top view of the bend-breaking device.
Fig. 18 is an enlarged front view of the bend-breaking device.
Fig. 19 is an enlarged front view of the bend-breaking device.
Fig. 20 is a partially broken side view of first and second bend-breaking jigs.
Fig. 21 is a front view of the first and second bend-breaking jigs.
Fig. 22 is a top view of the bend-breaking processing table in which a support device is exposed.
Fig. 23 is a front view of the bend-breaking processing table, with the support device viewed from the front.
Fig. 24 is a front view of a grinding device as an example installed in a grinding processing area.
Fig. 25 is a side view of the grinding device.
Fig. 26 is a top view of the grinding device.
Fig. 27 is a view showing an example of an end cutting line forming procedure in bend-breaking processing.
Fig. 28 is a view showing an example of a change in a rolling direction of a bend-breaking cutter wheel.
Fig. 29 is a view showing another example of the change in the rolling direction of the bend-breaking cutter wheel.
Fig. 30 is a view showing another example of the change in the rolling direction of the bend-breaking cutter wheel.
Fig. 31 is a view showing an example of a bend-breaking procedure in the bend-breaking processing.

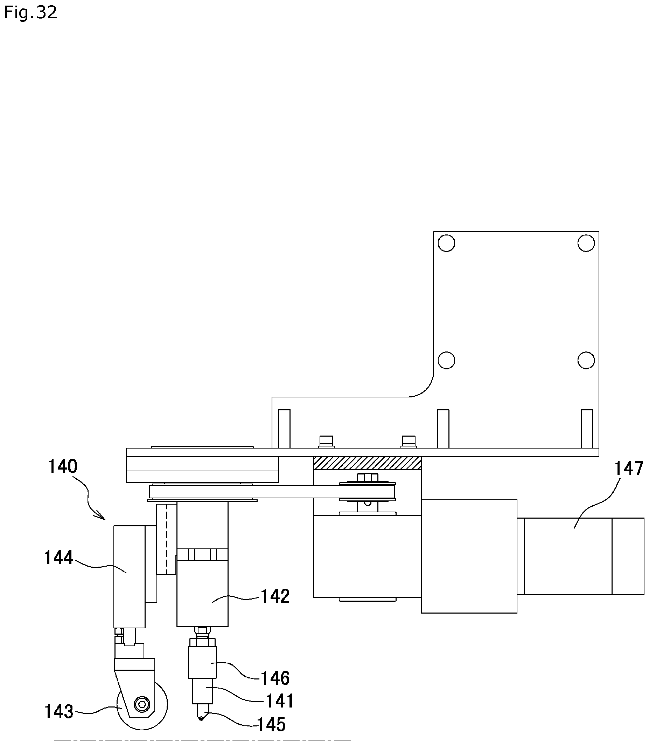

Fig. 32 is a side view of a conventional bend-breaking device.

### Description of Embodiments

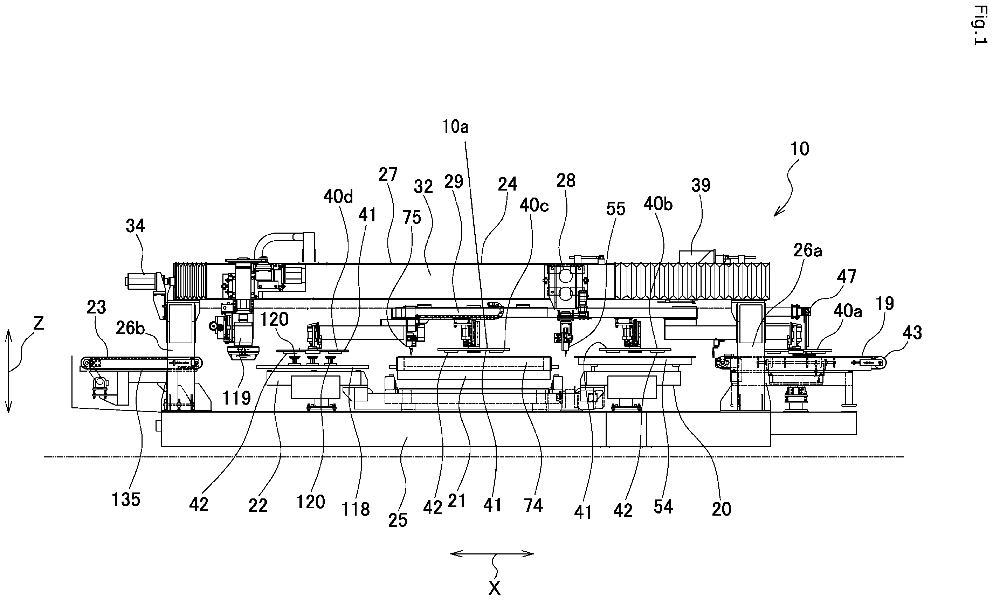

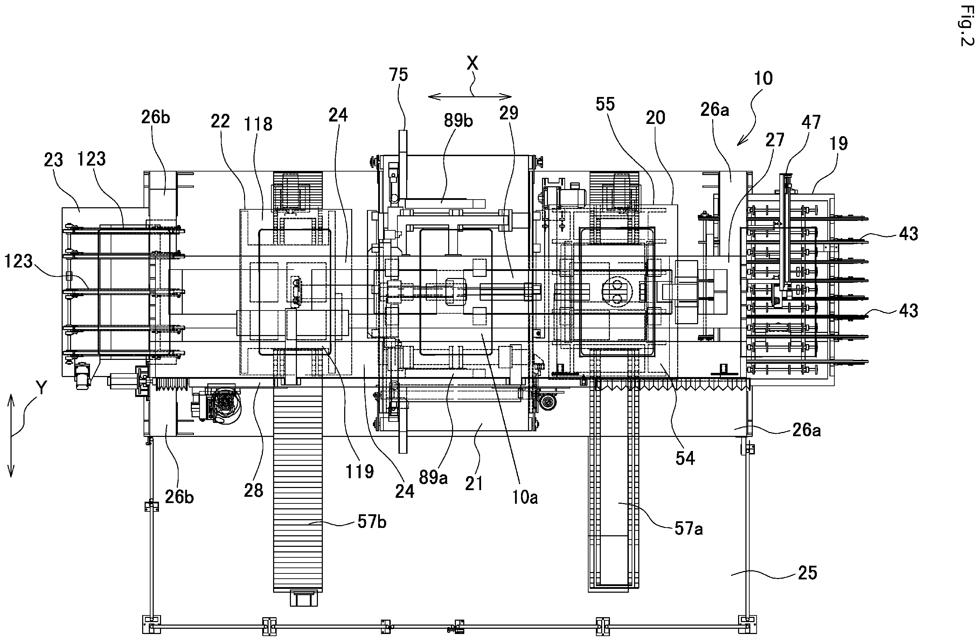

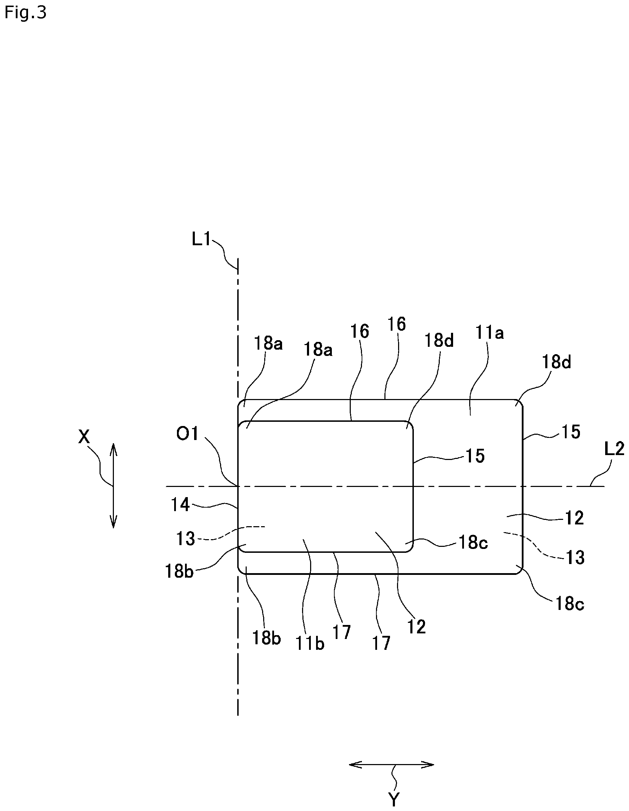

A bend-breaking system and a bend-breaking processing method according to the present invention will be described in detail below with reference to the accompanying drawings such as Fig. 1 which is a side view of a glass plate processing system 10 adopting a bend-breaking system 10a. Fig. 2 is a top view of the glass plate processing system 10 using the bend-breaking system 10a, and Fig. 3 is a top view showing an example of glass plates 11a and 11b to be processed by the glass plate processing system 10. In Fig. 3, the glass plates 11a and 11b are shown in a state of being positioned in a loading area 19. In Figs. 1 and 2, the front-rear direction (X-axis direction) is indicated by an arrow X, the width direction (Y-axis direction) is indicated by an arrow Y, and the up-down direction (Z-axis direction) is indicated by an arrow Z.

As shown in Fig. 3, the glass plates 11a and 11b (glass plates 11a and 11b before processing) to be processed in the glass plate processing system 10 have an upper surface 12 having a predetermined area and a lower surface 13 having a predetermined area, have a predetermined thickness, and are formed into a rectangle (quadrangle) whose planar shape is long in the width direction. The glass plates 11a and 11b to be processed each have a first side edge 14 (one side edge) and a second side edge 15 (other side edge) that face and are separated from each other with a distance in the width direction and extend in the front-rear direction, a front end edge 16 and a rear end edge 17 that face and are separated from each other with a distance in the front-rear direction and extend in the width direction, and first to fourth corner portions 18a to 18d. Note that the planar shape of the glass plate to be processed may be formed into a polygon other than a rectangle (quadrangle), and may be formed so that each edge of the glass plate draws a curve which is curved, and the shape of the glass plate includes any shape.

The glass plate processing system 10 performs cutting processing, bend-breaking processing, and grinding processing on the glass plates 11a and 11b (plate-shaped glass) to be processed having different sizes in which the areas of the upper and lower surfaces 12 and 13 are different, from a large-sized (large-area) glass plate 11a having large areas of the upper surface 12 and the lower surface 13 to a small-sized (small-area) glass plate 11b having small areas of the upper surface 12 and the lower surface 13. The glass plate processing system 10 is controlled by a controller (control device) (not shown).

The controller is a computer that includes a central processing unit (CPU or MPU) and a memory (a main memory and a cache memory) and is operated by an independent operating system (virtual OS), and has a large-capacity hard disk (mass storage area) built therein. An input device (not shown) such as a keyboard or a numeric keypad unit, and an output device (not shown) such as a monitor, a display, or a touch panel are connected to the controller.

In the large-capacity hard disk (large-capacity storage area) of the controller, a plurality of pieces of coordinate data (side edge coordinates and coordinates of front and rear end edges of each of the glass plates 11a and 11b, coordinates of first to fourth corner portions 18a to 18d, coordinates of centers of the glass plates 11a and 11b, and the like) of the glass plates 11a and 11b, which are different depending on the name and the product number of each of the glass plates 11a and 11b to be processed, and the size (area) and the shape of each of the glass plates 11a and 11b to be processed, and image data (planar image (6-plane image) and stereoscopic image (3D image)) of the glass plates 11a and 11b to be processed are stored in association with glass plate specifying information (glass plate specifying identifier) for specifying the glass plates 11a and 11b. As the glass plate specifying information, production numbers, serial numbers, and the like of the glass plates 11a and 11b are used, and the controller generates a unique identifier for specifying the glass plates 11a and 11b, and the generated identifier can be used as the glass plate specifying information.

In cutting (cutting) processing in a cutting (cutting) processing area 20, bend-breaking processing in a bend-breaking processing area 21, and grinding processing in a grinding processing area 22, which will be described later, the controller performs NC control on a cutting device 55, a bend-breaking device 75, and a grinding device 119, which will be described later, using the coordinate data of the glass plates 11a and 11b stored in the large-capacity hard disk. In the NC control, the controller quantifies a position at which processing is started (XY plane coordinates) and a change position of a processing direction by coordinates, and quantifies an operation direction, a distance, and a speed in two axes of an X-axis (front-rear direction) and a Y-axis (width direction). Signals obtained by quantifying the command coordinates and the axes are transmitted (input) to the cutting device 55, the bend-breaking device 75, and the grinding device 119. In the NC control, a shape to be processed is accurately represented by repeating "coordinate → axis → command".

The glass plate processing system 10 includes: a loading area 19 (processing start area) into which the glass plates 11a and 11b to be processed (before processing) are loaded; an unloading area 23 (processing end area) from which the processed glass plates 11a and 11b are unloaded; processing areas 20 to 22 which are disposed (installed) between the loading area 19 and the unloading area 23 and process the glass plates 11a and 11b; and a conveyance mechanism 24 which sequentially conveys the glass plates 11a and 11b from the rear side (upstream) toward the front side (downstream) in the front-rear direction to the loading area 19, the processing area 20 to 22, and the unloading area 23, and moves the cutting device 55 and the grinding device 119 in the front-rear direction. The processing areas 20 to 22 are arranged in the front-rear direction while facing and being separated from each other with a distance in the front-rear direction between the loading area 19 and the unloading area 23.

The processing areas 20 to 22 include a cutting processing area 20 located forward (downstream) in the front-rear direction of the loading area 19 and separated forward from the loading area 19 by a predetermined dimension, the bend-breaking processing area 21 located forward (downstream) in the front-rear direction of the cutting processing area 20 and separated forward from the cutting processing area 20 by a predetermined dimension, and the grinding processing area 22 located forward (downstream) in the front-rear direction of the bend-breaking processing area 21 and separated forward from the bend-breaking processing area 21 by a predetermined dimension. The cutting processing area 20, the bend-breaking processing area 21, and the grinding processing area 22 are formed on a system stand 25 (machine base) formed in a rectangular shape elongated in the front-rear direction.

The conveyance mechanism 24 includes a pair of first pillars 26a located in the rear portion of the system stand 25 and extending in the up-down direction, a pair of second pillars 26b located in the front portion of the system stand 25 and extending in the up-down direction, a fixed frame 27 located between the first and second pillars 26a and 26b and extending in the front-rear direction, a first moving unit 28 (first moving means) installed on one side portion of the fixed frame 27, and a second moving unit 29 (second moving means) installed on a lower portion of the fixed frame 27.

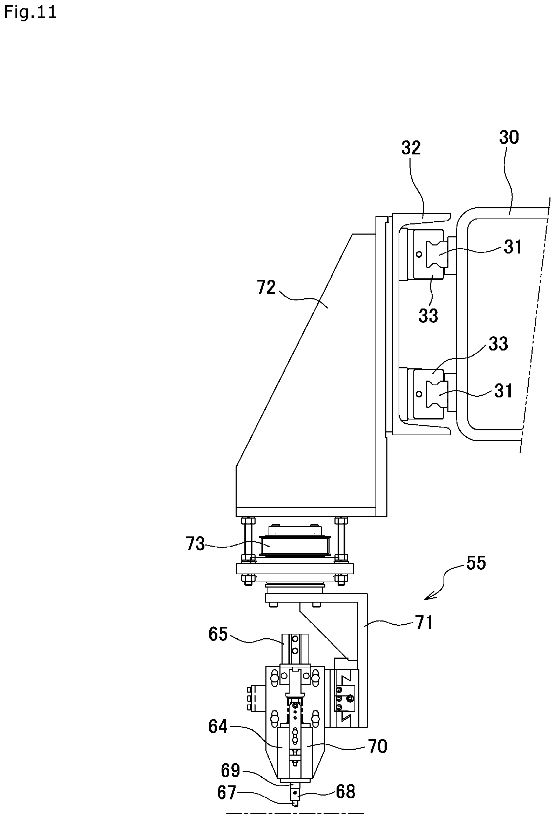

The first moving unit 28 moves the cutting device 55 and the grinding device 119 forward and rearward (linearly) in the front-rear direction (X-axis direction). The first moving unit 28 includes a first guide frame 30, a pair of first guide rails 31, a first feed screw (ball screw) (not shown), a first traveling frame 32, first slide blocks (housing nut) (not shown), a pair of first guide shoes 33, and a first servomotor 34 (see Fig. 11).

The first guide frame 30 is installed on the fixed frame 27 and extends in the front-rear direction. The first guide rails 31 face and are separated from each other with a distance in the up-down direction, are fixed to one side portion of the first guide frame 30 by a predetermined fixing means, and extend in the front-rear direction. The first feed screw (ball screw) is located between the first guide rails 31, is rotatably supported by a plurality of bearings (not shown) fixed to one side portion of the first guide frame 30, and extends in the front-rear direction.

The first traveling frame 32 is located on one side portion of the first guide frame 30 and extends in the front-rear direction. The first slide blocks (housing nuts) are arranged and separated from each other at a predetermined interval in the front-rear direction, and are fixed to a facing surface of the first traveling frame 32 which faces the first guide frame 30 by a predetermined fixing means. The first guide shoes 33 face and are separated from each other with a distance in the up-down direction, are fixed to a facing surface of the first traveling frame 32 which faces the first guide frame 30 by a predetermined fixing means, and extend in the front-rear direction.

The first servomotor 34 is located at the front end portion of the first guide frame 30 and is coupled to the second pillars 26b via brackets. The shaft of the first servomotor 34 is coupled and fixed to the other end portion of the first feed screw. The first feed screw is rotated by the rotation of the first servomotor 34, and the cutting device 55 and the grinding device 119 are moved forward and rearward (linearly) in the front-rear direction (X-axis direction) by the rotation of the first feed screw.

When the shaft of the first servomotor 34 rotates in the counterclockwise direction, the first feed screw rotates in the counterclockwise direction, the first slide blocks move in the front-rear direction from the front side toward the rear side of the first guide frame 30 by the rotation of the first feed screw in the counterclockwise direction, and the first traveling frame 32 moves in the front-rear direction from the front side toward the rear side of the first guide frame 30 by the movement of the first slide blocks. Conversely, when the shaft of the first servomotor 34 rotates in the clockwise direction, the first feed screw rotates in the clockwise direction, the first slide blocks move in the front-rear direction from the rear side toward the front side of the first guide frame 30 by the rotation of the first feed screw in the clockwise direction, and the first traveling frame 32 moves in the front-rear direction from the rear side toward the front side of the first guide frame 30 by the movement of the first slide blocks.

The second moving unit 29 moves glass plate first to fourth holders 40a to 40d described later forward and rearward (linearly) in the front-rear direction (X-axis direction). The second moving unit 29 includes a second guide frame 35, a pair of second guide rails 36, a second feed screw (ball screw) (not shown), a second traveling frame 37, second slide blocks (housing nuts) (not shown), a pair of second guide shoes 38, a second servomotor 39, and glass plate first to fourth holders 40a to 40d (glass plate first to fourth lifters).

The second guide frame 35 is installed on the fixed frame 27 and extends in the front-rear direction. The second guide rails 36 face and are separated from each other with a distance in the width direction, are fixed to a lower portion of the second guide frame 36 by a predetermined fixing means, and extend in the front-rear direction. The second feed screw (ball screw) is located between the second guide rails 35, is rotatably supported by a plurality of bearings (not shown) fixed to a lower portion of the second guide frame 35, and extends in the front-rear direction.

The second traveling frame 37 is located below the second guide frame 35 and extends in the front-rear direction. The second slide blocks (housing nuts) are arranged and separated from each other at a predetermined interval in the width direction, and are fixed to the facing surface of the second traveling frame 37 which faces the second guide frame 35 by a predetermined fixing means. The second guide shoes 38 face and are separated from each other with a distance in the width direction, are fixed to the facing surface of the second traveling frame 37 which faces the second guide frame 35 by a predetermined fixing means, and extend in the front-rear direction.

The second servomotor 39 is located at the rear end portion of the second guide frame 35 and is fixed to the fixed frame 27. The shaft of the second servomotor 39 is coupled and fixed to one end portion of the second feed screw via a timing belt (and/or a gear). The second feed screw is rotated by the rotation of the second servomotor 39, and the glass plate first to fourth holders 40a to 40d are moved forward and rearward (linearly) in the front-rear direction (X-axis direction) by the rotation of the second feed screw.

When the shaft of the second servomotor 39 rotates in the clockwise direction, the second feed screw rotates in the clockwise direction, the second slide blocks move in the front-rear direction from the rear side toward the front side of the second guide frame 35 by the rotation of the second feed screw in the clockwise direction, and the second traveling frame 37 (glass plate first to fourth holders 40a to 40d) moves in the front-rear direction from the rear side toward the front side of the second guide frame 35 by the movement of the second slide blocks. Conversely, when the shaft of the second servomotor 39 rotates in the counterclockwise direction, the second feed screw rotates in the counterclockwise direction, the second slide blocks move in the front-rear direction from the front side toward the rear side of the second guide frame 35 by the rotation of the second feed screw in the counterclockwise direction, and the second traveling frame 37 (glass plate first to fourth holders 40a to 40d) moves in the front-rear direction from the front side toward the rear side of the second guide frame 35 by the movement of the second slide blocks.

A control unit that controls start/stop, rotation number, and rotation speed of each of the first and second servomotors 34 and 39 is connected to the controller via an interface (wired or wireless) (not shown). When receiving the drive signal from the controller, the control unit of the first servomotor 34 drives the first servomotor 34 at a predetermined rotation number and rotation speed, and stops the first servomotor 34 after the first servomotor 34 rotates a predetermined number of times. The control unit of the second servomotor 39 drives the second servomotor 39 at a predetermined rotation number and rotation speed when receiving the drive signal from the controller, and stops the drive of the second servomotor 39 when receiving the stop signal from the controller.

The glass plate first to fourth holders 40a to 40d are attached to a lower portion of the second traveling frame 37, extend downward from the traveling frame 37, and are arranged and separated from each other at equal intervals in the front-rear direction. The glass plate first to fourth holders 40a to 40d include a pad installing plate 41 extending in the front-rear direction, a suction pad 42 that is installed on the pad installing plate 41 and sucks and holds the glass plates 11a and 11b, a vacuum mechanism (air suction device) (air vacuum pump) (not shown), and a pad raising/lowering mechanism (not shown). An air cylinder is used for the pad raising/lowering mechanism. A control unit that controls start/stop of the vacuum mechanism and the pad raising/lowering mechanism (air cylinder) is connected to the controller via an interface (wired or wireless) (not shown).

The glass plate first holder 40a reciprocates in the front-rear direction between the loading area 19 and the cutting processing area 20, moves forward from the loading area 19 toward the cutting processing area 20, and moves rearward from the cutting processing area 20 toward the loading area 19. The glass plate second holder 40b reciprocates in the front-rear direction between the cutting processing area 20 and the bend-breaking processing area 21, advances from the cutting processing area 20 toward the bend-breaking processing area 21, and retreats from the bend-breaking processing area 21 toward the cutting processing area 20. The glass plate third holder 40c reciprocates in the front-rear direction between the bend-breaking processing area 21 and the grinding processing area 22, advances from the bend-breaking processing area 21 toward the grinding processing area 22, and retreats from the grinding processing area 22 toward the bend-breaking processing area 21. The glass plate fourth holder 40d reciprocates in the front-rear direction between the grinding processing area 22 and the unloading area 23, advances from the grinding processing area 22 toward the unloading area 23, and retreats from the unloading area 23 toward the grinding processing area 22.

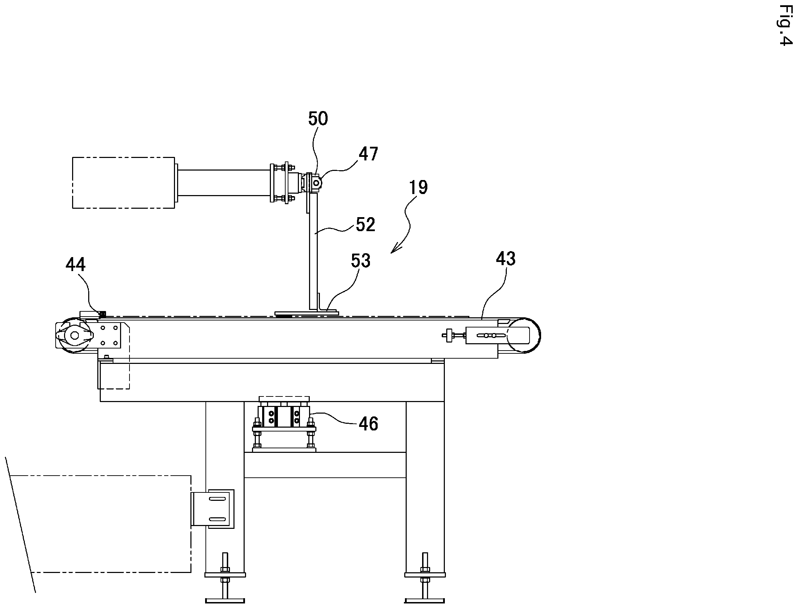

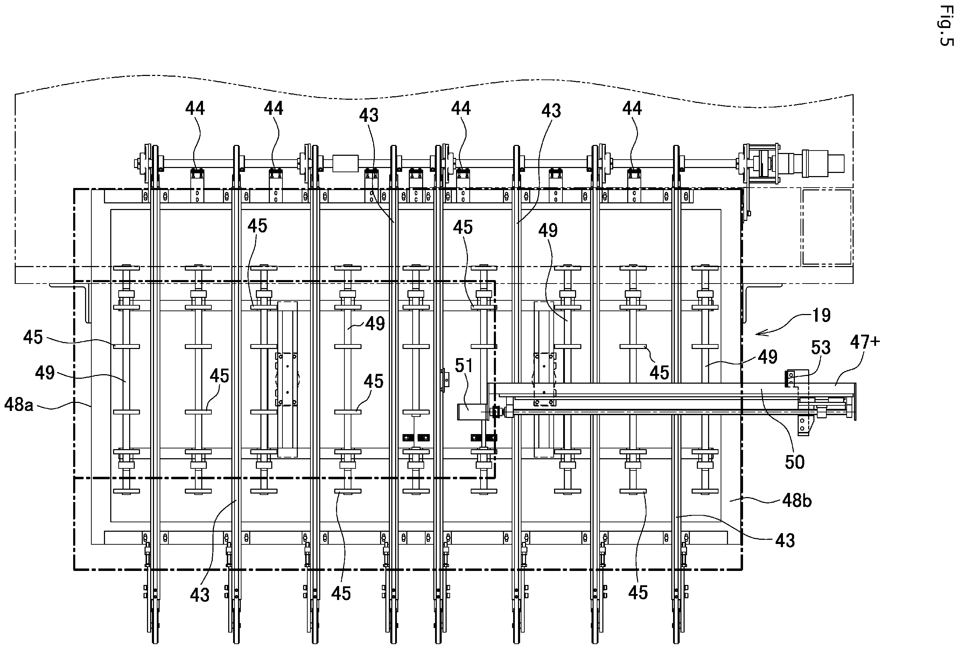

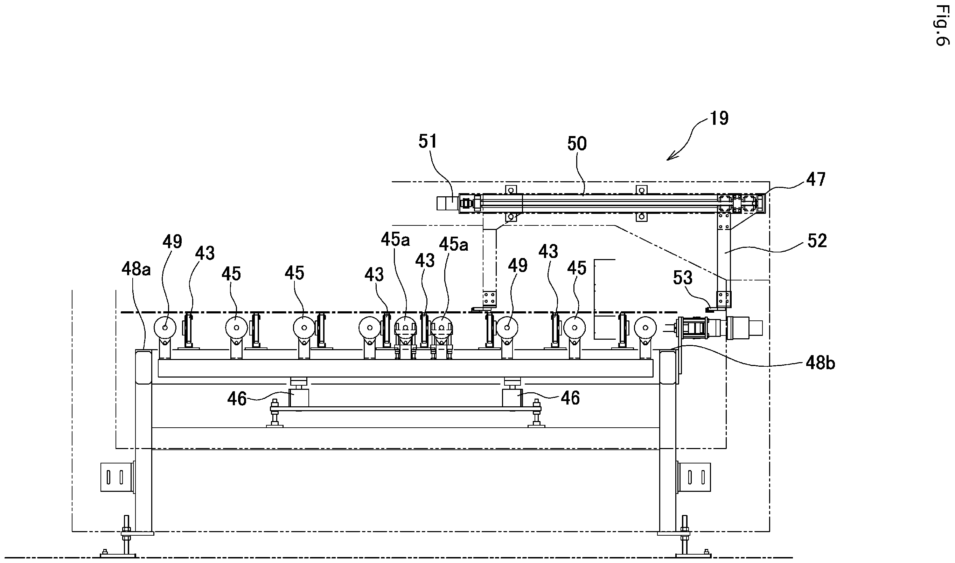

Fig. 4 is a side view of the loading area 19, and Fig. 5 is a top view of the loading area 19. Fig. 6 is a front view of the loading area 19. The loading area 19 includes loading conveyors 43, stoppers 44, rollers 45, a pair of roller raising/lowering mechanisms 46, and a moving mechanism 47. The loading area 19 is supported by legs extending upward from a floor surface of the system stand 25. In the loading area 19, a first positioning means (first positioning step) and a second positioning means (second positioning step) are performed to position the glass plates 11a and 11b toward each of the processing areas 20 to 22.

A positioning first reference L1 (virtual positioning first reference line) extending in the front-rear direction and a positioning second reference L2 (virtual positioning second reference line) extending in the width direction are set in one side edge portion 48a in the loading area 19. The positioning first reference L1 is an imaginary line linearly extending in the front-rear direction, which is assumed based on the outermost side edge located on the outermost side in the width direction in the first side edge 14 extending in the front-rear direction on one side in the width direction of the large-sized (large-area) glass plate 11a (glass plate 11a to be processed first). For example, when the first side edge 14 (one side edge) of each of the glass plates 11a and 11b draws a curve which is curved, the outermost side edge is a vertex of a curved line located on the outermost side in the width direction. When the first side edge 14 (one side edge) of each of the glass plates 11a and 11b extends straight in the front-rear direction, the side edge 14 is the outermost side edge.

In the positioning first reference L1, the outermost side edge located on the outermost side in the width direction in the first side edge 14 (one side edge) extending in the front-rear direction on one side in the width direction of each of the glass plates 11a and 11b is positioned. Here, positioning the outermost side edge at the positioning first reference L1 includes not only a case where the outermost side edge completely matches the positioning first reference L1, but also a case where the outermost side edge is positioned in the vicinity (nearest) of the inner side in the width direction of the positioning first reference L1, or a case where the outermost side edge is positioned in the vicinity (nearest) of the outer side in the width direction of the positioning first reference L1.

In the positioning second reference L2, a front-rear direction center O1 (center line L2 extending in the width direction by dividing the dimension of each of the glass plates 11a and 11b in the front-rear direction by 2) of the first side edge 14 (one side edge) extending in the front-rear direction on one side in the width direction of the glass plates 11a and 11b is positioned. Here, positioning the front-rear direction center O1 (center line L2) at the positioning second reference L2 includes not only a case where the front-rear direction center O1 (center line L2) completely matches the positioning second reference L2, but also a case where the front-rear direction center O1 (center line L2) is positioned in the vicinity (nearest) of the front side in the front-rear direction of the positioning second reference L2, or a case where the front-rear direction center O1 (center line L2) is positioned in the vicinity (nearest) of the rear side in the front-rear direction of the positioning second reference L2.

The controller (glass plate processing system 10) calculates the dimension in the width direction of each of the glass plates 11a and 11b using the coordinate data of each of the glass plates 11a and 11b stored in the large-capacity hard disk, determines the first moving dimension (first moving distance) in the width direction for positioning the first side edge 14 (one side edge) of each of the glass plates 11a and 11b in the positioning first reference L1 (virtual positioning first reference line) according to the difference in the calculated dimension in the width direction (Y-axis direction) of each of the glass plates 11a and 11b, and determines the rotation speed (rotation number of the shaft for moving the glass plates 11a and 11b by a first moving dimension (first moving distance) in the width direction) of a shaft of a third servomotor 51 to be described later based on the determined first moving dimension. The controller (glass plate processing system 10) stores the determined first moving dimension and the determined rotation number of the shaft of the third servomotor 51 in the large-capacity hard disk in a state of being associated with the glass plate specifying information (glass plate specifying identifier) of each of the glass plates 11a and 11b.

The controller (glass plate processing system 10) calculates the dimension of each of the glass plates 11a and 11b in the front-rear direction (X-axis direction) using the coordinate data of each of the glass plates 11a and 11b stored in the large-capacity hard disk, and determines a second moving dimension toward the rear side in the front-rear direction of the loading conveyor 43 for positioning the front-rear direction center O1 of one side edge 14 of each of the glass plates 11a and 11b at the positioning second reference L2 (virtual positioning second reference line) according to the difference in the calculated dimension of each of the glass plates 11a and 11b in the front-rear direction. The controller (glass plate processing system 10) stores the determined second moving dimension in the large-capacity hard disk in a state of being associated with the glass plate specifying information (glass plate specifying identifier) of each of the glass plates 11a and 11b.

The controller (glass plate processing system 10) calculates a moving dimension (moving distance) of the cutting device 55 and the grinding device 119 in the front-rear direction based on the calculated dimension of each of the glass plates 11a and 11b in the front-rear direction, and determines the rotation number (rotation number of the shaft that moves the cutting device 55 and the grinding device 119 in the front-rear direction by the moving dimension (moving distance)) of the shaft of the first servomotor 34 based on the calculated moving dimension. The controller (glass plate processing system 10) stores the determined moving dimension and the determined rotation number of the shaft of the first servomotor 34 in the large-capacity hard disk in a state of being associated with the glass plate specifying information (glass plate specifying identifier) of each of the glass plates 11a and 11b.

As shown in Figs. 4 to 6, the loading conveyors 43 are a plurality of endless tracks extending in the front-rear direction (X direction), and are arranged and separated from each other at a predetermined interval in the width direction (Y direction). A control unit that controls start/stop and a conveyance distance of the loading conveyor 43 is connected to the controller via an interface (wired or wireless) (not shown). The loading conveyors 43 convey the glass plates 11a and 1b from the rear side to the front side in the front-rear direction from the rear end portion (loading port) toward the front end portion (unloading port) of the loading area 19. The stoppers 44 are installed at the front end portion of the loading area 19 and are arranged and separated from each other in the width direction. The front end edge 16 of each of the glass plates 11a and 11b moving forward from the rear end portion toward the front end portion of the loading area 19 by the loading conveyors 44 abuts on the stopper 44. The stopper 44 is installed with a contact sensor (not shown). The contact sensor is connected to the controller, detects abutment (contact) of the front end edge 16 of each of the glass plates 11a and 11b with the stoppers 44, and transmits an abutment signal to the controller when the front end edge 16 abuts on the stoppers 44.

The plurality of rollers 45 are rotatably attached to a shaft 49 extending in the front-rear direction, or the plurality of rollers 45 are attached to the shaft 49 extending in the front-rear direction and rotate together with the shaft 49. The rollers 45 are installed between the loading conveyors 43 together with the shaft 49. The rollers 45 are arranged and separated from each other at a predetermined distance in the front-rear direction and are arranged at a predetermined distance in the width direction. The rollers 45 rotate clockwise and counterclockwise in the width direction, and abut on the lower surface 13 of each of the glass plates 11a11b to hold the glass plates 11a and 11b so as to be movable in the width direction. The shafts 49 are attached to a pedestal positioned below the shafts 49 via bearings.

A resistance plate (rubber ring) (not shown) that increases the rotation resistance of a roller 45a of the rollers 45 is attached between the roller 45a and the shaft 49. In the roller 45a, resistance with the shaft 54 is increased by the resistance plate (rubber ring), the roller 45a does not rotate unless a rotation force exceeding the rotation resistance is applied to the roller 45a, and free rotation of the roller 45a is prevented by the resistance plate. When the glass plates 11a and 11b are placed on the rollers 45, free movement of the glass plates 11a and 11b in the width direction is prevented by the roller 45a having a large rotation resistance. Note that the resistance plate (rubber ring) may be attached between at least one of the rollers 45 and the shaft 49.

The roller raising/lowering mechanisms 46 are installed below the pedestal to which the shafts 49 are attached, and are arranged and separated from each other at a predetermined distance in the width direction. Air cylinders are used as the roller raising/lowering mechanisms 46, and the shafts 49 and the rollers 45 are raised and lowered in the up-down direction together with the pedestal by the roller raising/lowering mechanisms 46 (air cylinders). A raising dimension and a lowering dimension of the roller raising/lowering mechanism 46 (air cylinder) are set in advance. A control unit that controls start/stop of the roller raising/lowering mechanisms 46 (air cylinders) is connected to the controller via an interface (wired or wireless) (not shown). When receiving the raising/lowering signal from the controller, the control unit of the roller raising/lowering mechanisms 46 (air cylinders) raises and lowers the rollers 45 (pedestal and the shafts 49) using the roller raising/lowering mechanisms 46.

While the loading conveyors 43 are conveying the glass plates 11a and 11b, the rollers 45 (the pedestal and the shafts 49) are lowered below the loading conveyor 43 by the roller raising/lowering mechanisms 46 (air cylinders), and the rollers 45 do not abut on the lower surface 13 of each of the glass plates 11a and 11b. When the rollers 45 (pedestal and the shafts 49) are raised by the roller raising/lowering mechanisms 46 (air cylinders), a part of the peripheral edge portion of each of the rollers 45 is exposed to the upper sides of the loading conveyors 43, and the glass plates 11a and 11b are raised to the upper sides of the loading conveyors 43 by the rollers 45.

The moving mechanism 47 includes a rod 50 located above the loading conveyors 43 and the rollers 45, a third servomotor 51 installed on (built in) the rod 50, a feed screw (feed screw mechanism) (not shown) installed on (built in) the rod 50 and coupled to a shaft of the third servomotor 51, a moving arm 52 extending downward from the rod 50, and an abutment member 53 installed at a lower end portion of the moving arm 52.

The rod 50 is attached to the rear surfaces of the first pillars 26a and extends in the width direction. The moving arm 52 is movably installed on the feed screw, and linearly moves to one side and the other side in the width direction along the rod 50 by the rotation of the feed screw due to the rotation of the shaft of the third servomotor 51. The abutment member 53 linearly moves to one side and the other side in the width direction together with the moving arm 52 along with the movement of the moving arm 52 in the width direction. The abutment member 53 abuts on the other side edge 15 of each of the glass plates 11a and 11b in a state where the rollers 45 raised by the roller raising/lowering mechanisms 46 (air cylinders) abut on the lower surface 13 of each of the glass plates 11a and 11b, and presses the glass plates 11a and 11b in the width direction so that the glass plates 11a and 11b move in the width direction.

A control unit that controls start/stop, rotation number, and rotation speed of the third servomotor 51 is connected to the controller via an interface (wired or wireless) (not shown). The control unit of the third servomotor 51 drives the third servomotor 51 at a predetermined rotation number and rotation speed when receiving the drive signal from the controller, and stops the drive of the third servomotor 51 when receiving the stop signal from the controller.

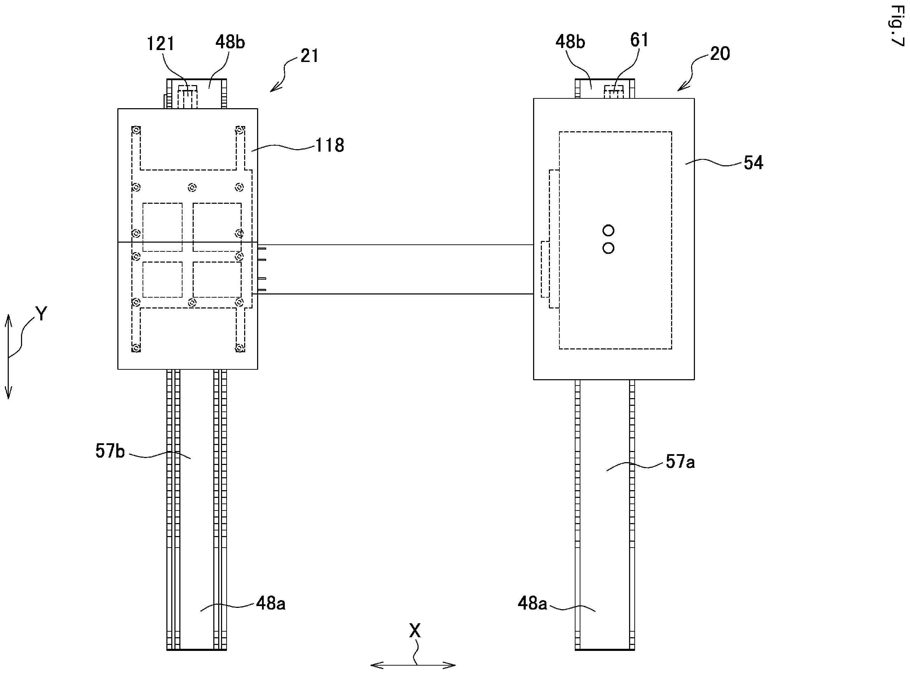

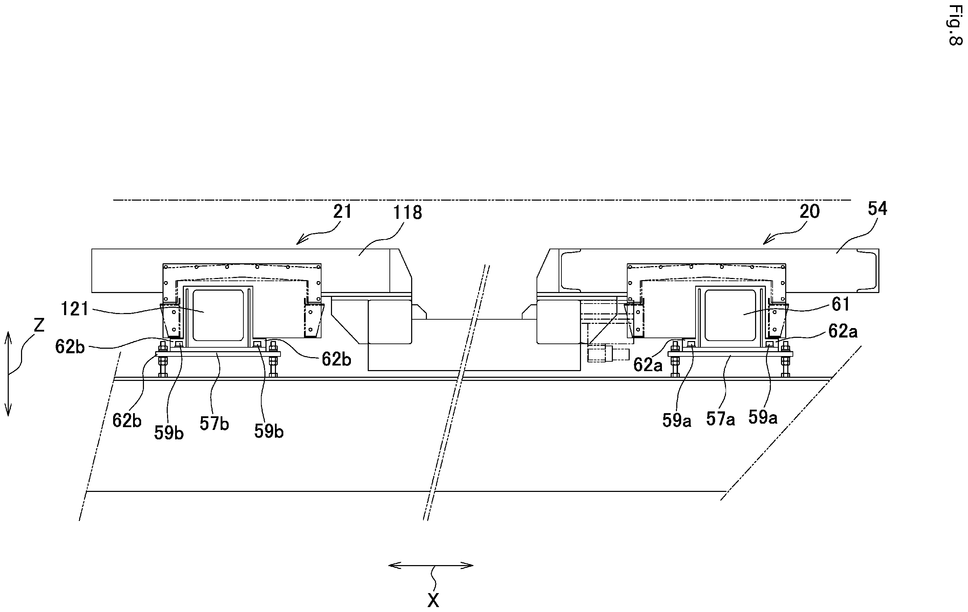

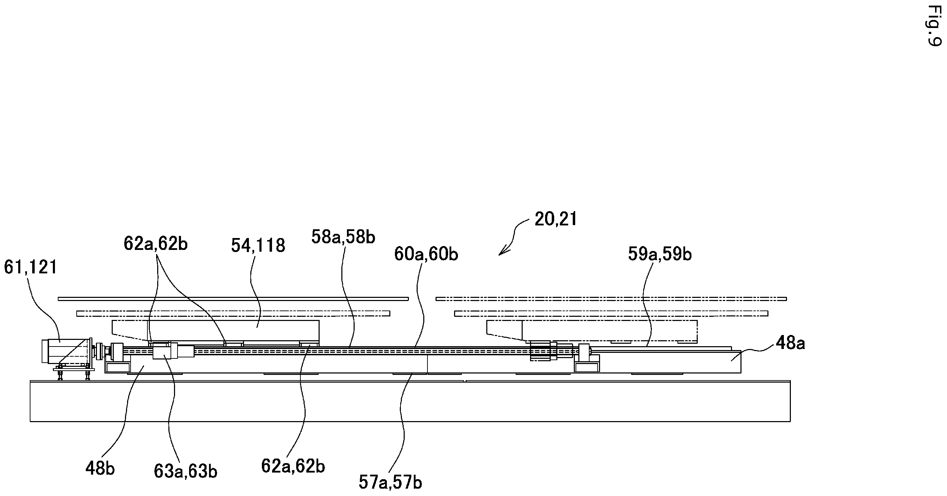

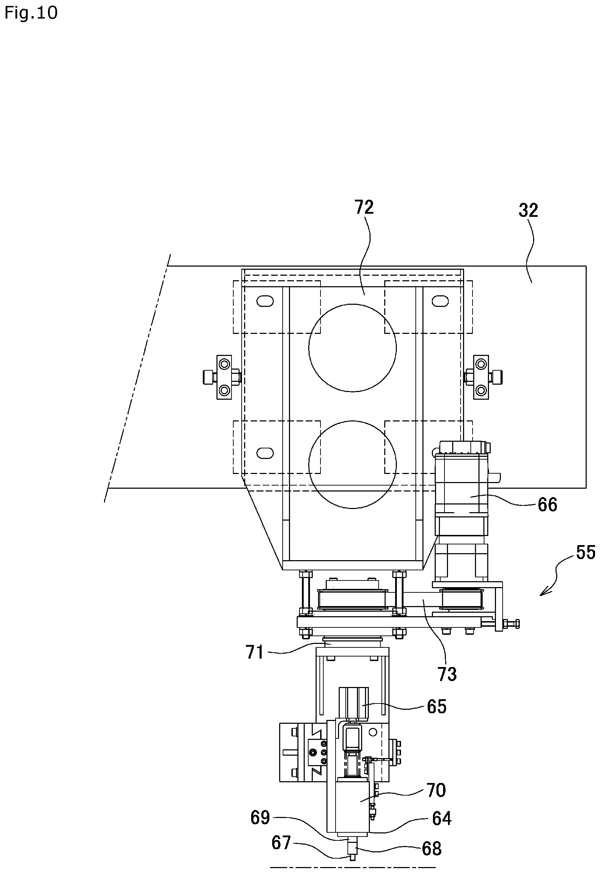

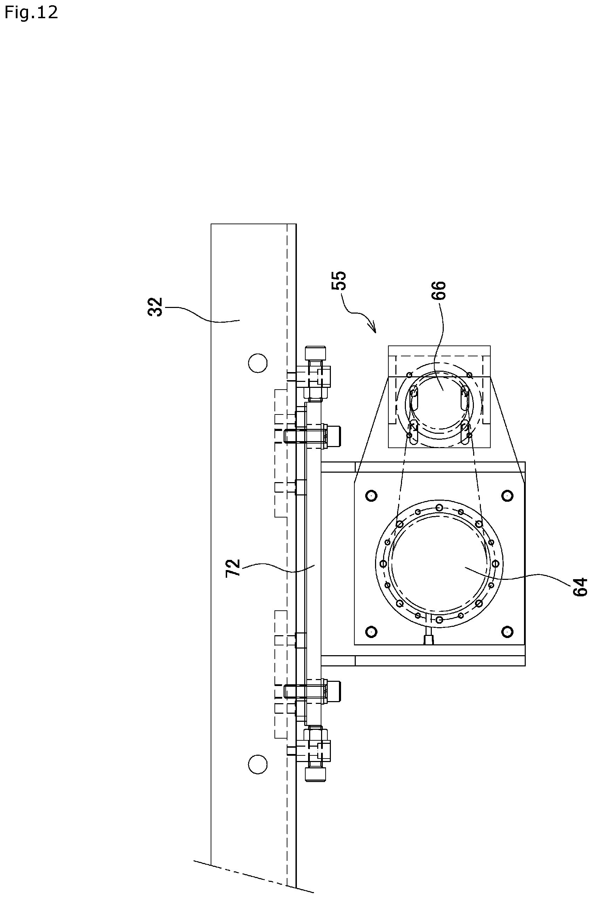

Fig. 7 is a top view of a cutting processing table 54 and a grinding processing table 118, and Fig. 8 is a side view of the cutting processing table 54 and the grinding processing table 118. Fig. 9 is a view for explaining movement of the cutting processing table 54 and the grinding processing table 118, and Fig. 10 is a side view of the cutting device 55 installed in the cutting processing area 20 as an example. Fig. 11 is a front view of the cutting device 55, and Fig. 12 is a top view of the cutting device 55. In Figs. 7 and 8, the front-rear direction (X-axis direction) is indicated by an arrow X, the width direction (Y-axis direction) is indicated by an arrow Y, and the up-down direction (Z-axis direction) is indicated by an arrow Z.

The cutting processing area 20 includes the cutting processing table 54 (cutting processing table) on which the glass plates 11a and 11b positioned in the loading area 19 are placed, and the cutting device 55 that puts a contour cutting line K1 (cutting line) into an edge portion 56b (peripheral edge portion) of each of the glass plates 11a and 11b placed on the cutting processing table 54.

The cutting processing table 54 is installed on a base lane 57a elongated in the width direction fixed to the floor surface of the system stand 25. The cutting processing table 54 uses a first moving mechanism 58a to move in the width direction in a state where the positioned glass plates 11a and 11b are placed. The first moving mechanism 58a includes a traveling guide rail 59a, a feed screw 60a (ball screw), a fourth servomotor 61, guide shoe 62a, and a slide block 63a (housing nut).

These traveling guide rail 59a is installed on the upper surface of the base lane 57a and extend in the width direction. The feed screw 60a (ball screw) is installed on the upper surface of the base lane 57a and on the side of the traveling guide rail 59a, and extend in the width direction. The fourth servomotor 61 is installed on the base lane 57a and reciprocates the cutting processing table 54 in the width direction. The other end portion of the feed screw 60a is coupled to the shaft of the fourth servomotor 61.

The feed screw 60a is rotatably supported by bearings (not shown) fixed to the base lane 57a. The guide shoes 62a are attached to the lower surface of the cutting processing table 54 and extend in the width direction. The guide shoe 62a is slidably fitted to a traveling guide rail 69a. The slide block 63a (housing nut) is attached to the lower surface of the cutting processing table 54 and between the guide shoes 62a. The slide block 63a is rotatably screwed to the feed screw 60a.

When the shaft of the fourth servomotor 61 rotates in the clockwise direction, the feed screw 60a rotates in the clockwise direction, the rotation of the feed screw 60a in the clockwise direction causes the slide block 63a to move the feed screw 60a in the width direction from a second side edge portion 48b (other side edge portion) toward a first side edge portion 48a (one side edge portion) of the cutting processing area 20, and the movement of the slide block 63a causes the cutting processing table 54 to move in the width direction from a second side edge portion 48b toward a first side edge portion 48a in the cutting processing area 20. Conversely, when the shaft of the fourth servomotor 61 rotates in the counterclockwise direction, the feed screw 60a rotates in the counterclockwise direction, the rotation of the feed screw 60a in the counterclockwise direction causes the slide block 63a to move the feed screw 60a in the width direction from the first side edge portion 48a (one side edge portion) toward the second side edge portion 48b (other side edge portion) of the cutting processing area 20, and the movement of the slide block 63a causes the cutting processing table 54 to move in the width direction from the first side edge portion 48a toward the second side edge portion 48b in the cutting processing area 20.

The cutting device 55 includes a cutting jig 64, an air cylinder 65, and a fifth servomotor 66. The cutting jig 64 includes a cutting cutter wheel 67, a cutting cutter holder 68 (cutting holder), a cutter raising/lowering shaft 69, and a cutter raising/lowering guide 70. The cutting cutter wheel 67 is coupled to the cutting cutter holder 68 via a bearing (not shown), and freely rotates along the axis of the interposed bearing. The cutting cutter wheel 67 forms the contour cutting line K1 at the edge portion 56b (peripheral edge portion) of each of the glass plates 11a and 11b.

The cutting cutter holder 68 is located immediately above the cutting cutter wheel 67 and coupled to the cutter wheel 67 to support the cutter wheel 67. The cutter raising/lowering shaft 69 is located directly above the cutting cutter holder 68 and coupled to the cutter holder 68 to support the cutter holder 68. The cutter raising/lowering guide 70 is located immediately above the cutter raising/lowering shaft 69 and coupled to the cutter raising/lowering shaft 69 to support the cutter raising/lowering shaft 69. The cutting jig 64 (including the air cylinder 65) is coupled to a support shaft 71 that is located immediately above the air cylinder 65 and rotatably supports the cutting jig 64. The support shaft 71 is attached to a bracket 72 located immediately above the support shaft 71. The bracket 72 (cutting device 55) is coupled to the first moving unit 28 of the conveyance mechanism 24 that moves forward and rearward (linearly) in the front-rear direction (X-axis direction).

The air cylinder 65 is installed immediately above the cutter raising/lowering shaft 69. The air cylinder 65 raises and lowers (moves up and down) the cutting cutter wheel 67 (cutting cutter holder 68) in the up-down direction (Z-axis direction), and lowers the cutter wheel 67 toward the upper surface 12 of each of the glass plates 11a and 11b to apply (give) a cutting pressure (downward pressing force) to the cutter wheel 67 at the time of forming the contour cutting line K1 (cutting line) at the edge portion 56b of each of the glass plates 11a and 11b. The shaft of the fifth servomotor 66 is coupled to the support shaft 71 via a timing belt 73. The fifth servomotor 66 adjusts the direction of the cutting direction of the cutting jig 64 (cutting cutter wheel 67) (angle around the shaft orthogonal to the XY plane).

In the cutting device 55, a control unit of the fifth servomotor 66 rotates the shaft of the motor 66 based on the NC control signal transmitted from the controller, and performs NC control on the cutting jig 64 (cutting cutter wheel 67), and the cutting jig 64 (cutting cutter wheel 67) forms (puts) the contour cutting line K1 according to the shape desired to be processed on the edge portion 56b (peripheral edge portion) of each of the glass plates 11a and 11b according to the NC control.

A control unit that controls start/stop, rotation number, and rotation speed of each of the fourth and fifth servomotors 61 and 66 is connected to the controller via an interface (wired or wireless) (not shown). The control unit of the fourth servomotor 61 drives the fourth servomotor 61 at a predetermined rotation number and rotation speed when receiving the drive signal from the controller, and stops the drive of the fourth servomotor 61 when receiving the stop signal from the controller. The control unit of the fifth servomotor 66 drives the fifth servomotor 66 at a predetermined rotation number and rotation speed when receiving the drive signal from the controller, and stops the drive of the fifth servomotor 66 when receiving the stop signal from the controller.

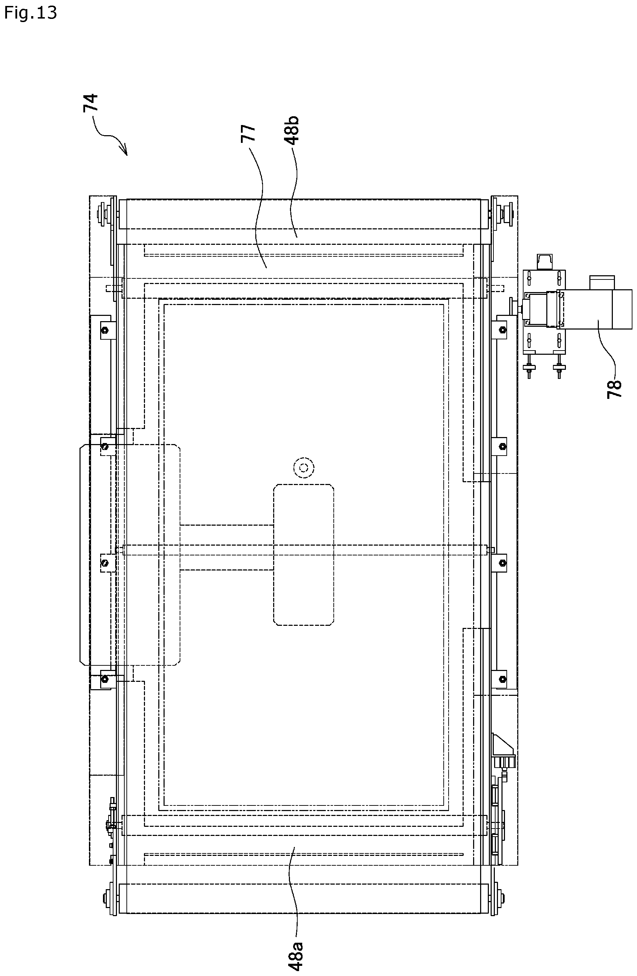

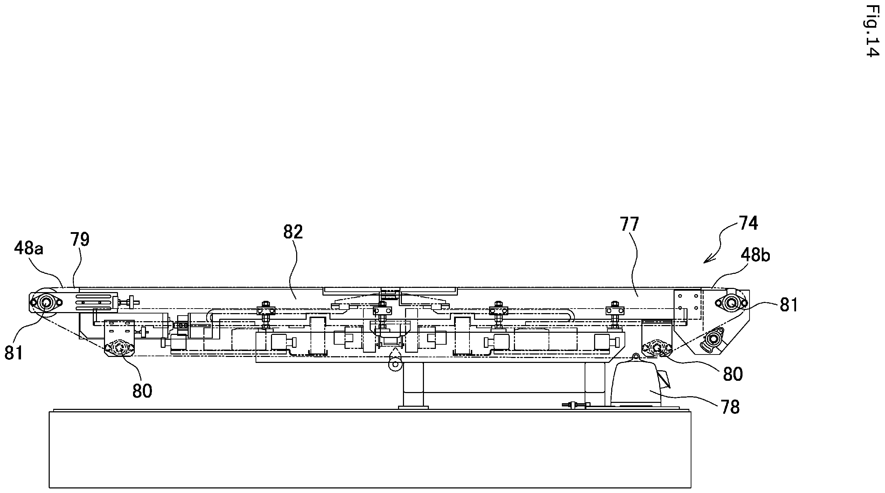

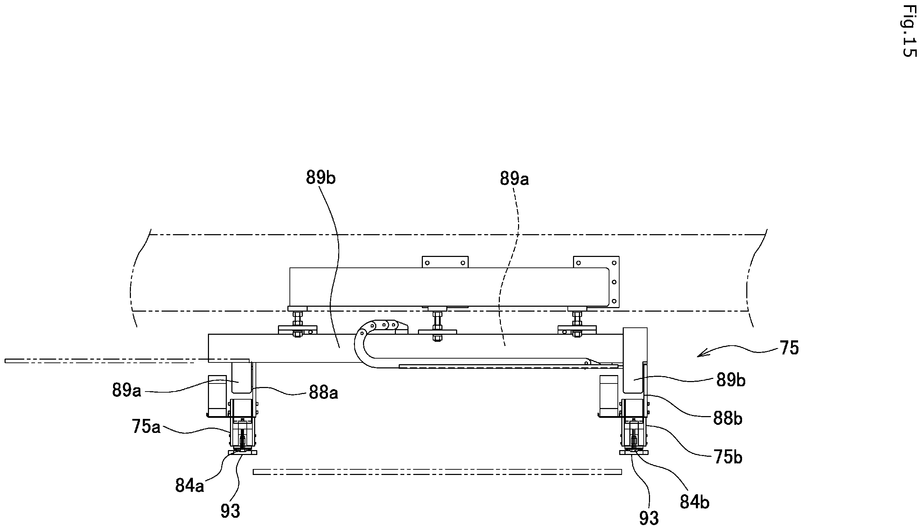

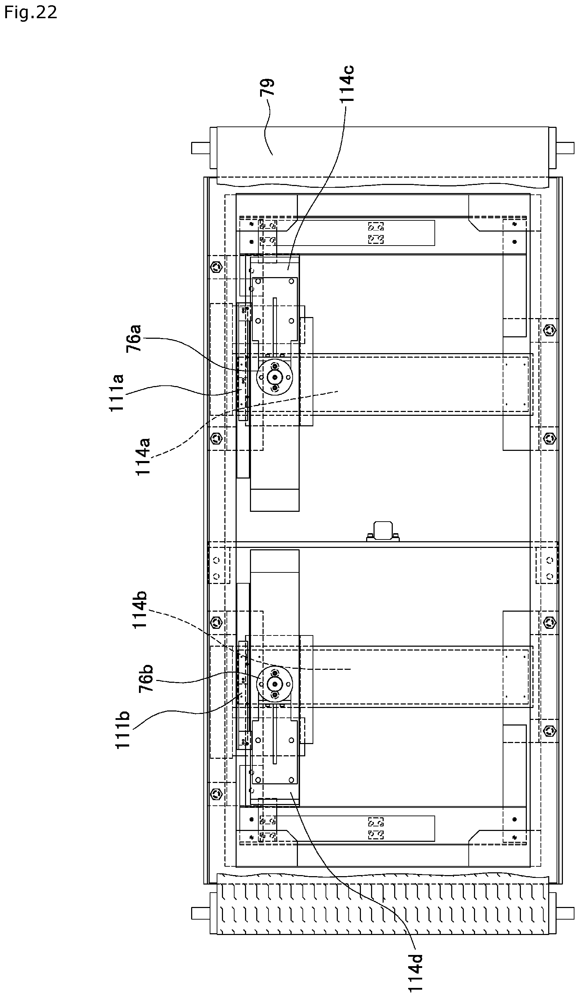

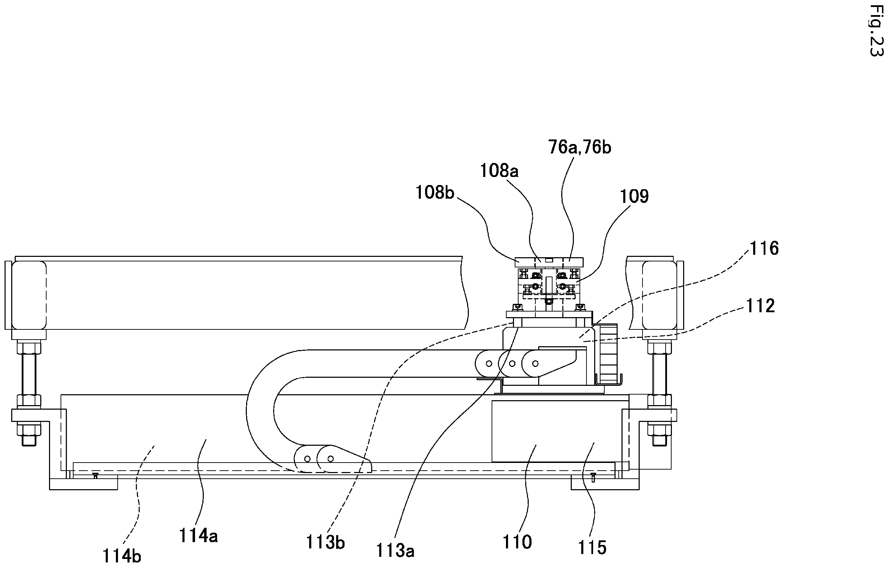

Fig. 13 is a top view of a bend-breaking processing table 74, and Fig. 14 is a side view of the bend-breaking processing table 74. The bend-breaking processing area 21 includes the bend-breaking processing table 74 (bend-breaking processing table) on which the glass plates 11a and 11b positioned in the loading area 19 and subjected to cutting processing in the cutting processing area 20 are placed, the bend-breaking device 75 (see Figs. 15 to 21) that bend-breaks the edge portion 56b (peripheral edge portion) located on the outer side of the contour cutting line K1 (cutting line) of each of the glass plates 11a and 11b placed on the bend-breaking processing table 74, and a support device 76 (see Figs. 22 and 23) that supports the glass plates 11a and 11b.

The bend-breaking processing table 74 includes a belt conveyor 77 that travels in the width direction (Y-axis direction) and a conveyor drive motor 78 that causes the belt conveyor 77 to travel, and is installed on a base board fixed to the floor surface of the system stand 25. The belt conveyor 77 includes a belt 79 extending in the width direction, a plurality of pulleys 80 and carrier rollers 81 that support the belt 79, and a conveyor frame 82 that supports the belt 79, the pulleys 80, and the carrier rollers 81. The glass plates 11a and 11b subjected to the cutting processing are placed on the belt conveyor 77. The belt conveyor 77 conveys the edge portion 56b of each of the glass plates 11a and 11b bend-broken by the bend-breaking device 75 to the other side (from the first side edge portion 48a to the second side edge portion 48b) in the width direction, and discards the bend-broken edge portion 56b of each of the glass plates 11a and 11b to a dust box (not shown).

The shaft of the conveyor drive motor 78 is coupled to the pulley 80 by a timing belt. A control unit that controls start/stop of the conveyor drive motor 78 is connected to the controller via an interface (wired or wireless) (not shown). The rotation speed (traveling speed of the belt) of the shaft of the conveyor drive motor 78 is set in advance, and is stored in the large-capacity hard disk of the controller in a state where the rotation speed (traveling speed of the belt) is associated with specifying information of the conveyor drive motor 78. The control unit of the conveyor drive motor 78 drives the drive motor 78 at a predetermined rotation number when receiving the drive signal from the controller, and stops the drive of the drive motor 78 when receiving the stop signal from the controller. When the shaft of the conveyor drive motor 78 rotates in the clockwise direction, the rotation is transmitted to the pulley 80 via the timing belt, the pulley 80 rotates in the clockwise direction, and the belt 79 travels toward the other side in the width direction by the rotation of the pulley 80.

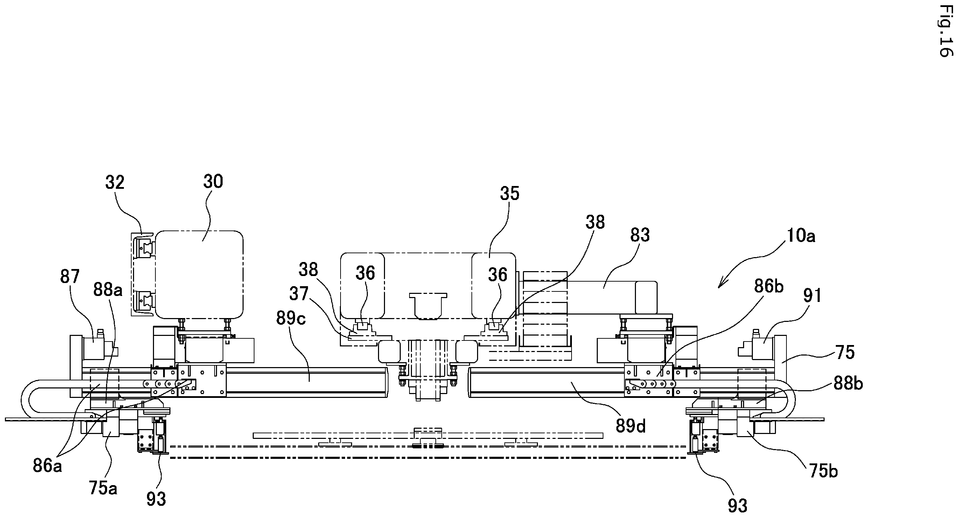

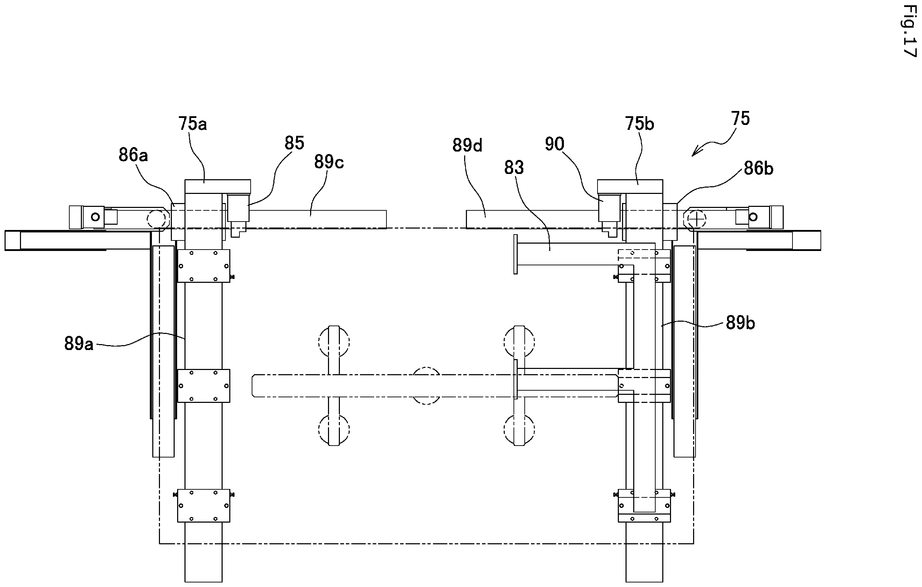

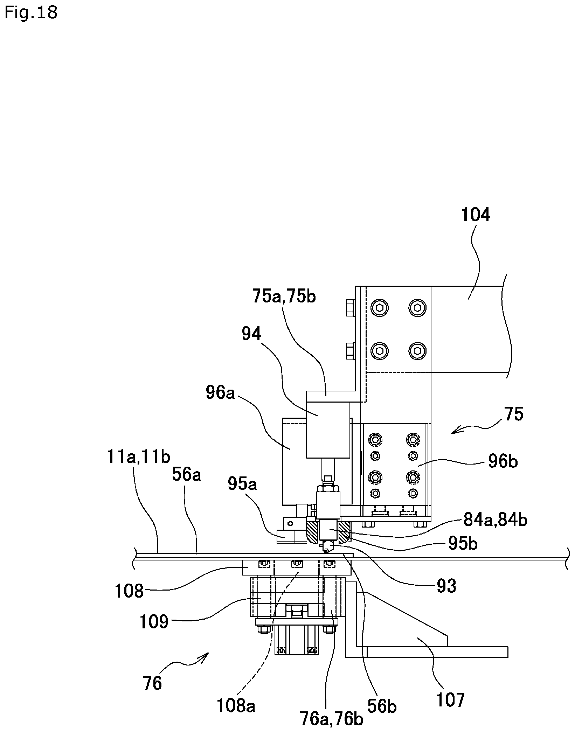

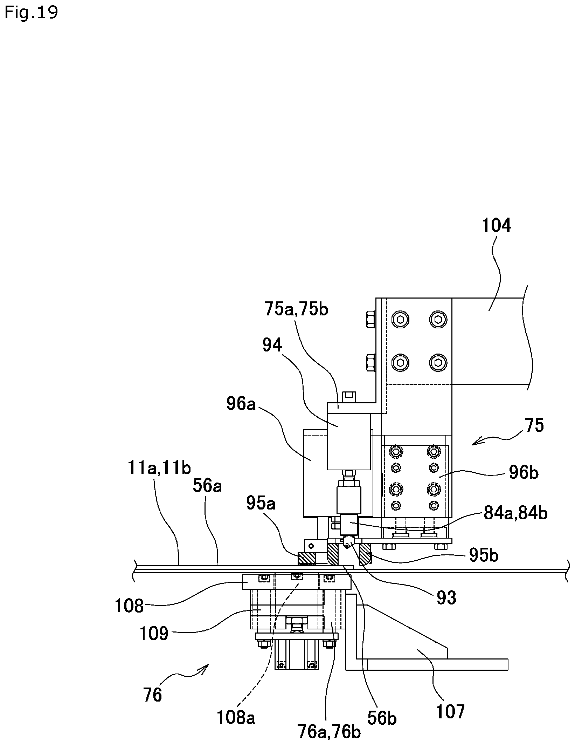

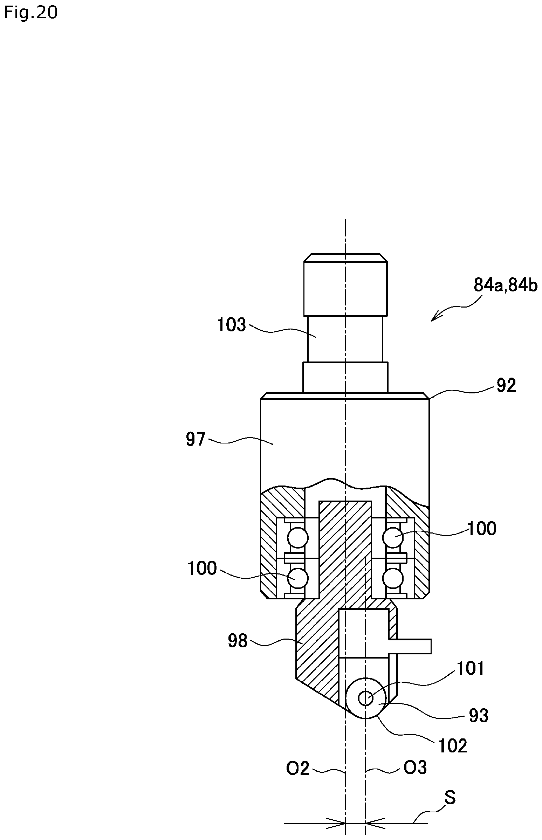

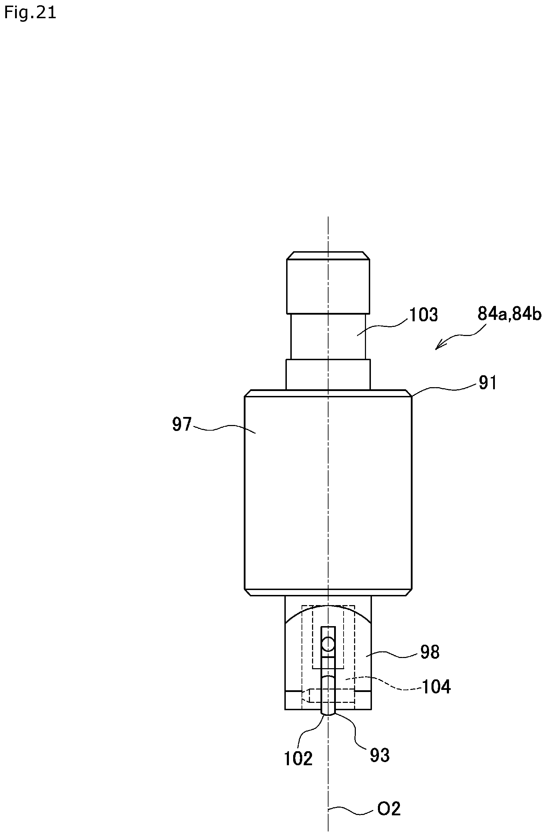

Fig. 15 is a side view of the bend-breaking device 75, and Fig. 16 is a front view of the bend-breaking device 75. Fig. 17 is a top view of the bend-breaking device 75, and Figs. 18 and 19 are enlarged front views of the bend-breaking device 75. Fig. 20 is a partially broken side view of first and second bend-breaking jigs 84a and 84b. Fig. 21 is a front view of the first and second bend-breaking jigs 84a and 84b. Fig. 18 shows a state in which a bend-breaking cutter wheel 93 is lowered and first and second pressing members 95a and 95b are raised. Fig. 19 shows a state in which the bend-breaking cutter wheel 93 is raised and the first and second pressing members 95a and 95b are lowered.

The bend-breaking device 75 includes two first bend-breaking device 75a and second bend-breaking device 75b separated from each other in the width direction. The first bend-breaking device 75a is coupled to the first guide frame 30, and the second bend-breaking device 75b is coupled to a suspension frame 83. The suspension frame 83 is coupled to a side portion of the second guide frame 35. The first bend-breaking device 75a includes the first bend-breaking jig 84a (bend-breaking jig), a sixth servomotor 85 (X-axis servomotor) and an X-axis first actuator 86a, a seventh servomotor 87 (Y-axis servomotor) and a Y-axis first actuator 88a, and an X-axis first actuator frame 89a and a Y-axis first actuator frame 89c. The X-axis first actuator frame 89a and the Y-axis first actuator frame 89c are connected in series at one end portions thereof.

The second bend-breaking device 75b includes the second bend-breaking jig 84b (bend-breaking jig), an eighth servomotor 90 (X-axis servomotor) and an X-axis second actuator 86b, a ninth servomotor 91 (Y-axis servomotor) and a Y-axis second actuator 88b, and an X-axis second actuator frame 89b and a Y-axis second actuator frame 89d. The X-axis second actuator frame 89b and the Y-axis second actuator frame 89d are connected in series at one end portions thereof.

As shown in Figs. 18 and 19, the first and second bend-breaking jigs 84a and 84b of the first and second bend-breaking devices 75a and 75b include a bend-breaking cutter holder 92, a bend-breaking cutter wheel 93, a holder raising/lowering mechanism 94 (first raising/lowering mechanism), the first pressing member 95a that presses downward a main body portion 56a (glass plates 11a and 11b extending to the inner side of the contour cutting line K1) of each of the glass plates 11a and 11b on which the contour cutting line K1 (cutting line) and the end cutting line K2 are formed, the second pressing member 95b that presses downward the edge portion 56b (glass plates 11a and 11b extending to the outer side of the contour cutting line K1) of each of the glass plates 11a and 11b on which the contour cutting line K1 (cutting line) and the end cutting line K2 are formed, a first pressing member raising/lowering mechanism 96a (second raising/lowering mechanism), and a second pressing member raising/lowering mechanism 96b (second raising/lowering mechanism).

The bend-breaking cutter holder 92 is located above the bend-breaking cutter wheel 93 and supports the bend-breaking cutter wheel 93. As shown in Figs. 20 and 21, the bend-breaking cutter holder 92 includes a holder main body 97 including a coupling portion, and a holder head 98 attached to a distal end of the holder main body 97.

The bend-breaking cutter wheel 93 forms (puts) the end cutting line K2 (scribe) in the edge portion 56 (edge portion 56 of each of the glass plates 11a and 11b extending to the outer side of the contour cutting line K1) of each of the glass plates 11a and 11b to be processed. The bend-breaking cutter wheel 93 is rotatably (rollably) attached to a distal end of the holder head 98 via a rolling shaft 101, and a peripheral edge 102 thereof rolls about the rolling shaft 101. A cutter wheel axis O3 extending in the up-down direction of the bend-breaking cutter wheel 93 is eccentric (displaced) radially outward with respect to a cutter holder center axis O2 extending in the up-down direction of the bend-breaking cutter holder 92 (holder main body 97). A separation dimension S (eccentric dimension) in the width direction of the cutter wheel axis O3 with respect to the cutter holder center axis O2 is in a range of 0.5 to 2 mm.

The holder head 98 is coupled to the holder main body 97 via a bearing 100, freely rotates along the axis of the interposed bearing 100, and is rotatable by 360° in a direction around the cutter holder center axis O2 of the bend-breaking cutter holder 92 (θ direction). The holder head 98 rotates in the clockwise direction and the counterclockwise direction about the cutter holder center axis O2. When the holder head 98 rotates, the bend-breaking cutter wheel 93 (bend-breaking cutter wheel 93 having the cutter wheel axis O3 that is eccentric with respect to the cutter holder center axis O2) is rotatable by 360° in a direction around the cutter wheel axis O3 with respect to the bend-breaking cutter holder 92. The bend-breaking cutter wheel 93 rotates in the clockwise direction and the counterclockwise direction about the cutter holder center axis O2.

Since the cutter wheel axis O3 of the bend-breaking cutter wheel 93 is eccentric outward in the radial direction with respect to the cutter holder center axis O2, when the first and second bend-breaking jigs 84a and 84b (bend-breaking cutter holder 92) travel (move) on the upper surface 12 of each of the glass plates 11a and 11b in a predetermined direction, the bend-breaking cutter wheel 93 exerts a caster effect in which the rolling (moving) direction of the peripheral edge 102 of the bend-breaking cutter wheel 93 faces the traveling (moving) direction of the first and second bend-breaking jigs 84a and 84b (bend-breaking cutter holder 92) (direction in which the virtual end cutting line extends).

The holder raising/lowering mechanism 94 (first raising/lowering mechanism) is installed immediately above the holder main body 97, and is coupled to a coupling portion 103 of the bend-breaking cutter holder 92 (holder main body 97). The holder raising/lowering mechanism 94 is fixed to a bracket 104 by a fixing member. An air cylinder is used for the holder raising/lowering mechanism 94 (first raising/lowering mechanism). The holder raising/lowering mechanism 94 (air cylinder) raises and lowers (moves up and down) the bend-breaking cutter holder 92 (bend-breaking cutter wheel 93) of the first and second bend-breaking jigs 84a and 84b in the up-down direction (Z-axis direction). The holder raising/lowering mechanism 94 (air cylinder) lowers the cutter wheel 93 toward the upper surface 12 of each of the glass plates 11a and 11b at the time of bend-breaking the edge portion 56b of each of the glass plates 11a and 11b, and applies (gives) an end cutting pressure (downward pressing force) to the cutter wheel 93. A raising dimension and a lowering dimension of the holder raising/lowering mechanism are set in advance.

The first pressing member 95a is made of rubber or synthetic resin having rubber elasticity. The first pressing member 95a is located in the vicinity of the outer side of the second pressing member 95b and extends in the direction around the second pressing member 95b. The first pressing member 95a has a first pressing surface 105a having a predetermined area that abuts on the upper surface 12 of each of the glass plates 11a and 1b. The first pressing surface 105a is formed in a semi-annular shape surrounding the second pressing member 95b.

The first pressing member raising/lowering mechanism 96a (second raising/lowering mechanism) is located on the side in the width direction of the first pressing member 95a, and is fixed to the bracket 104 by a fixing member. An air cylinder is used for the first pressing member raising/lowering mechanism 96a. The first pressing member raising/lowering mechanism 96a (air cylinder) raises and lowers (moves up and down) the first pressing member 95a of each of the first and second bend-breaking jigs 84a and 84b in the up-down direction (Z-axis direction).

The first pressing member raising/lowering mechanism 96a (second raising/lowering mechanism) lowers the first pressing member 95a toward the upper surface 12 of each of the glass plates 11a and 11b at the time of bend-breaking the edge portion 56b of each of the glass plates 11a and 11b, and applies (gives) a downward pressing force to the first pressing member 95a. A raising dimension and a lowering dimension of the first pressing member 95a are set in advance. One bracket 104 is slidably attached to the X-axis first actuator frame 89a and the Y-axis first actuator frame 89c.

The second pressing member 95b is made of rubber or synthetic resin having rubber elasticity. The second pressing member 95b is located in the vicinity of the outer side of the bend-breaking cutter wheel 93 and extends in the direction around the bend-breaking cutter wheel 93. The second pressing member 95b has a second pressing surface 105b having a predetermined area that abuts on the upper surface 12 of each of the glass plates 11a and 1b. The second pressing surface 105b is formed in an annular shape surrounding the bend-breaking cutter wheel 93. A through hole 106 penetrating in the up-down direction is bored (formed) at the center of the second pressing member 95b.

The second pressing member raising/lowering mechanism 96b (third raising/lowering mechanism) is located on the side in the width direction of the second pressing member 95b, and is fixed to the bracket 104 by a fixing member. An air cylinder is used for the second pressing member raising/lowering mechanism 96b. The second pressing member raising/lowering mechanism 96b (air cylinder) raises and lowers (moves up and down) the second pressing member 95b of each of the first and second bend-breaking jigs 84a and 84b in the up-down direction (Z-axis direction). The second pressing member raising/lowering mechanism 96b (third raising/lowering mechanism) lowers the second pressing member 95b toward the upper surface 12 of each of the glass plates 11a and 11b at the time of bend-breaking the edge portion 56b of each of the glass plates 11a and 11b, and applies (gives) a downward pressing force to the second pressing member 95b. A raising dimension and a lowering dimension of the second pressing member 95b are set in advance. The other bracket 104 is slidably attached to the X-axis second actuator frame 89b and the Y-axis second actuator frame 89d.

A control unit that controls start/stop of the holder raising/lowering mechanism 94 (first raising/lowering mechanism), a control unit that controls start/stop of the first pressing member raising/lowering mechanism 96a (second raising/lowering mechanism), and a control unit that controls start/stop of the second pressing member raising/lowering mechanism 96b (third raising/lowering mechanism) are connected to the controller via an interface (wired or wireless) (not shown). When receiving the raising/lowering signal from the controller, the control unit of the holder raising/lowering mechanism 94 raises and lowers the bend-breaking cutter holder 92 (bend-breaking cutter wheel 93) using the holder raising/lowering mechanism 94 (air cylinder). When receiving the raising/lowering signal from the controller, the control unit of the first pressing member raising/lowering mechanism 96a raises and lowers the first pressing members 95a using the first pressing member raising/lowering mechanism 96a (air cylinder). When receiving the raising/lowering signal from the controller, the control unit of the second pressing member raising/lowering mechanism 96b raises and lowers the second pressing member 96b using the second pressing member raising/lowering mechanism 95b (air cylinder).

The sixth servomotor 85 (X-axis servomotor) is installed on the X-axis first actuator frame 89a, and an axis thereof is coupled to the X-axis first actuator 86a. The X-axis first actuator 86a includes a screw portion and a guide portion (not shown). When the shaft of the sixth servomotor 85 rotates in the clockwise direction, the screw portion of the X-axis first actuator 86a rotates in the clockwise direction. When the screw portion rotates in the counterclockwise direction, the first bend-breaking jig 84a of the first bend-breaking device 75a moves forward in the front-rear direction along the X-axis first actuator frame 89a together with the bracket 104. When the shaft of the sixth servomotor 85 rotates in the counterclockwise direction, the screw portion of the X-axis first actuator 86a rotates in the counterclockwise direction. When the screw portion rotates in the counterclockwise direction, the first bend-breaking jig 84a of the first bend-breaking device 75a moves rearward in the front-rear direction along the X-axis first actuator frame 89a together with the bracket 104.

The seventh servomotor 87 (Y-axis servomotor) is installed on the Y-axis first actuator frame 89c, and an axis thereof is coupled to the Y-axis first actuator 88a. The Y-axis first actuator 88a includes a screw portion and a guide portion (not shown). When the shaft of the seventh servomotor 87 rotates in the clockwise direction, the screw portion of the Y-axis first actuator 88a rotates in the clockwise direction. When the screw portion rotates in the counterclockwise direction, the first bend-breaking jig 84a of the first bend-breaking device 75a moves toward one side in the width direction along the Y-axis first actuator frame 89c together with the bracket 104. When the shaft of the seventh servomotor 87 rotates in the counterclockwise direction, the screw portion of the Y-axis first actuator 88a rotates in the counterclockwise direction. When the screw portion rotates in the counterclockwise direction, the first bend-breaking jig 84a of the first bend-breaking device 75a moves toward the other side in the width direction along the Y-axis first actuator frame 89c together with the bracket 104.

A control unit that controls start/stop, rotation number, and rotation speed of each of the sixth and seventh servomotors 85 and 87 is connected to the controller via an interface (wired or wireless) (not shown). The control unit of the sixth servomotor 85 drives the sixth servomotor 85 at a predetermined rotation number and rotation speed when receiving the drive signal from the controller, and stops the drive of the sixth servomotor 85 when receiving the stop signal from the controller. The control unit of the seventh servomotor 87 drives the seventh servomotor 87 at a predetermined rotation number and rotation speed when receiving the drive signal from the controller, and stops the drive of the seventh servomotor 87 when receiving the stop signal from the controller.

The eighth servomotor 90 (X-axis servomotor) is installed on the X-axis second actuator frame 89b, and an axis thereof is coupled to the X-axis second actuator 86b. The X-axis second actuator 86b includes a screw portion and a guide portion (not shown). When the shaft of the eighth servomotor 90 rotates in the clockwise direction, the screw portion of the X-axis second actuator 86b rotates in the clockwise direction. When the screw portion rotates in the counterclockwise direction, the second bend-breaking jig 84b of the second bend-breaking device 75b moves forward in the front-rear direction along the X-axis second actuator frame 89b together with the bracket 104. When the shaft of the eighth servomotor 90 rotates in the counterclockwise direction, the screw portion of the X-axis second actuator 86b rotates in the counterclockwise direction. When the screw portion rotates in the counterclockwise direction, the second bend-breaking jig 84b of the second bend-breaking device 75b moves rearward in the front-rear direction along the X-axis second actuator frame 89b together with the bracket 104.

The ninth servomotor 91 (Y-axis servomotor) is installed on the Y-axis second actuator frame 89d, and an axis thereof is coupled to the Y-axis second actuator 88b. The Y-axis second actuator 88b includes a screw portion and a guide portion (not shown). When the shaft of the ninth servomotor 91 rotates in the clockwise direction, the screw portion of the Y-axis second actuator 88b rotates in the clockwise direction. When the screw portion rotates in the counterclockwise direction, the second bend-breaking jig 84b of the second bend-breaking device 75b moves toward one side in the width direction along the second actuator frame 89d together with the bracket 104. When the shaft of the ninth servomotor 91 rotates in the counterclockwise direction, the screw portion of the Y-axis second actuator 88b rotates in the counterclockwise direction. When the screw portion rotates in the counterclockwise direction, the second bend-breaking jig 84b of the second bend-breaking device 75b moves toward the other side in the width direction along the second actuator frame 89d together with the bracket 104.

A control unit that controls start/stop, rotation number, and rotation speed of each of the eighth and ninth servomotors 90 and 91 is connected to the controller via an interface (wired or wireless) (not shown). The control unit of the eighth servomotor 90 drives the eighth servomotor 90 at a predetermined rotation number and rotation speed when receiving the drive signal from the controller, and stops the drive of the eighth servomotor 90 when receiving the stop signal from the controller. The control unit of the ninth servomotor 91 drives the ninth servomotor 91 at a predetermined rotation number and rotation speed when receiving the drive signal from the controller, and stops the drive of the ninth servomotor 91 when receiving the stop signal from the controller.

Fig. 22 is a top view of the bend-breaking processing table 74 in which the support device 76 is exposed, and Fig. 23 is a front view of the bend-breaking processing table 74 in which the support device 76 is viewed from the front. The support device 76 includes two first support device 76a and second support device 76b separated from each other in the width direction. The first and second support devices 76a and 76b are coupled to a guide frame 107.

The first support device 76a includes a first support member 108a and a second support member 108b, a second support member raising/lowering mechanism 109 (fourth raising/lowering mechanism) that raises and lowers the second support member 108b in the up-down direction, a tenth servomotor 110 (X-axis servomotor) and an X-axis third actuator 111a, an eleventh servomotor 112 (Y-axis servomotor) and a Y-axis third actuator 113a, and an X-axis third actuator frame 114a and a Y-axis third actuator frame 114c.

The second support device 76b includes a first support member 108a and a second support member 108b, a second support member raising/lowering mechanism 109 (fourth raising/lowering mechanism) that raises and lowers the second support member 108b in the up-down direction, a twelfth servomotor 115 (X-axis servomotor) and an X-axis fourth actuator 111b, a thirteenth servomotor 116 (Y-axis servomotor) and a Y-axis fourth actuator 113b, and an X-axis fourth actuator frame 114b and a Y-axis fourth actuator frame 114d.

The first support member 108a is located radially inward of the second support member 108b and has a first support surface 117a having a predetermined area for supporting the lower surface 13 of each of the glass plates 11a and 11b. The first support surface 117a is formed in a flat perfect circle shape. The second support member 108b is located radially outward of the first support member 108a and has a second support surface 117b having a predetermined area for supporting the lower surface 13 of each of the glass plates 11a and 11b. The second support surface 117b is formed in a flat annular shape surrounding the first support member 108a (first support surface 117a).

The second support member raising/lowering mechanism 109 (fourth raising/lowering mechanism) is located immediately below the second support member 108b, and is fixed to the guide frame 107 by a fixing member. An air cylinder is used for the second support member raising/lowering mechanism 109. The second support member raising/lowering mechanism 109 (air cylinder) raises and lowers (moves up and down) the second support member 108b of each of the first and second support devices 76a and 76b in the up-down direction (Z-axis direction). The second support member raising/lowering mechanism 109 (fourth raising/lowering mechanism) lowers the second support member 96b from the lower surface 13 of each of the glass plates 11a and 11b at the time of bend-breaking the edge portion 56b of each of the glass plates 11a and 11b, and forms a gap (a step between the first support surface 117a and the second support surface 117b) between the lower surface 13 of each of the glass plates 11a and 11b and the second support surface 117b. A lowering dimension of the second support member 108b is set in advance.

A control unit that controls start/stop of the second support member raising/lowering mechanism 109 (fourth raising/lowering mechanism) is connected to the controller via an interface (wired or wireless) (not shown). When receiving the raising/lowering signal from the controller, the control unit of the second support member raising/lowering mechanism 109 raises and lowers the second support member 108b using the second support member raising/lowering mechanism 109 (air cylinder).

The tenth servomotor 110 (X-axis servomotor) is installed on the X-axis third actuator frame 114a, and an axis thereof is coupled to the X-axis third actuator 111a. The X-axis third actuator 111a includes a screw portion and a guide portion (not shown). When the shaft of the tenth servomotor 110 rotates in the clockwise direction, the screw portion of the X-axis third actuator 111a rotates in the clockwise direction. When the screw portion rotates in the counterclockwise direction, the first support device 76a moves forward in the front-rear direction along the X-axis third actuator frame 114a together with the guide frame 107. When the shaft of the tenth servomotor 110 rotates in the counterclockwise direction, the screw portion of the X-axis third actuator 111a rotates in the counterclockwise direction. When the screw portion rotates in the counterclockwise direction, the first support device 76a moves rearward in the front-rear direction along the X-axis third actuator frame 114a together with the guide frame 107.

The eleventh servomotor 112 (Y-axis servomotor) is installed on the Y-axis third actuator frame 114c, and an axis thereof is coupled to the Y-axis third actuator 113a. The Y-axis third actuator 113a includes a screw portion and a guide portion (not shown). When the shaft of the eleventh servomotor 112 rotates in the clockwise direction, the screw portion of the Y-axis third actuator 113a rotates in the clockwise direction. When the screw portion rotates in the counterclockwise direction, the first support device 76a moves toward one side in the width direction along the Y-axis third actuator frame 114c together with the guide frame 107. When the shaft of the eleventh servomotor 111 rotates in the counterclockwise direction, the screw portion of the Y-axis third actuator 113a rotates in the counterclockwise direction. When the screw portion rotates in the counterclockwise direction, the first support device 76a moves toward the other side in the width direction along the Y-axis third actuator frame 114c together with the guide frame 107. The first support device 76a moves in the front-rear direction and the width direction (horizontal direction) in synchronization with the first bend-breaking device 75a (first bend-breaking jig 84a).

A control unit that controls start/stop, rotation number, and rotation speed of each of the tenth and eleventh servomotors 110 and 112 is connected to the controller via an interface (wired or wireless) (not shown). The control unit of the tenth servomotor 110 drives the tenth servomotor 110 at a predetermined rotation number and rotation speed when receiving the drive signal from the controller, and stops the drive of the tenth servomotor 110 when receiving the stop signal from the controller. The control unit of the eleventh servomotor 112 drives the eleventh servomotor 112 at a predetermined rotation number and rotation speed when receiving the drive signal from the controller, and stops the drive of the eleventh servomotor 112 when receiving the stop signal from the controller.

The twelfth servomotor 115 (X-axis servomotor) is installed on the X-axis fourth actuator frame 114b, and an axis thereof is coupled to the X-axis fourth actuator 111b. The X-axis fourth actuator 111b includes a screw portion and a guide portion (not shown). When the shaft of the twelfth servomotor 115 rotates in the clockwise direction, the screw portion of the X-axis fourth actuator 111b rotates in the clockwise direction. When the screw portion rotates in the counterclockwise direction, the second support device 76b moves forward in the front-rear direction along the X-axis fourth actuator frame 114b together with the guide frame 107. When the shaft of the twelfth servomotor 115 rotates in the counterclockwise direction, the screw portion of the X-axis fourth actuator 111b rotates in the counterclockwise direction. When the screw portion rotates in the counterclockwise direction, the second support device 76b moves rearward in the front-rear direction along the X-axis fourth actuator frame 114b together with the guide frame 107.

The thirteenth servomotor 116 (Y-axis servomotor) is installed on the Y-axis fourth actuator frame 114d, and an axis thereof is coupled to the Y-axis fourth actuator 113b. The Y-axis fourth actuator 113b includes a screw portion and a guide portion (not shown). When the shaft of the thirteenth servomotor 116 rotates in the clockwise direction, the screw portion of the Y-axis fourth actuator 113b rotates in the clockwise direction. When the screw portion rotates in the counterclockwise direction, the second support device 76b moves toward one side in the width direction along the Y-axis fourth actuator frame 114d together with the guide frame 107. When the shaft of the thirteenth servomotor 116 rotates in the counterclockwise direction, the screw portion of the Y-axis fourth actuator 113b rotates in the counterclockwise direction. When the screw portion rotates in the counterclockwise direction, the second support device 76b moves toward the other side in the width direction along the Y-axis fourth actuator frame 114d together with the guide frame 107. The second support device 76b moves in the front-rear direction and the width direction (horizontal direction) in synchronization with the second bend-breaking device 75b (second bend-breaking jig 84b).

A control unit that controls start/stop, rotation number, and rotation speed of each of the twelfth and thirteenth servomotors 115 and 116 is connected to the controller via an interface (wired or wireless) (not shown). The control unit of the twelfth servomotor 115 drives the twelfth servomotor 115 at a predetermined rotation number and rotation speed when receiving the drive signal from the controller, and stops the drive of the twelfth servomotor 115 when receiving the stop signal from the controller. The control unit of the thirteenth servomotor 116 drives the thirteenth servomotor 116 at a predetermined rotation number and rotation speed when receiving the drive signal from the controller, and stops the drive of the thirteenth servomotor 116 when receiving the stop signal from the controller.

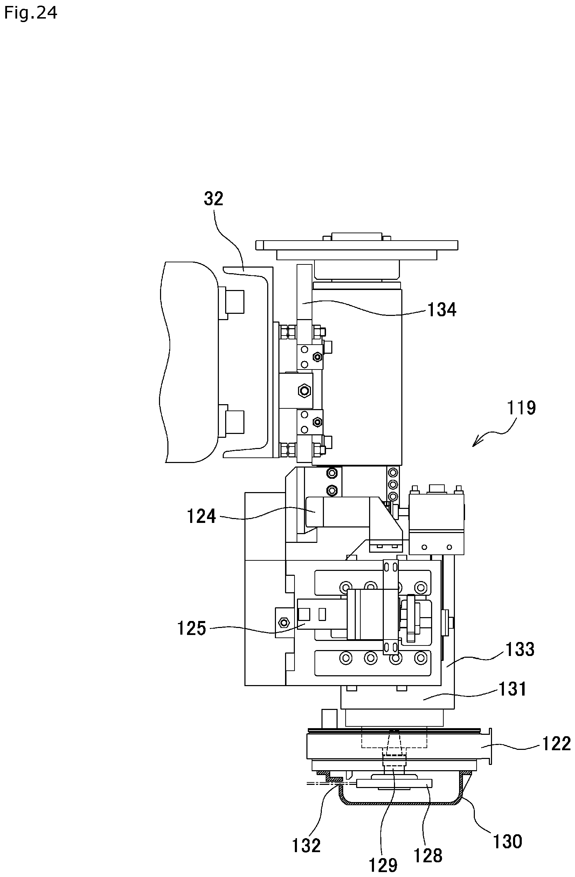

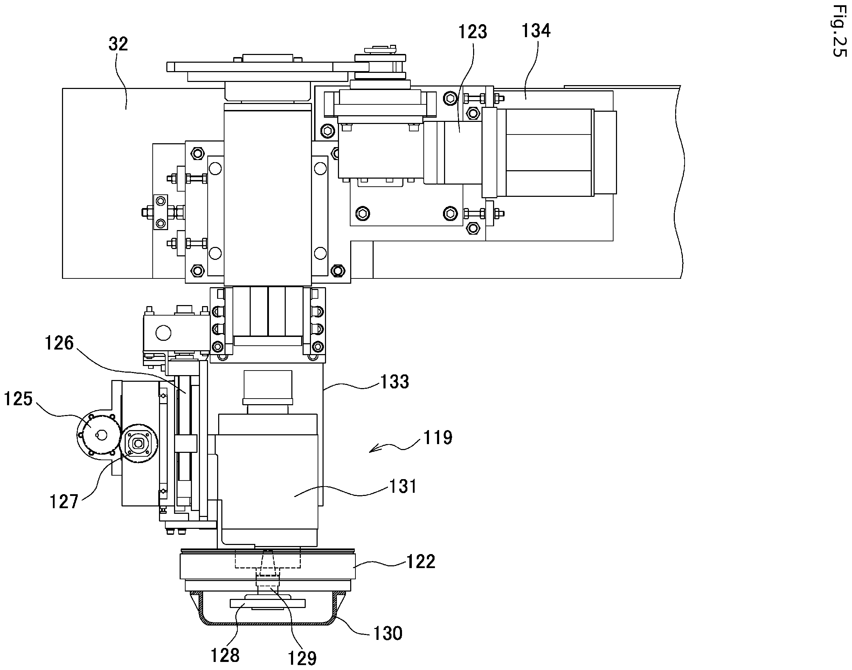

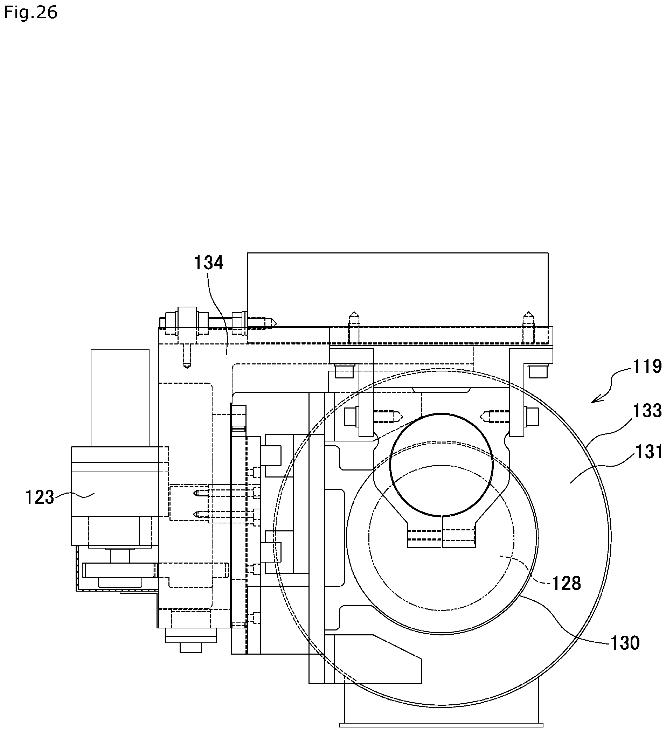

Fig. 24 is a front view of the grinding device 119 shown as an example installed in the grinding processing area 22, and Fig. 25 is a side view of the grinding device 119. Fig. 26 is a top view of the grinding device 119. The grinding processing area 22 includes the grinding processing table 118 (grinding processing table) on which the glass plates 11a and 11b positioned in the loading area 19 and subjected to cutting processing in the cutting processing area 20 and bend-breaking processing in the bend-breaking processing area 21 are placed, and the grinding device 119 that grinds the edge (peripheral edge) of the main body portion 56a of each of the glass plates 11a and 11b placed on the grinding processing table 118.

The grinding processing table 118 is installed on a base lane 57b elongated in the width direction fixed to the floor surface of the system stand 25 (see Fig. 7). The grinding processing table 118 includes a plurality of suction pads 120 that suck and hold the glass plates 11a and 11b, and a vacuum mechanism (air suction device) (air vacuum pump) (not shown) that gives a suction force to the suction pads 120 by setting the suction pads 120 to a negative pressure. A control unit that controls start/stop of the vacuum mechanism is connected to the controller via an interface (wired or wireless) (not shown).

The grinding processing table 118 uses the second moving mechanism 58b to move in the width direction in a state where the positioned glass plates 11a and 11b are placed. The second moving mechanism 58b includes a traveling guide rail 59b, a feed screw 60b (ball screw), a fourteenth servomotor 121, guide shoes 62b, and a slide block 63b (housing nut). The traveling guide rail 59b is installed on the upper surface of the base lane 57b and extends in the width direction. The feed screw 60b (ball screw) is installed on the upper surface of the base lane 57b and on the side of the traveling guide rail 59b, and extends in the width direction. The fourteenth servomotor 121 is installed on the base lane 57b and reciprocates the grinding processing table 118 in the width direction. The other end portion of the feed screw 60b is coupled to the shaft of the fourteenth servomotor 121.

A control unit that controls start/stop, rotation number, and rotation speed of the fourteenth servomotor 121 is connected to the controller via an interface (wired or wireless) (not shown). The control unit of the fourteenth servomotor 121 drives the fourteenth servomotor 121 at a predetermined rotation number and rotation speed when receiving the drive signal from the controller, and stops the drive of the fourteenth servomotor 121 when receiving the stop signal from the controller.

The feed screw 60b is rotatably supported by a bearing (not shown) fixed to the base lane 57b**.** The guide shoes 62b are attached to the lower surface of the grinding processing table 118 and extend in the width direction. The guide shoe 62b is slidably fitted to the traveling guide rail 59b**.** The slide block 63b (housing nut) is attached to the lower surface of the grinding processing table 118 and between the guide shoes 62b**.** The slide block 63b is rotatably screwed to the feed screw 60b**.**

When the shaft of the fourteenth servomotor 121 rotates in the clockwise direction, the feed screw 60b rotates in the clockwise direction, the rotation of the feed screw 60b in the clockwise direction causes the slide block 63b to move the feed screw 60b in the width direction from the other side edge portion 48b toward the one side edge portion 48a in the grinding processing area 22, and the movement of the slide block 63b causes the grinding processing table 118 to move in the width direction from the other side edge portion 48b toward the one side edge portion 48a in the grinding processing area 22. When the shaft of the fourteenth servomotor 121 rotates in the counterclockwise direction, the feed screw 60b rotates in the counterclockwise direction, the rotation of the feed screw 60b in the counterclockwise direction causes the slide block 63b to move the feed screw 60b in the width direction from the one side edge portion 48a toward the other side edge portion 48b in the grinding processing area 22, and the movement of the slide block 63b causes the grinding processing table 118 to move in the width direction from the one side edge portion 48a toward the other side edge portion 48b in the grinding processing area 22.

Note that the fourteenth servomotor 121 is driven in synchronization with the fourth servomotor 61 in the cutting processing area 20, and the grinding processing table 118 moves from the other side edge portion 48b to the one side edge portion 48a in the grinding processing area 22 in synchronization with the movement of the cutting processing table 54 from the other side edge portion 48b to the one side edge portion 48a in the cutting processing area 20, or the grinding processing table 118 moves from the one side edge portion 48a to the other side edge portion 48b in the cutting processing area 20 in synchronization with the movement of the cutting processing table 54 from the one side edge portion 48a to the other side edge portion 48b in the grinding processing area 22. The control unit of the fourteenth servomotor 121 drives the fourteenth servomotor 121 at a predetermined rotation number and rotation speed when receiving the drive signal from the controller, and stops the drive of the fourteenth servomotor 121 when receiving the stop signal from the controller.

The grinding device 119 includes a grinding jig 122, a fifteenth servomotor 123 (grinding Z-axis servomotor), a sixteenth servomotor 124 (raising/lowering servomotor), a seventeenth servomotor 125 (cutting servomotor), a grinding wheel raising/lowering screw 126, and a grinding wheel cutting screw 127. The grinding jig 122 includes a grinding wheel 128, a grinding holder 129, a cover 130, and a spindle motor 131. The grinding wheel 128 is formed in a disk shape having a predetermined diameter, and grinds an edge (peripheral edge) of the main body portion 56a of each of the glass plates 11a and 1b by an outer peripheral surface thereof.

The grinding holder 129 is located immediately above the grinding wheel 128 and rotatably supports the grinding wheel 128. The cover 130 is located immediately below the grinding wheel 128 and covers the entire grinding wheel 128. The cover 130 is detachably attached to the grinding jig 122. In the cover 130, a slit 132 into which the edge (peripheral edge) of the main body portion 56a of each of the glass plates 11a and 11b is inserted is formed. The spindle motor 131 is located immediately above the grinding wheel 128 (grinding holder 129), and is installed and housed in the motor housing 133. The spindle motor 131 has an axis coupled to the center of the grinding wheel 128. The rotation of the shaft of the spindle motor 131 rotates the grinding wheel 128.

The motor housing 133 is fixed to the traveling frame 32 via a bracket 134. A control unit that controls start/stop, rotation number, and rotation speed of the spindle motor 131 is connected to the controller via an interface (wired or wireless) (not shown). The control unit of the spindle motor 131 drives the spindle motor 131 at a predetermined rotation number and rotation speed when receiving the drive signal from the controller, and stops the drive of the spindle motor 131 when receiving the stop signal from the controller.

The fifteenth servomotor 123 (grinding Z-axis servomotor) is located in the vicinity of the rear of the grinding jig 122, and is coupled and fixed to the traveling frame 32 via the bracket 134. The shaft of the fifteenth servomotor 123 is coupled to a support shaft of the motor housing 133. The fifteenth servomotor 123 finely adjusts the posture (angle around the axis) of the grinding wheel 128 in the axial direction such that the outer peripheral surface of the grinding wheel 128 abuts on the edge (peripheral edge) of the main body portion 56a of each of the glass plates 11a and 11b in parallel.

The sixteenth servomotor 124 (raising/lowering servomotor) is located in the vicinity of the outer side in the width direction of the motor housing 133 (spindle motor 131), and is coupled and fixed to the motor housing 133. The shaft of the sixteenth servomotor 124 is coupled to the grinding wheel raising/lowering screw 126, and rotates the grinding wheel raising/lowering screw 126. The sixteenth servomotor 124 moves the grinding wheel 128 (motor housing 133) up and down according to the thickness dimensions of the glass plates 11a and 11b, and finely adjusts the height of the grinding wheel 128 such that the height of the grinding wheel 128 matches the height of the edge of the main body portion 56a of each of the glass plates 11a and 11b and the outer peripheral surface of the grinding wheel 128 abuts on the edge of the main body portion 56a of each of the glass plates 11a and 11b.

In the initial setting for starting processing of the glass plates 11a and 11b, a distance from an attachment reference surface of the grinding wheel 128 to the center of the groove is input to the controller. The controller calculates the rotation number of the shaft of the sixteenth servomotor 124 based on the input distance, and transmits the calculated rotation number to a control unit of the sixteenth servomotor 124. The control unit of the sixteenth servomotor 124 rotates the shaft of the sixteenth servomotor 124 at the rotation number received from the controller. When the shaft of the sixteenth servomotor 124 rotates in the clockwise direction at a predetermined rotation number, the grinding wheel raising/lowering screw 126 rotates in the clockwise direction and the screw 126 lowers, whereby the grinding wheel 128 (motor housing 133) lowers. When the shaft of the sixteenth servomotor 124 rotates in the counterclockwise direction at a predetermined rotation number, the grinding wheel raising/lowering screw 126 rotates in the counterclockwise direction and the screw 126 raises, whereby the grinding wheel 128 (motor housing 133) raises. As long as the thickness dimensions of the glass plates 11a and 11b to be processed are the same, once fine adjustment of the height of the grinding wheel 128 is set, no subsequent adjustment is performed.

The seventeenth servomotor 125 (cutting servomotor) is located immediately below the sixteenth servomotor 124 (raising/lowering servomotor) and in the vicinity of the outer side in the width direction of the motor housing 133 (spindle motor 131), and is coupled and fixed to the motor housing 133. The shaft of the seventeenth servomotor 125 is coupled to the grinding wheel cutting screw 127, and rotates the grinding wheel cutting screw 127. The seventeenth servomotor 125 moves the grinding wheel 128 (motor housing 133) in the width direction according to the outer peripheral surface diameter of the grinding wheel 128, and finely adjusts the cutting depth of the grinding wheel 128 such that the outer peripheral surface of the grinding wheel 128 abuts on the edge (peripheral edge) of the main body portion 56a of each of the glass plates 11a and 11b.

A control unit that controls start/stop, rotation number, and rotation speed of each of the fifteenth to seventeenth servomotors 123 to 125 is connected to the controller via an interface (wired or wireless) (not shown). The control unit of the fifteenth servomotor 123 drives the fifteenth servomotor 123 at a predetermined rotation number and rotation speed when receiving the drive signal from the controller, and stops the drive of the fifteenth servomotor 123 when receiving the stop signal from the controller. The control unit of the sixteenth servomotor 124 drives the sixteenth servomotor 124 at a predetermined rotation number and rotation speed when receiving the drive signal from the controller, and stops the drive of the sixteenth servomotor 124 when receiving the stop signal from the controller. The control unit of the seventeenth servomotor 125 drives the seventeenth servomotor 125 at a predetermined rotation number and rotation speed when receiving the drive signal from the controller, and stops the drive of the seventeenth servomotor 125 when receiving the stop signal from the controller.

In the initial setting for starting processing of the glass plates 11a and 11b, the diameter of the grinding wheel 128 is input to the controller. The controller calculates the rotation number of the shaft of the seventeenth servomotor 125 based on the input diameter of the grinding wheel 128, and transmits the calculated rotation number to the control unit of the seventeenth servomotor 125. The control unit of the seventeenth servomotor 125 rotates the shaft of the seventeenth servomotor 125 at the rotation number received from the controller. When the shaft of the seventeenth servomotor 125 rotates in the clockwise direction at a predetermined rotation number, the grinding wheel cutting screw 127 rotates in the clockwise direction and the screw 127 moves rearward in the front-rear direction, whereby the grinding wheel 128 (motor housing 133) moves rearward in the front-rear direction. When the shaft of the seventeenth servomotor 125 rotates in the counterclockwise direction at a predetermined rotation number, the grinding wheel cutting screw 127 rotates in the counterclockwise direction and the screw 127 moves forward in the front-rear direction, whereby the grinding wheel 128 (motor housing 133) moves forward in the front-rear direction. As long as the diameter of the grinding wheel 128 is the same, once fine adjustment of the position of the grinding wheel 128 in the front-rear direction is set, no subsequent adjustment is performed.

In the unloading area 23, unloading conveyors 135 are installed. The unloading area 23 is supported by legs extending upward from the floor surface of the system stand 25. The unloading conveyors 135 are a plurality of endless tracks extending in the front-rear direction (X direction), and are arranged and separated from each other at a predetermined interval in the width direction (Y direction). A control unit that controls start/stop and a conveyance distance of the unloading conveyor 135 is connected to the controller via an interface (wired or wireless) (not shown). The unloading conveyor 135 conveys the glass plates 11a and 11b from the rear side to the front side in the front-rear direction from the rear end portion (loading port) toward the front end portion (unloading port) of the unloading area 135.

Hereinafter, an example of processing (cutting processing, bend-breaking processing, grinding processing) of the glass plates 11a and 11b will be described. At the start of processing, the glass plate first holder 40a stands by above the loading area 19, the glass plate second holder 40b stands by above the cutting processing area 20, the glass plate third holder 40c stands by above the bend-breaking processing area 21, and the glass plate fourth holder 40d stands by above the grinding processing area 22.

A plurality of various glass plate images are output (displayed) on a monitor, a display, or a touch panel (output device) connected to the controller. The specific glass plates 11a and 11b to be processed are clicked (tapped) (selected) from the plurality of various glass plate images output (displayed) to the output device. When the specific glass plates 11a and 11b are selected, the controller selects an NC control program for processing to be performed on the glass plates 11a and 11b. The controller outputs (displays) an input area of the distance from the attachment reference surface of the grinding wheel 128 to the center of the groove, a dimension input area of the glass plates 11a and 11b in the front-rear direction, and a diameter input area of the grinding wheel 128 to the output device.

After inputting the distance in the input area of the distance from the attachment reference surface of the grinding wheel 128 to the center of the groove and inputting the diameter in the diameter input area of the grinding wheel 128, the input button output (displayed) to the output device is clicked (tapped). When the distance and the diameter are input, the controller drives the sixteenth servomotor 124 to move the grinding wheel 128 (motor housing 133) up and down to finely adjust the height of the grinding wheel 128, and drives the seventeenth servomotor 125 to move the grinding wheel 128 (motor housing 133) in the width direction to finely adjust the position of the grinding wheel 128 in the front-rear direction. After the fine adjustment is completed, the controller outputs (displays) the processing start button to the output device. When the processing start button is clicked (tapped), processing of the glass plates 11a and 11b is started.

The selected glass plates 11a and 11b to be processed (before processing) are loaded in the loading area 19. In the loading area 19, the first positioning means (first positioning step) and the second positioning means (second positioning step) are performed. The glass plates 11a and 11b to be processed are automatically supplied to the loading conveyor 43 in the loading area 19 by an automatic supply device (not shown). In the automatic supply device, a plurality of glass plates 11a and 11b to be processed having the same areas (same size) of the upper surface 12 and the lower surface 13 are stacked in the up-down direction, and the glass plates 11a and 11b are supplied from the automatic supply device to the loading conveyor 43 one by one.

An example of a procedure of positioning the glass plates 11a and 11b in the loading area 19 is as follows. The controller transmits a conveyance signal (ON signal) to the control unit of the loading conveyor 43, and the control unit of the loading conveyor 43 that has received the forward movement signal (ON signal) drives the loading conveyor 43. The glass plates 11a and 11b loaded in the loading area 19 are placed on the loading conveyor 43 in a state where the lower surfaces 13 thereof abut on the loading conveyor 43. In the glass plates 11a and 11b, the first side edge 14 (one side edge 14) (including a case where the side edge 14 is curved (draws a curve)) is parallel to the one side edge portion 48a in the loading area 19, and the other side edge 15 is parallel to the other side edge portion 48b in the loading area 19.

The glass plates 11a and 11b placed on the loading conveyor 43 are gradually moved forward in the front-rear direction from the rear side toward the front side of the loading area 19 by the loading conveyor 43. When the glass plates 11a and 11b move from the rear side toward the front side of the loading area 19 and the front end edge 16 of each of the glass plates 11a and 11b abuts on the stopper 44, the contact sensor installed on the stopper 44 detects the abutment of the front end edge 16 of each of the glass plates 11a and 11b on the stopper 44, and transmits a contact (abutment) signal to the controller.

The controller that has received the contact signal transmits a stop signal (OFF signal) to the control unit of the loading conveyor 43, and the control unit of the loading conveyor 43 that has received the stop signal (OFF signal) stops drive of the loading conveyor 43. Next, the controller transmits, to the control unit of the loading conveyor 43, the second moving dimension of the loading conveyor 43 to the rear side in the front-rear direction for positioning the front-rear direction center O (center line L2 extending in the width direction by dividing the dimension of each of the glass plates 11a and 11b in the front-rear direction by 2) of the first side edge 14 of each of the glass plates 11a and 11b at the positioning second reference L2 (virtual positioning second reference line) in the loading area 19, and transmits a rearward movement signal (ON signal) to the control unit of the loading conveyor 43.

The control unit of the loading conveyor 43 that has received the second moving dimension and the rearward movement signal (ON signal) drives the loading conveyor 43 to move the glass plates 11a and 11b rearward in the front-rear direction by the second moving dimension by the loading conveyor 43. When the loading conveyor 43 moves the glass plates 11a and 11b rearward in the front-rear direction by the second moving dimension, the front-rear direction center O1 (center line L2 of each of the glass plates 11a and 11b) of one side edge in the width direction of the glass plates 11a and 11b is located at the positioning second reference L2 (virtual positioning second reference line) in the loading area 19 (second positioning means (second positioning step)).

After moving the glass plates 11a and 11b rearward in the front-rear direction by the second moving dimension, the controller transmits a stop signal (OFF signal) to the control unit of the loading conveyor 43, and the control unit of the loading conveyor 43 that has received the stop signal (OFF signal) stops drive of the loading conveyor 43. Next, the controller transmits a raising signal (ON signal) to the control unit of the roller raising/lowering mechanism 46 (air cylinder). The control unit of the roller raising/lowering mechanism 46 that has received the raising signal (ON signal) raises the roller raising/lowering mechanism 46 (air cylinder). The rollers 45 are raised by raising of the roller raising/lowering mechanism 46, a part of the peripheral edge portion of each of the rollers 45 is exposed to the upper side of the loading conveyor 43, and in a state where the raised rollers 45 abut on the lower surface 13 of each of the glass plates 11a and 11b, the rollers 45 lift the glass plates 11a and 11b to the upper side of the loading conveyor 43.

After the raising of the roller raising/lowering mechanism 46 (air cylinder) is completed, the controller transmits the rotation number of the third servomotor 51 calculated from the first moving dimension (first moving distance) in the width direction of the moving mechanism 47 for positioning the first side edge 14 of each of the glass plates 11a and 11b to the positioning first reference L1 (virtual positioning first reference line) to the control unit of the third servomotor 51, and transmits a forward rotation signal (ON signal) to the control unit of the third servomotor 51. The control unit that has received the rotation number of the third servomotor 51 and the positive rotation signal (ON signal) drives the third servomotor 51 to rotate the shaft of the third servomotor 51 in the clockwise direction by a predetermined rotation number.

The rotation of the feed screw by the rotation of the shaft of the third servomotor 51 in the clockwise direction gradually moves the abutment member 53 from the movement start point to one side in the width direction together with the moving arm 52. The abutment member 53 moving toward one side in the width direction abuts on the second side edge 15 (other side edge) of each of the glass plates 11a and 11b, and the abutment member 53 presses the second side portion 15 of each of the glass plates 11a and 11b in the width direction so as to move the glass plates 11a and 11b from the other side to the one side in the width direction. The glass plates 11a and 11b pressed by the abutment member 53 move in the width direction from the other side toward one side in the width direction on the rollers 45, and the outermost side edge located on the outermost side in the width direction in the first side edge 14 in the width direction of each of the glass plates 11a and 11b is positioned at the positioning first reference L1 (virtual positioning first reference line) in the loading area 19 (first positioning means (first positioning step)).

When the movement of the abutment member 53 toward one side in the width direction is finished and the outermost side edge located on the outermost side in the width direction in the first side edge 14 in the width direction of each of the glass plates 11a and 11b is positioned at the positioning first reference L1 in the loading area 19, the controller transmits a stop signal (OFF signal) to the control unit of the third servomotor 51. The control unit of the third servomotor 51 that has received the stop signal (OFF signal) stops drive of the third servomotor 51. After the third servomotor 51 stops being driven, the controller transmits a reverse rotation signal (ON signal) to the control unit of the third servomotor 51. The control unit of the third servomotor 51 that has received the reverse rotation signal (ON signal) drives the third servomotor 51 to rotate the shaft of the third servomotor 51 in the counterclockwise direction by a predetermined rotation number.

The rotation of the feed screw by the rotation of the shaft of the third servomotor 51 in the counterclockwise direction gradually moves the abutment member 53 to the other side in the width direction together with the moving arm 52, and the abutment member 53 returns to the movement start point. After the abutment member 53 returns to the movement start point, the controller transmits a stop signal (OFF signal) to the control unit of the third servomotor 51, and transmits a lowering signal (ON signal) to the control unit of the roller raising/lowering mechanism 46 (air cylinder). The control unit of the third servomotor 51 that has received the stop signal (OFF signal) stops drive of the third servomotor 51, and the control unit of the roller raising/lowering mechanism 46 that has received the lowering signal (ON signal) lowers the roller raising/lowering mechanism 46 (air cylinder). When the roller raising/lowering mechanism 46 lowers, the lower surface 13 of each of the glass plates 11a and 11b positioned by the first positioning means (first positioning step) and the second positioning means (second positioning step) abuts on the conveying conveyor 43.

In the bend-breaking system 10a and the bend-breaking processing method (glass plate processing system 10), after the glass plates 11a and 11b are moved from the rear side to the front side in the loading area 19 by the loading conveyor 43 and the front end edge 16 of each of the glass plates 11a and 11b abuts on the stopper 44, the glass plates 11a and 11b are moved to the rear side in the front-rear direction by the loading conveyor 43, so that the front-rear direction center O1 (center line L2 of each of the glass plates 11a and 11b) of the first side edge 14 in the width direction of each of the glass plates 11a and 11b is positioned at the positioning second reference L2 in the loading area 19, after the front-rear direction center O1 (center line L2 of each of the glass plates 11a and 11b) of one side edge 14 in the width direction of each of the glass plates 11a and 11b is positioned at the positioning second reference L2 by the second positioning means (second positioning step), the glass plates 11a and 11b are raised by the roller raising/lowering mechanism 46 (air cylinder) together with the rollers 45, and the second side edge 15 of each of the raised glass plates 11a and 11b is pressed and moved in the width direction by the moving mechanism 47 to position the outermost side edge located on the outermost side in the width direction in the first side edge 14 in the width direction of each of the glass plates 11a and 11b at the positioning first reference L1 in the loading area 19. Therefore, the front-rear direction center O1 (center line L2 of the glass plate 11b) of the first side edge 14 extending in the front-rear direction on one side in the width direction of the glass plate 11b in which the areas of the upper and lower surfaces 12 and 13 are different to be processed later can be accurately positioned (matched) at the position of the front-rear direction center O1 (center line L2 of the glass plate 11a) of the first side edge 14 extending in the front-rear direction on one side in the width direction of the glass plate 11a to be processed first, and the outermost side edge in the first side edge 14 extending in the front-rear direction on one side in the width direction of the glass plate 11b having a different size in which the areas of the upper surface 12 and the lower surface 12 are different to be processed later can be accurately positioned (matched) at the position of the outermost side edge in the first side edge 14 extending in the front-rear direction on one side in the width direction of the glass plate 11a to be processed first.

Another example of the procedure of positioning the glass plates 11a and 11b in the loading area 19 is as follows. The controller transmits an advance signal (ON signal) to the control unit of the loading conveyor 43, and the control unit of the loading conveyor 43 that has received the forward movement signal (ON signal) drives the loading conveyor 43. The glass plates 11a and 11b loaded in the loading area 19 are placed on the loading conveyor 43 in a state where the lower surfaces 13 thereof abut on the loading conveyor 43. The glass plates 11a and 11b placed on the loading conveyor 43 are gradually moved forward in the front-rear direction from the rear side (start position) to the front side of the loading area 19 by the loading conveyor 43. When the glass plates 11a and 11b move from the rear side toward the front side of the loading area 19 and the front end edge 16 of each of the glass plates 11a and 11b abuts on the stopper 44, the contact sensor installed on the stopper 44 detects the abutment of the front end edge 16 of each of the glass plates 11a and 11b on the stopper 44, and transmits a contact signal to the controller.

The controller that has received the contact signal transmits a stop signal (OFF signal) to the control unit of the loading conveyor 43, and the control unit of the loading conveyor 43 that has received the stop signal (OFF signal) stops drive of the loading conveyor 48. Next, the controller transmits a raising signal (ON signal) to the control unit of the roller raising/lowering mechanism 46 (air cylinder). The control unit of the roller raising/lowering mechanism 46 that has received the raising signal (ON signal) raises the roller raising/lowering mechanism 46 (air cylinder). The rollers 45 are raised by raising of the roller raising/lowering mechanism 46, a part of the peripheral edge portion of each of the rollers 45 is exposed to the upper side of the loading conveyor 43, and in a state where the raised rollers 45 abut on the lower surface 13 of each of the glass plates 11a and 11b, the rollers 45 lift the glass plates 11a and 11b to the upper side of the loading conveyor 43.

After the raising of the roller raising/lowering mechanism 46 (air cylinder) is completed, the controller transmits the rotation number of the third servomotor 51 calculated from the first moving dimension (first moving distance) in the width direction of the moving mechanism 47 for positioning the first side edge 14 of each of the glass plates 11a and 11b to the positioning first reference L1 (virtual positioning first reference line) to the control unit of the third servomotor 51, and transmits a forward rotation signal (ON signal) to the control unit of the third servomotor 51. The control unit of the third servomotor 51 that has received the rotation number and the positive rotation signal (ON signal) drives the third servomotor 51 to rotate the shaft of the third servomotor 51 in the clockwise direction by a predetermined rotation number.

The rotation of the feed screw by the rotation of the shaft of the third servomotor 51 in the clockwise direction gradually moves the abutment member 53 from the movement start point to one side (side portion 48a in the loading area 19) in the width direction together with the moving arm 52. The abutment member 53 moving toward one side in the width direction abuts on the second side edge 15 of each of the glass plates 11a and 11b, and the abutment member 53 presses the second side edge 15 of each of the glass plates 11a and 11b in the width direction so as to move the glass plates 11a and 11b from the other side to the one side in the width direction. The glass plates 11a and 11b pressed by the abutment member 53 move in the width direction from the other side toward one side in the width direction on the rollers 45, and the outermost side edge located on the outermost side in the width direction in the first side edge 14 in the width direction of each of the glass plates 11a and 11b is positioned at the positioning first reference L1 (virtual positioning first reference line) in the loading area 19 (first positioning means (first positioning step)).

When the movement of the abutment member 53 toward one side in the width direction is finished and the first side edge 14 in the width direction of each of the glass plates 11a and 11b is positioned at the positioning first reference L1 in the loading area 19, the controller transmits a stop signal (OFF signal) to the control unit of the third servomotor 51. The control unit of the third servomotor 51 that has received the stop signal (OFF signal) stops drive of the third servomotor 51. After the third servomotor 51 stops being driven, the controller transmits a reverse rotation signal (ON signal) to the control unit of the third servomotor 51. The control unit of the third servomotor 51 that has received the reverse rotation signal (ON signal) drives the third servomotor 51 to rotate the shaft of the third servomotor 51 in the counterclockwise direction by a predetermined rotation number.

The rotation of the feed screw by the rotation of the shaft of the third servomotor 51 in the counterclockwise direction gradually moves the abutment member 53 to the other side (side portion 48b in the loading area 19) in the width direction together with the moving arm 52, and the abutment member 53 returns to the movement start point. After the abutment member 53 returns to the movement start point, the controller transmits a stop signal (OFF signal) to the control unit of the third servomotor 51, and transmits a lowering signal (ON signal) to the control unit of the roller raising/lowering mechanism 46 (air cylinder). The control unit of the third servomotor 51 that has received the stop signal (OFF signal) stops drive of the third servomotor 51, and the control unit of the roller raising/lowering mechanism 46 that has received the lowering signal (ON signal) lowers the roller raising/lowering mechanism 46 (air cylinder). When the roller raising/lowering mechanism 46 lowers, the lower surface 13 of each of the glass plates 11a and 11b abuts on the conveying conveyor 43.

After the lower surface 13 of each of the glass plates 11a and 11b abuts on the conveying conveyor 43, the controller transmits, to the control unit of the loading conveyor 43, the second moving dimension of the loading conveyor 43 to the rear side in the front-rear direction for positioning the front-rear direction center O1 of the first side edge 14 of each of the glass plates 11a and 11b at the positioning second reference L2 (virtual positioning second reference line) in the loading area 19, and transmits a conveyance signal (ON signal) to the control unit of the loading conveyor 43.

The control unit of the loading conveyor 43 that has received the second moving dimension and the conveyance signal (ON signal) drives the loading conveyor 43 to move the glass plates 11a and 11b rearward in the front-rear direction by the second moving dimension by the loading conveyor 43. When the loading conveyor 43 moves the glass plates 11a and 11b rearward in the front-rear direction by the second moving dimension, the front-rear direction center O1 (center line L2 extending in the width direction by dividing the dimension of each of the glass plates 11a and 11b in the front-rear direction by 2) of the first side edge 14 in the width direction of each of the glass plates 11a and 11b is positioned at the positioning second reference L2 (virtual positioning second reference line) in the loading area 19 (second positioning means (second positioning technician)). After moving the glass plates 11a and 11b rearward in the front-rear direction by the second moving dimension, the controller transmits a stop signal (OFF signal) to the control unit of the loading conveyor 43, and the control unit of the loading conveyor 43 that has received the stop signal (OFF signal) stops drive of the loading conveyor 43. The glass plates 11a and 11b are positioned by the first positioning means (first positioning technician) and the second positioning means (second positioning operator).

In the bend-breaking system 10a and the bend-breaking processing method (glass plate processing system 10), after the glass plates 11a and 11b are moved from the rear side to the front side in the loading area 19 by the loading conveyor 43 and the front end edge 16 of each of the glass plates 11a and 11b abuts on the stopper 44, the glass plates 11a and 11b are raised by the roller raising/lowering mechanism 46 (air cylinder) together with the rollers 45, and the second side edge 15 of each of the raised glass plates 11a and 11b are pressed and moved in the width direction by the moving mechanism 47, so that the outermost side edge located on the outermost side in the outermost side in the width direction in the first side edge 14 in the width direction of each of the glass plates 11a and 11b is positioned at the positioning first reference L1 in the loading area 19, after the outermost side edge located on the outermost side in the width direction in the first side edge 14 in the width direction of each of the glass plates 11a and 11b is positioned at the positioning first reference L1 by the first positioning means (first positioning step), the glass plates 11a and 11b are lowered by the roller raising/lowering mechanism 46 (air cylinder) together with the rollers 45, and after the glass plates 11a and 11b are moved from the rear side to the front side in the loading area 19 by the loading conveyor 43, and the front end edge 16 of each of the glass plates 11a and 11b abuts on the stopper 44, the glass plates 11a and 11b are moved to the rear side in the front-rear direction by the loading conveyor 43 to position the front-rear direction center O1 (center line L2 of each of the glass plates 11a and 11b) of the first side edge 14 in the width direction of each of the glass plates 11a and 11b at the positioning second reference L2 in the loading area 19. Therefore, the outermost side edge in the first side edge 14 extending in the front-rear direction on one side in the width direction of the glass plate 11b having a different size in which the areas of the upper surface 12 and the lower surface 13 are different to be processed later can be accurately positioned (matched) at the position of the outermost side edge in the first side edge 14 extending in the front-rear direction on one side in the width direction of the glass plate 11a to be processed first, and the front-rear direction center O1 (center line L2 of the glass plate 11b) of the first side edge 14 extending in the front-rear direction on one side in the width direction of the glass plate 11b having a different size in which the areas of the upper and lower surfaces 12 and 13 are different to be processed later can be accurately positioned (matched) at the position of the front-rear direction center O1 (center line L2 of the glass plate 11a) of the first side edge 14 extending in the front-rear direction on one side in the width direction of the glass plate 11a to be processed first.

In the bend-breaking system 10a and the bend-breaking processing method (glass plate processing system 10), when the large-sized glass plate 11a having large areas of the upper and lower surfaces 12 and 13 and the small-sized glass plate 11b having smaller areas of the upper and lower surfaces 12 and 13 than the large-sized glass plate 11a are positioned by the first positioning means (first positioning step) and the second positioning means (second positioning step), as shown in Fig. 3, the first side edge 14 (one side edge) extending in the front-rear direction of the large-sized glass plate 11a and the first side edge 14 (one side edge) extending in the front-rear direction of the small-sized glass plate 11b are positioned at the positioning first reference L1 (virtual positioning first reference line) of the loading area 19, and the front-rear direction center O1 of the first side edge 14 extending in the front-rear direction of the large-sized glass plate 11a and the front-rear direction center O1 of the first side edge 14 extending in the front-rear direction of the small-sized glass plate 11b are positioned at the positioning second reference L2 (virtual positioning second reference line) in the loading area 19.

In the large-sized glass plate 11a and the small-sized glass plate 11b positioned by the first positioning means (first positioning step) and the second positioning means (second positioning step), the outermost side edges (in the shown glass plates 11a and 11b, the first side edges 14) located on the outermost side in the width direction in the first side edges 14 of the glass plates 11a and 11b match each other in the positioning first reference L1 (virtual positioning first reference line), and the front-rear direction centers O1 (center lines L2 extending in the width direction by dividing the dimension of each of the glass plates 11a and 11b in the front-rear direction by 2) of the first side edges 14 of the glass plates 11a and 11b match each other in the positioning second reference L2 (virtual positioning second reference line).

After the positioning of the glass plates 11a and 11b is completed by the first positioning means (first positioning step) and the second positioning means (second positioning step), the controller transmits a lowering signal (ON signal) to a control unit of the raising/lowering mechanism (air cylinder) of the glass plate first holder 40a. The control unit of the raising/lowering mechanism (air cylinder) that has received the lowering signal (ON signal) lowers the suction pad 42 toward the upper surface 12 of each of the glass plates 11a and 11b by the raising/lowering mechanism. After the suction pad 42 of the glass plate first holder 40a abuts on the upper surface 12 of each of the glass plates 11a and 11b, the controller transmits a suction signal (ON signal) to the control unit of the vacuum mechanism of the glass plate first holder 40a. The control unit of the vacuum mechanism that has received the suction signal (ON signal) activates the vacuum mechanism.

When the vacuum mechanism is activated, the glass plates 11a and 11b located in the loading area 19 are sucked by the suction pad 42. After activating the vacuum mechanism, the controller transmits a raising signal (ON signal) to a control unit of the pad raising/lowering mechanism (air cylinder) of the glass plate first holder 40a. The control unit of the pad raising/lowering mechanism (air cylinder) that has received the raising signal (ON signal) raises the suction pad 42 by the pad raising/lowering mechanism. The glass plates 11a and 11b positioned by the first positioning means (first positioning step) and the second positioning means (second positioning step) in the loading area 19 rise together with the suction pad 42 in a state of being sucked to the suction pad 42.

After the suction pad 42 (glass plates 11a and 11b) raises, the controller transmits a forward movement signal (ON signal) to the control unit of the second servomotor 39. The control unit of the second servomotor 39 that has received the forward movement signal (ON signal) drives the second servomotor 39. The rotation of the shaft of the second servomotor 39 moves the slide block in the front-rear direction from the rear side toward the front side of the second guide frame 35, whereby the glass plate first holder 40a (glass plates 11a and 11b sucked to the suction pad 42) moves from the loading area 19 to the cutting processing area 20 (glass plate moving means (glass plate moving step)). The movement of the slide block causes the glass plate second to fourth holders 40b to 40d to move forward in the front-rear direction together with the glass plate first holder 40a.

After the glass plate first holder 40a moves to the cutting processing area 20, the controller transmits a lowering signal (ON signal) to the control unit of the pad raising/lowering mechanism (air cylinder) of the glass plate first holder 40a. The control unit of the pad raising/lowering mechanism (air cylinder) that has received the lowering signal (ON signal) lowers the suction pad 42 (glass plates 11a and 11b) onto the cutting processing table 54 in the cutting processing area 20 by the pad raising/lowering mechanism. After the glass plates 11a and 11b sucked to the suction pad 42 of the glass plate first holder 40a abut on the cutting processing table 54, the controller transmits a stop signal (OFF signal) to the control unit of the vacuum mechanism of the glass plate first holder 40a. The control unit of the vacuum mechanism that has received the stop signal (OFF signal) stops the activation of the vacuum mechanism. When the vacuum mechanism stops, the suction of the suction pad 41 to the glass plates 11a and 11b is released, and the positioned glass plates 11a and 11b are placed on the cutting processing table 54. When the glass plates 11a and 11b are placed on the cutting processing table 54, the lower surface 13 of each of the glass plates 11a and 11b is sucked and held by suction pads (not shown) installed on the cutting processing table 54.

Next, the controller transmits a raising signal (ON signal) to the control unit of the pad raising/lowering mechanism (air cylinder) of the glass plate first holder 40a, and the glass plate first holder 40a (pad raising/lowering mechanism) is raised above the cutting processing table 55 by the raising signal. After the glass plate first holder 40a raises, a rearward movement signal (ON signal) is transmitted from the controller to the control unit of the second servomotor 39, the glass plate first holder 40a moves from the cutting processing area 20 to the loading area 19 by the rotation of the shaft of the second servomotor 39, and the glass plate first holder 40a stands by above the loading area 19. The glass plate second to fourth holders 40b to 40d move rearward in the front-rear direction together with the glass plate first holder 40a, the glass plate second holder 40b stands by above the cutting processing area 20, the glass plate third holder 40c stands by above the bend-breaking processing area 21, and the glass plate fourth holder 40d stands by above the grinding processing area 22.

A conveyance procedure of the glass plates 11a and 11b subjected to the cutting processing from the cutting processing area 20 to the bend-breaking processing area 21 by the glass plate second holder 40b (glass plate moving means (glass plate moving step)), a conveyance procedure of the glass plates 11a and 11b subjected to the bend-breaking processing from the bend-breaking processing area 21 to the grinding processing area 21 by the glass plate third holder 40c (glass plate moving means (glass plate moving step)), and a conveyance procedure of the glass plates 11a and 11b after the grinding processing from the grinding processing area 22 to the unloading area 23 by the glass plate fourth holder 40d (glass plate moving means (glass plate moving step)) are the same as those of the glass plates 11a and 11b from the loading area 19 to the cutting processing area 20 by the glass plate first holder 40a. Therefore, description of the conveyance procedures by the glass plate second to fourth holders 40b to 40d will be omitted.

After the glass plates 11a and 11b are placed on the cutting processing table 54, the controller transmits a rearward movement signal (ON signal) to the control unit of the first servomotor 34. The control unit of the first servomotor 34 that has received the rearward movement signal (ON signal) drives the first servomotor 34. The rotation of the shaft of the first servomotor 34 causes the first slide blocks to move in the front-rear direction from the front side toward the rear side of the first guide frame 30, whereby the cutting device 55 moves to the rear side in the front-rear direction in the cutting processing area 20 together with the first traveling frame 32, and the cutting device 55 is positioned on the outer side in the width direction (cutting processing start position) of the first corner portion 18a (front side edge 16) of each of the glass plates 11a and 11b.

Note that, in the cutting processing, although not shown, the glass plate second holder 40b moved (returned) from the bend-breaking processing area 21 to the cutting processing area 20 is lowered onto the cutting processing table 54 in the cutting processing area 20 by the pad raising/lowering mechanism (air cylinder), the suction pad 41 of the glass plate second holder 40b abuts on the upper surface 12 of each of the glass plates 11a and 11b placed on the cutting processing table 54, and the suction pad 41 of the glass plate second holder 40b presses the glass plates 11a and 11b downward while the suction pad 41 adsorbs the glass plates 11a and 11b by the vacuum mechanism being activated. During the cutting processing, the glass plates 11a and 11b are supported under pressure by the suction pad 41 of the glass plate second holder 40b.

After the cutting device 55 is positioned on the outer side in the width direction of the first corner portion 18a of each of the glass plates 11a and 11b (cutting processing start position), the controller transmits a stop signal (OFF signal) to the control unit of the first servomotor 34 and transmits a drive signal (ON signal) to the control unit of the fourth servomotor 61. The control unit of the first servomotor 34 that has received the stop signal (OFF signal) stops the first servomotor 34, and the control unit of the fourth servomotor 61 that has received the drive signal (ON signal) drives the fourth servomotor 61. The rotation of the shaft of the fourth servomotor 61 causes the slide block 63a to move the feed screw 60a in the width direction from the other side edge portion 48b toward the one side edge portion 48a in the cutting processing area 20, so that the cutting processing table 54 moves in the width direction from the side of the other side edge portion 48b toward the side of the one side edge portion 48a in the cutting processing area 20, and the cutting cutter wheel 67 of the cutting device 55 is positioned at the first corner portion 18a of each of the glass plates 11a and 11b.

After the cutting cutter wheel 67 of the cutting device 55 is positioned at the first corner portion 18a of each of the glass plates 11a and 11b, the controller transmits a drive signal (ON signal) and an NC control signal to the control units of the air cylinder 65 and the fifth servomotor 66 of the cutting device 55, transmits a rearward movement signal (ON signal) and an NC control signal to the control unit of the first servomotor 34, and transmits an NC control signal to the control unit of the fourth servomotor 61. The control unit of the air cylinder 65, the control unit of the fifth servomotor 66, the control unit of the first servomotor 34, and the control unit of the fourth servomotor 61 of the cutting device 55 that have received the drive signal (ON signal) and the NC control signal drive the air cylinder 65, the fifth servomotor 66, the first servomotor 34, and the fourth servomotor 61 to perform the contour control motion by the NC control on the vicinity of the first side edge 14 (first side edge portion) of each of the glass plates 11a and 11b, and the cutting cutter wheel 67 performs the cutting processing of the vicinity of the first side edge 14 (first side edge portion) of each of the glass plates 11a and 11b (cutting processing means (cutting processing step)).

The control unit of the first servomotor 34 that has received the rearward movement signal (ON signal) drives the first servomotor 34 during the cutting to move the cutting device 55 rearward in the front-rear direction in the cutting processing area 20, and the control unit of the fourth servomotor 61 drives the fourth servomotor 61 during the cutting to reciprocate the cutting device 55 in the width direction in the cutting processing area 20. The cutting cutter wheel 67 of the cutting device 55 moves from the first corner portion 18a toward the second corner portion 18b of each of the glass plates 11a and 11b while forming the contour cutting line K1 in the vicinity of the first side edge 14 (first side edge portion) of each of the glass plates 11a and 11b.

After the cutting processing of the vicinity of the first side edge 14 (first side edge portion) of each of the glass plates 11a and 11b is completed by the cutting cutter wheel 67 of the cutting device 55, and the cutting cutter wheel 67 is positioned at the second corner portion 18b of each of the glass plates 11a and 11b, the cutting processing table 54 moves in the width direction from the side of the one side edge portion 48a toward the side of the other side edge portion 48b in the cutting processing area 20, and the cutting cutter wheel 67 performs the cutting processing of the vicinity of the rear end edge 17 (rear end edge portion) of each of the glass plates 11a and 11b with the movement of the cutting processing table 54 in the width direction (cutting processing means (cutting processing step)).

The control unit of the fourth servomotor 61 drives the fourth servomotor 61 during the cutting to move the cutting processing table 54 in the width direction in the cutting processing area 20, and the control unit of the first servomotor 34 drives the first servomotor 34 during the cutting to reciprocate the cutting device 55 in the front-rear direction in the cutting processing area 20. The cutting cutter wheel 67 of the cutting device 55 moves from the second corner portion 18b toward the third corner portion 18c of each of the glass plates 11a and 11b while forming the contour cutting line K1 in the vicinity of the rear end edge 17 (rear end edge portion) of each of the glass plates 11a and 11b.

After the cutting processing of the vicinity of the rear end edge 17 (rear end edge portion) of each of the glass plates 11a and 11b is completed by the cutting cutter wheel 67 of the cutting device 55 and the cutting cutter wheel 67 is positioned at the third corner portion 18c of each of the glass plates 11a and 11b, the cutting device 55 moves forward in the front-rear direction, and the cutting cutter wheel 67 performs the cutting processing of the vicinity of the second side edge 15 (second side edge portion) of each of the glass plates 11a and 11b with the movement of the cutting device 55 forward in the front-rear direction (cutting processing means (cutting processing step)).

The control unit of the first servomotor 34 drives the first servomotor 34 during the cutting to move the cutting device 55 forward in the front-rear direction in the cutting processing area 20, and the control unit of the fourth servomotor 61 drives the fourth servomotor 61 during the cutting to reciprocate the cutting processing table 54 in the width direction in the cutting processing area 20. The cutting cutter wheel 67 of the cutting device 55 moves from the third corner portion 18c toward the fourth corner portion 18d of each of the glass plates 11a and 11b while forming the contour cutting line K1 in the vicinity of the second side edge 15 (second side edge portion) of each of the glass plates 11a and 11b.

After the cutting processing of the vicinity of the second side edge (second side edge portion) of each of the glass plates 11a and 11b is completed by the cutting cutter wheel 67 of the cutting device 55 and the cutting cutter wheel 67 is positioned at the fourth corner portion 18d of each of the glass plates 11a and 11b, the cutting processing table 54 moves in the width direction from the side of the other side edge portion 48b toward the side of the one side edge portion 48a in the cutting processing area 20, and the cutting cutter wheel 67 performs the cutting processing of the vicinity of the front end edge 16 (front end edge portion) of each of the glass plates 11a and 11b with the movement of the cutting processing table 54 in the width direction (cutting processing means (cutting processing step)).

The control unit of the fourth servomotor 61 drives the fourth servomotor 61 during the cutting to move the cutting processing table 54 in the width direction in the cutting processing area 20, and the control unit of the first servomotor 34 drives the first servomotor 34 during the cutting to reciprocate the cutting device 55 in the front-rear direction in the cutting processing area 20. The cutting cutter wheel 67 of the cutting device 55 moves from the fourth corner portion 18d toward the first corner portion 18a of each of the glass plates 11a and 11b while forming the contour cutting line K1 in the vicinity of the front end edge 16 (front end edge portion) of each of the glass plates 11a and 11b. When the cutting processing of the vicinity of the front end edge 16 (front end edge portion) of each of the glass plates 11a and 11b is completed by the cutting cutter wheel 67 of the cutting device 55, the cutting device 55 moves to the outer side in the width direction (cutting processing start position) of the first corner portion 18a (front end edge 16) of each of the glass plates 11a and 11b and stands by.

In the cutting processing area 19, for example, in a case where, after the outermost side edge (in the shown glass plate 11b, the first side edge 14) located on the outermost side in the width direction in the first side edge 14 extending in the front-rear direction on one side in the width direction of the small-sized (small-area) glass plate 11b having small areas of the upper surface 12 and the lower surface 13 to be processed later is positioned (matched) at the position (positioning first reference L1 (virtual positioning first reference line)) of the outermost side edge (in the shown glass plate 11a, the first side edge 14) located on the outermost side in the width direction in the first side edge 14 extending in the front-rear direction on one side in the width direction of the large-sized (large-area) glass plate 11a having large areas of the upper surface 12 and the lower surface 13 to be processed first by the first positioning means (first positioning step), so that the glass plates 11a and 11b having different sizes in which the areas of the upper surface 12 and the lower surface 13 are different are positioned, and the front-rear direction center O1 (center line L2 extending in the width direction by dividing the dimension of the glass plate 11b in the front-rear direction by 2) of the first side edge 14 extending in the front-rear direction on one side in the width direction of the small-sized glass plate 11b to be processed later is positioned (matched) at the position (positioning second reference L2 (virtual positioning second reference line)) of the front-rear direction center O1 (center line L2 extending in the width direction by dividing the dimension of the glass plate 11a in the front-rear direction by 2) of the first side edge 14 extending in the front-rear direction on one side in the width direction of the large-sized glass plate 11a to be processed first by the second positioning means (second positioning step), so that the glass plates 11a and 11b in which the areas of the upper surface 12 and the lower surface are different are positioned, the cutting processing of the glass plate 11b having a different area to be processed later is performed, the moving distance of the cutting device 55 until reaching the side edge 14 of the large-sized glass plate 11a (moving distance in the width direction of the cutting processing table 54) and the moving distance of the cutting device 55 until reaching the side edge 14 of the small-sized glass plate 11b (moving distance in the width direction of the cutting processing table 54) are equal, and the moving distance until the cutting device 55 returns from the outermost side edge (first side edge 14) of the large-sized glass plate 11a to the outer side in the width direction of the glass plate 11a and the moving distance from the outermost side edge (first side edge 14) of the small-sized glass plate 11b to the outer side in the width direction of the glass plate 11b are equal. The moving distance of the cutting device 55 until reaching the outermost side edge (side edge 14) of the small-sized glass plate 11b is shortened, the moving distance of the cutting device 55 until returning from the outermost side edge (side edge 14) of the small-sized glass plate 11b to the outer side in the width direction of the glass is shortened, the arrival time (non-processing time) until the cutting device 55 reaches the outermost side edge (side edge 14) of the small-sized glass plate 11b is shortened, and the return time until the cutting device 55 returns from the outermost side edge (side edge 14) of the small-sized glass plate 11b to the outer side in the width direction of the glass plate 11b is shortened.

In the bend-breaking system 10a and the bend-breaking processing method (glass plate processing system 10), after the position (positioning first reference L1 (virtual positioning first reference line)) of the outermost side edge (in the shown glass plate 11a, one side edge 14) located on the outermost side in the width direction in one side edge 14 extending in the front-rear direction on one side in the width direction of the large-sized (large-area) glass plate 11a having large areas of the upper surface 12 and the lower surface 13 to be processed first by the first positioning means (first positioning step) and the position (positioning first reference L1 (virtual positioning first reference line)) of the outermost side edge (in the shown glass plate 11b, one side edge 14) located on the outermost side in the width direction in one side edge 14 extending in the front-rear direction on one side in the width direction of the small-sized (small-area) glass plate 11b having small areas of the upper surface 12 and the lower surface 13 to be processed later are matched with each other, so that the glass plates 11a and 11b having different sizes in which the areas of the upper surface 12 and the lower surface 13 are different are positioned, and the position (positioning second reference L2 (virtual positioning second reference line)) of the front-rear direction center O1 (center line L2 extending in the width direction by dividing the dimension of the glass plate 11a in the front-rear direction by 2) of the side edge 14 extending in the front-rear direction on one side in the width direction of the large-sized glass plate 11a to be processed first by the second positioning means (second positioning step) and the position (positioning second reference L2 (virtual positioning second reference line)) of the front-rear direction center O1 (center line L2 extending in the width direction by dividing the dimension of the glass plate 11b in the front-rear direction by 2) of the side edge 14 extending in the front-rear direction on one side in the width direction of the small-sized glass plate 11b to be processed later are matched with each other, so that the glass plates 11a and 11b having different areas in which the areas of the upper surface 12 and the lower surface 13 are different are positioned, the cutting processing of the small-sized glass plate 11b (glass plate 11b having a different area) to be processed later is performed. Therefore, the moving distance of the cutting device 60 (moving distance in the width direction of the cutting processing table 59) until reaching the outermost side edge (side edge 14) of the large-sized (large-area) glass plate 11a having large areas of the upper surface 12 and the lower surface 13 is equal to the moving distance of the cutting device 60 (moving distance in the width direction of the cutting processing table 59) until reaching the outermost side edge (side edge 14) of the small-sized (small-area) glass plate 11b having small areas of the upper surface 12 and the lower surface 13, and the moving distance (moving distance in the width direction of the cutting processing table 59) until the cutting device 60 returns from the outermost side edge (side edge 14) of the large-sized glass plate 11a to the outer side in the width direction of the glass plate 11a is equal to the moving distance (moving distance in the width direction of the cutting processing table 59) until the cutting device 60 returns from the outermost side edge (side edge 14) of the small-sized glass plate 11b to the outer side in the width direction of the glass plate 11b. As compared with the conventional glass plate processing system, the moving distance of the cutting device 60 until reaching the outermost side edge (side edge 14) of the small-sized glass plate 11b can be shortened, and the moving distance of the cutting device 60 for returning from the outermost side edge (side edge 14) of the small-sized glass plate 11b to the outer side in the width direction of the glass plate 11b can be shortened. The arrival time (non-processing time) until the cutting device 60 reaches the outermost side edge (side edge 14) of the small-sized glass plate 11b can be shortened, and the return time until the cutting device 60 returns from the outermost side edge (side edge 14) of the small-sized glass plate 11b to the outer side in the width direction of the glass plate 11b can be shortened.

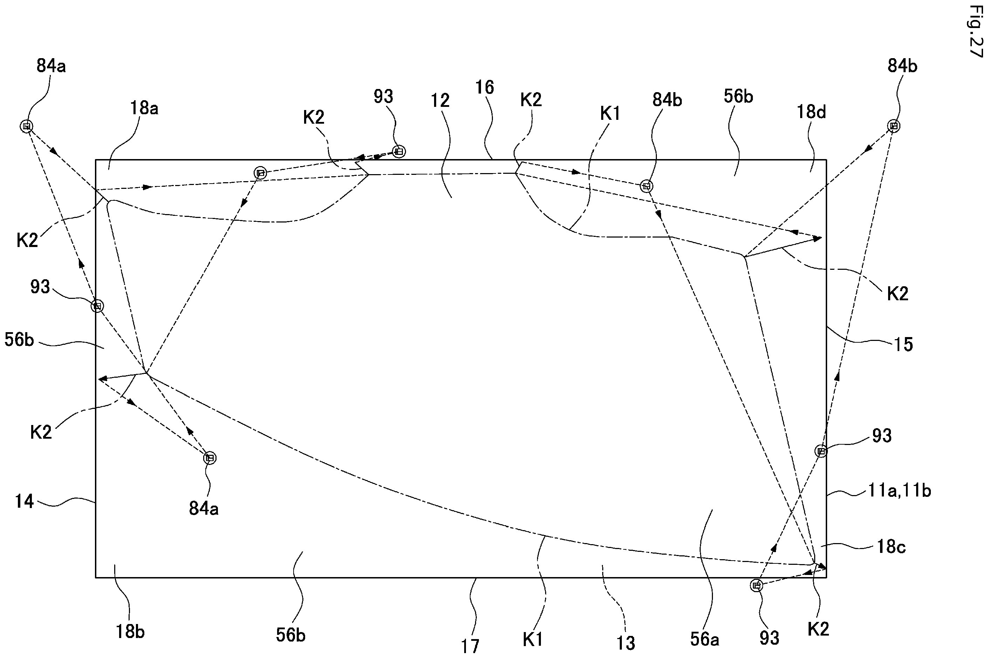

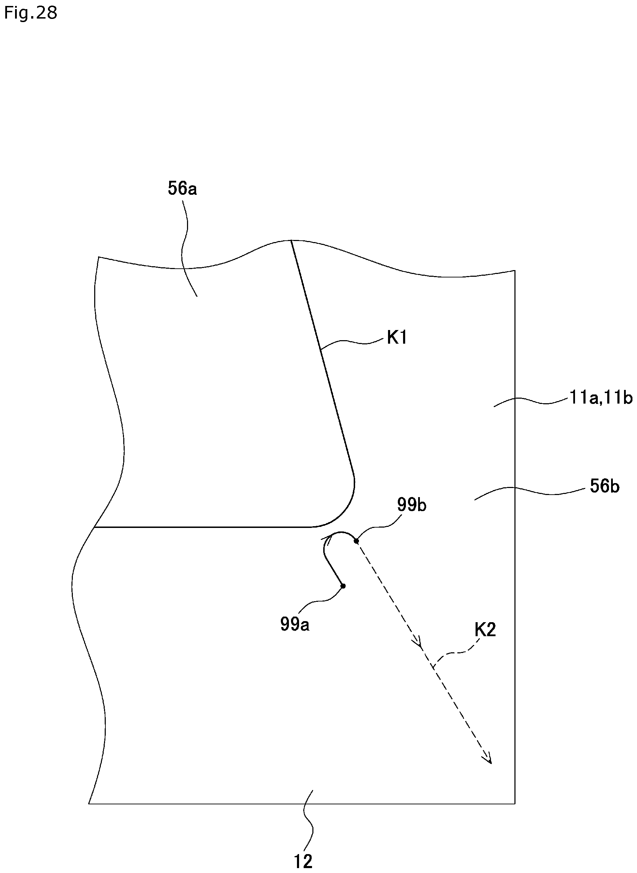

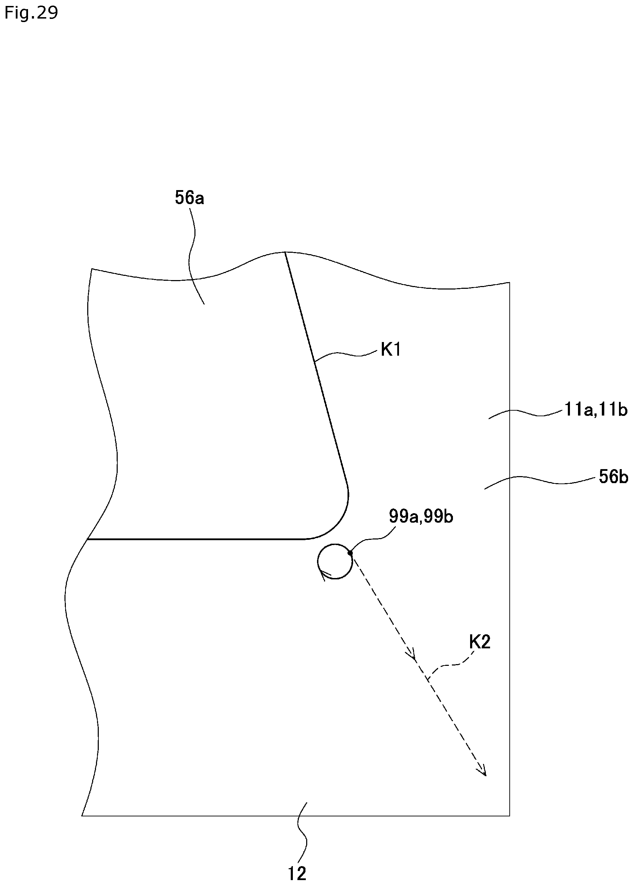

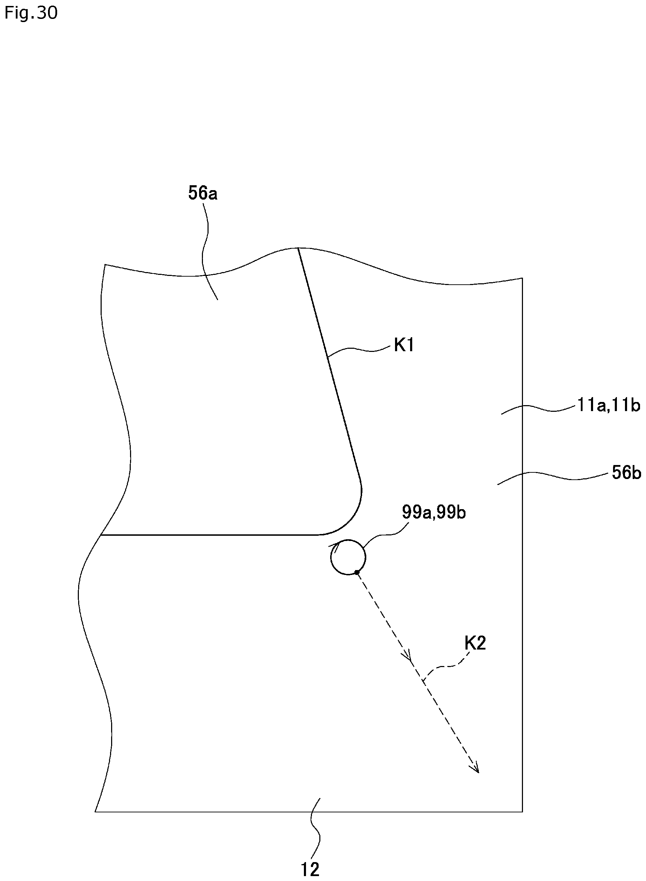

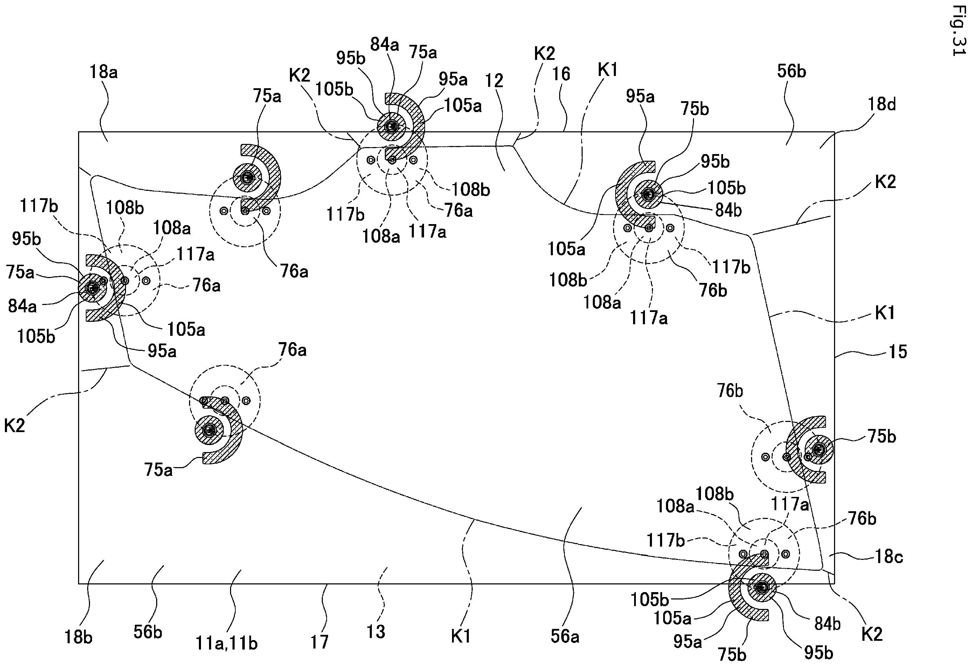

Fig. 27 is a view showing an example of an end cutting line forming procedure in the bend-breaking processing, and Fig. 28 is a view showing an example of a change in the rolling direction of the bend-breaking cutter wheel 93. Fig. 29 is a view showing another example of the change in the rolling direction of the bend-breaking cutter wheel 93, and Fig. 30 is a view showing another example of the change in the rolling direction of the bend-breaking cutter wheel 93. Fig. 31 is a view showing an example of a bend-breaking procedure in the bend-breaking processing.

After the cutting processing (contour cutting line K1) is completed for the edge portion 56b (peripheral edge portion) of each of the glass plates 11a and 11b, the glass plates 11a and 11b subjected to the cutting processing are conveyed from the cutting processing area 20 to the bend-breaking processing area 21 by the glass plate second holder 40b. In the bend-breaking processing area 21, the end cutting line K2 is put in the edge portion 56b extending to the outer side of the contour cutting line K1 of each of the glass plates 11a and 11b subjected to the cutting processing, and the edge portion 56b of each of the glass plates 11a and 11b surrounded by the contour cutting line K1 and the end cutting line K2 is bend-broken.

Note that, in the bend-breaking processing, although not shown, the glass plate third holder 40c moved (returned) from the grinding processing area 22 to the bend-breaking processing area 21 is lowered onto the bend-breaking processing table 74 in the bend-breaking processing area 210 by the pad raising/lowering mechanism (air cylinder), the suction pad 41 of the glass plate third holder 40c abuts on the upper surface 12 of each of the glass plates 11a and 11b placed on the bend-breaking processing table 74, and the suction pad 41 of the glass plate third holder 40c presses the glass plates 11a and 11b downward while the suction pad 41 adsorbs the glass plates 11a and 11b by the vacuum mechanism being activated. During the bend-breaking processing, the glass plates 11a and 11b are supported under pressure by the suction pad 41 of the glass plate third holder 40c.

After the glass plates 11a and 11b subjected to the cutting processing are placed on the bend-breaking processing table 74, the controller transmits a drive signal (ON signal) to the control unit of each of the holder raising/lowering mechanism 94 (first raising/lowering mechanism), the first pressing member raising/lowering mechanism 96a (second raising/lowering mechanism), the second pressing member raising/lowering mechanism 96b (third raising/lowering mechanism), the sixth servomotor 85 (X-axis servomotor), the seventh servomotor 87 (Y-axis servomotor), the eighth servomotor 90 (X-axis servomotor), and the ninth servomotor 91 (Y-axis servomotor) of the first bend-breaking device 75a and the second bend-breaking device 75b. The control unit of the holder raising/lowering mechanism 94, the control units of the first and second pressing member raising/lowering mechanisms 96a and 96b, and the control units of the sixth to ninth servomotors 85, 87, 90, and 91 that have received the drive signal (ON signal) drive the holder raising/lowering mechanism 94, the first and second pressing member raising/lowering mechanisms 96a and 96b, and the sixth to ninth servomotors 85, 87, 90, and 91. A command (signal) is transmitted from the controller to the holder raising/lowering mechanism 94, the first and second pressing member raising/lowering mechanisms 96a and 96b, and the sixth to ninth servomotors 85, 87, 90, and 91 so that the first and second bend-breaking devices 75a and 75b travel (move) on the upper surface 12 of each of the glass plates 11a and 11b along a preset traveling track (bend-breaking trajectory).

In the first bend-breaking device 75a driven by the holder raising/lowering mechanism 94, the first and second pressing member raising/lowering mechanisms 96a and 96b, and the sixth to ninth servomotors 85, 87, 90, and 91, the first bend-breaking jig 84a (bend-breaking jig) moves in the front-rear direction and the width direction (oblique direction) by the X-axis first actuator 86a and the Y-axis first actuator 88a, and the first bend-breaking jig 84a is positioned at the bend-breaking start position in the first end cutting line forming area on the outer side in the width direction of the first corner portion 18a of each of the glass plates 11a and 11b.

In the second bend-breaking device 75b driven by the holder raising/lowering mechanism 94, the first and second pressing member raising/lowering mechanisms 96a and 96b, and the sixth to ninth servomotors 85, 87, 90, and 91, the second bend-breaking jig 84b (bend-breaking jig) moves in the front-rear direction and the width direction (oblique direction) by the X-axis second actuator 86b and the Y-axis second actuator 88b, and the second bend-breaking jig 84b is positioned at the bend-breaking start position in the first end cutting line forming area on the outer side in the width direction of the fourth corner portion 18d of each of the glass plates 11a and 11b.

After the first bend-breaking jig 84a of the first bend-breaking device 75a is positioned at the bend-breaking start position (outer side in the width direction) of the first corner portion 18a of each of the glass plates 11a and 11b, as shown by arrows in Fig. 27, the first bend-breaking jig 84a moves in the front-rear direction and the width direction (oblique direction) by the X-axis first actuator 86a and the Y-axis first actuator 88a, and moves to the rolling direction changing position in the vicinity (nearest) of the contour cutting line K1 in the edge portion 56b of each of the glass plates 11a and 11b extending to the outer side of the contour cutting line K1. After the first bend-breaking jig 84a moves to the rolling direction changing position in the vicinity of the contour cutting line K1, the holder raising/lowering mechanism 94 (first raising/lowering mechanism) operates to lower the bend-breaking cutter holder 92 toward the upper surface 12 of the edge portion 56b of each of the glass plates 11a and 11b (holder lowering means (holder lowering step)).

After the second bend-breaking jig 84b of the second bend-breaking device 75b is positioned at the bend-breaking start position (outer side in the width direction) of the fourth corner portion 18d of each of the glass plates 11a and 11b, as shown by arrows in Fig. 27, the second bend-breaking jig 84b moves in the front-rear direction and the width direction (oblique direction) by the X-axis second actuator 86b and the Y-axis second actuator 88b, and moves to the rolling direction changing area in the vicinity (nearest) of the contour cutting line K1 in the edge portion 56b of each of the glass plates 11a and 11b extending to the outer side of the contour cutting line K1. After the second bend-breaking jig 84b moves to the rolling direction changing area in the vicinity of the contour cutting line K1, the holder raising/lowering mechanism 94 (first raising/lowering mechanism) operates to lower the bend-breaking cutter holder 92 toward the upper surface 12 of the edge portion 56b of each of the glass plates 11a and 11b (holder lowering means (holder lowering step)). Note that the rolling direction changing area may be not in the vicinity of the contour cutting line K1 but in the vicinity of the peripheral edge of each of the glass plates 11a and 11b.

When the bend-breaking cutter holder 92 lowers, the bend-breaking cutter wheel 93 is exposed downward from the through hole 106 formed at the center of the second pressing member 95b. When the bend-breaking cutter wheel 93 is exposed below the through hole 106, the bend-breaking cutter wheel 93 abuts on the upper surface 12 of each of the glass plates 11a and 11b in the rolling direction changing area with a predetermined pressing force. At this time, the rolling direction of the bend-breaking cutter wheel 93 is not determined, the peripheral edge 102 of the bend-breaking cutter wheel 93 is directed in one of four directions, and the rolling direction of the bend-breaking cutter wheel 93 does not match the direction in which the virtual end cutting line extends in the edge portion 56b of each of the glass plates 11a and 11b.

The controller transmits a travel signal to the control units of the sixth and seventh servomotors 85 and 87 so that the bend-breaking cutter wheel 93 travels (moves) in a predetermined direction. The control units of the sixth and seventh servomotors 85 and 87 that have received the travel signal drive the seventh servomotors 85 and 87. The X-axis first actuator 86a and the Y-axis first actuator 88a are operated by drive of the sixth and seventh servomotors 85 and 87, and the bend-breaking cutter wheel 93 slightly travels (moves) in a predetermined direction, so that a caster effect is exerted on the bend-breaking cutter wheel 93, the bend-breaking cutter wheel 93 rotates in the around the cutter holder center axis O2 direction (axial direction) (clockwise direction or counterclockwise direction), and the rolling (moving) direction of the peripheral edge 102 of the bend-breaking cutter wheel 93 faces the traveling (moving) direction (direction in which the virtual end cutting line extends) of the first bend-breaking jig 84a (bend-breaking cutter holder 92) (rolling direction changing means (rolling direction changing step)).

The controller transmits a travel signal to the control units of the eighth and ninth servomotors 90 and 91 so that the bend-breaking cutter wheel 93 travels (moves) in a predetermined direction. The control units of the eighth and ninth servomotors 90 and 91 that have received the travel signal drive the eighth and ninth servomotors 90 and 91. The X-axis second actuator 86b and the Y-axis second actuator 88b are operated by drive of the eighth and ninth servomotors 90 and 91, and the bend-breaking cutter wheel 93 slightly travels (moves) in a predetermined direction, so that a caster effect is exerted on the bend-breaking cutter wheel 93, the bend-breaking cutter wheel 93 rotates in the direction around the cutter holder center axis O2 (axial direction) (clockwise direction or counterclockwise direction), and the rolling (moving) direction of the peripheral edge 102 of the bend-breaking cutter wheel 93 faces the traveling (moving) direction (direction in which the virtual end cutting line extends) of the second bend-breaking jig 84b (bend-breaking cutter holder 92) (rolling direction changing means (rolling direction changing step)). The travel dimension (moving dimension) of the bend-breaking cutter wheel 93 (first and second bend-breaking jigs 84a and 84b) in a predetermined direction is 0.8 to 4 mm.

As shown in Fig. 28, in one example of the change in the rolling direction of the bend-breaking cutter wheel 93, when the first bend-breaking jig 84a (bend-breaking jig) and the second bend-breaking jig 84b (bend-breaking jig) travel (move) in a circular shape (semicircular shape) from a rolling direction changing start point 99a on the side of the virtual end cutting line toward a rolling direction changing end point 99b, the peripheral edge 102 of the bend-breaking cutter wheel 93 turns by 180° to define a circular trajectory (semicircular trajectory), and the peripheral edge 102 of the cutter wheel 93 is positioned at the start point of the virtual end cutting line (rolling direction changing end point 99b), the rolling (moving) direction of the peripheral edge 102 of the bend-breaking cutter wheel 93 is directed to the traveling (moving) direction of the first and second bend-breaking jigs 84a and 84b (direction in which the virtual end cutting line extends).

As shown in Figs. 29 and 30, in another example of the change in the rolling direction of the bend-breaking cutter wheel 93, when the first bend-breaking jig 84a (bend-breaking jig) and the second bend-breaking jig 84b (bend-breaking jig) travel (move) in a circular shape (perfect circle shape) from the start point of the virtual end cutting line (rolling direction changing start point 99a) toward the start point of the virtual end cutting line (rolling direction changing end point 99b), the peripheral edge 102 of the bend-breaking cutter wheel 93 turns by 360° to define a circular trajectory (perfect circle), and the peripheral edge 102 of the cutter wheel 93 is positioned at the start point of the virtual end cutting line (rolling direction changing end point 99b), the rolling (moving) direction of the peripheral edge 102 of the bend-breaking cutter wheel 93 is directed to the traveling (moving) direction of the first and second bend-breaking jigs 84a and 84b (direction in which the virtual end cutting line extends). In Fig. 29, the start point of the virtual end cutting line (rolling direction changing start point 99a and rolling direction changing end point 99b) is located at the contact point of the circular trajectory (perfect circle) defined by the first bend-breaking jig 84a and the second bend-breaking jig 84b, and the end cutting line K2 extends in the tangential direction of the circular trajectory (perfect circle). In Fig. 30, the start point of the virtual end cutting line (rolling direction changing start point 99a and rolling direction changing end point 99b) is located on the contact point of the circular trajectory (perfect circle) defined by the first bend-breaking jig 84a and the second bend-breaking jig 84b, and the end cutting line K2 extends in the radial direction of the circular trajectory (perfect circle).

In the glass plate processing system 10 (bend-breaking processing method), the first and second bend-breaking jigs 84a and 84b are caused to slightly travel in a predetermined direction on the upper surface 12 of each of the glass plates 11a and 11b in parallel to the upper surface 12 of the edge portion 56b of each of the glass plates 11a and 11b in the rolling direction changing area (define a circular trajectory), so that the bend-breaking cutter wheel 93 exerts a caster effect, the rolling (moving) direction of the peripheral edge 102 of the bend-breaking cutter wheel 93 is changed to the traveling (moving) direction of the first bend-breaking jig 84a (bend-breaking cutter holder 92) (direction in which the virtual end cutting line extends), and the rolling (moving) direction of the peripheral edge 102 of the bend-breaking cutter wheel 93 is changed to the traveling (moving) direction of the second bend-breaking jig 84b (bend-breaking cutter holder 92) (direction in which the virtual end cutting line extends).

After the rolling direction of the peripheral edge 102 of the bend-breaking cutter wheel 93 is changed to the traveling direction of the first and second bend-breaking jigs 84a and 84b (direction in which the virtual end cutting line extends) by the rolling direction changing means (rolling direction changing step) (after the rolling direction of the bend-breaking cutter wheel 93 becomes the same as the traveling direction of the first and second bend-breaking jigs 84a and 84b), the first bend-breaking jig 84a travels linearly from the vicinity of the contour cutting line K1 of each of the glass plates 11a and 11b toward the edge of each of the glass plates 11a and 11b, and the bend-breaking cutter wheel 93 forms the end cutting line K2 (scribe) in the first end cutting line forming area of the edge portion 56b of each of the glass plates 11a and 11b along the traveling direction of the first bend-breaking jig 84a (end cutting line forming means (end cutting line forming step)). In the end cutting line forming means (end cutting line forming step), in a state where, while the first support device 76a moves in synchronization with the first bend-breaking device 75a, the first and second support surfaces 117a and 117b of the first and second support members 108a and 108b support the lower surface 13 of the edge portion 56b extending to the outer side of the contour cutting line K1 of each of the glass plates 11a and 11b, the bend-breaking cutter wheel 93 of the first bend-breaking jig 84a forms the end cutting line K2 at the edge portion 56b of each of the glass plates 11a and 11b.

Further, the second bend-breaking jig 84b travels linearly from the vicinity of the contour cutting line K1 of each of the glass plates 11a and 11b toward the edge of each of the glass plates 11a and 11b, and the bend-breaking cutter wheel 93 forms the end cutting line K2 (scribe) in the first end cutting line forming area (predetermined area) of the edge portion 56b of each of the glass plates 11a and 11b along the traveling direction of the second bend-breaking jig 84b (end cutting line forming means (end cutting line forming step)). In the end cutting line forming means (end cutting line forming step), in a state where, while the second support device 76b moves in synchronization with the second bend-breaking device 75b, the first and second support surfaces 117a and 117b of the first and second support members 108a and 108b support the lower surface 13 of the edge portion 56b extending to the outer side of the contour cutting line K1 of each of the glass plates 11a and 11b, the bend-breaking cutter wheel 93 of the second bend-breaking jig 84b forms the end cutting line K2 at the edge portion 56b of each of the glass plates 11a and 11b.

The first and second bend-breaking devices 75a and 75b and the first and second support devices 76a and 76b travel (move) at the same speed. In the end cutting line forming means (end cutting line forming step), the first and second bend-breaking jigs 84a and 84b may travel linearly from the edge of each of the glass plates 11a and 11b toward the vicinity of the contour cutting line K1 of each of the glass plates 11a and 11b, and the bend-breaking cutter wheel 93 may form the end cutting line K2 (scribe) at the edge portion 56b of each of the glass plates 11a and 11b. In the bend-breaking system 10a and the bend-breaking processing method (glass plate processing system 10), the first and second support surfaces 117a and 117b of the first and second support members 108a and 108b support the lower surface 13 of the edge portion 56b of each of the glass plates 11a and 11b, so that the elastic deformation of the edge portion 56b can be prevented, and the end cutting line k2 can be reliably formed at the edge portion 56b of each of the glass plates 11a and 11b in a state where the edge portion 56b of each of the glass plates 11a and 11b are horizontally held.

After the end cutting line K2 is formed in the first end cutting line forming area of the edge portion 56b of each of the glass plates 11a and 11b, the holder raising/lowering mechanism 94 (first raising/lowering mechanism) operates to raise the bend-breaking cutter holder 92 from the edge of the edge portion 56b of each of the glass plates 11a and 11b (holder raising means (holder raising step)). After the bend-breaking cutter holder 92 is raised by the holder raising means (holder raising step), the first and second bend-breaking devices 75a and 75b (first and second bend-breaking jigs 84a and 84b) are moved to the first pressing area by the actuation of the **X-**axis first and second actuators 86a and 86b and the Y-axis first and second actuators 88a and 88b (bend-breaking device moving means (bend-breaking device moving step)).

After the first and second bend-breaking devices 75a and 75b are moved to the first pressing area by the bend-breaking device moving means (bend-breaking device moving step), as shown in Fig. 31, the first pressing member 95a of each of the first and second bend-breaking devices 75a and 75b is lowered in the up-down direction by the first pressing member raising/lowering mechanism 96a (second raising/lowering mechanism), and the first pressing surface 105a of the first pressing member 95a and the first and second support surfaces 117a and 117b of the first and second support members 108a and 108b sandwich the main body portion 56a and the edge portion 56b of each of the glass plates 11a and 11b (glass plate sandwiching means (glass plate sandwiching step)).

In the glass plate sandwiching means (glass plate sandwiching step), when the first pressing member 95a of each of the first and second bend-breaking devices 75a and 75b is lowered by the first pressing member raising/lowering mechanism 96a (second raising/lowering mechanism), the first pressing surface 105a formed in a semi-annular shape of the first pressing member 95a abuts on the upper surface 12 of the edge portion 56b of each of the glass plates 11a and 11b extending to the vicinity of the outer side of the contour cutting line K1 across the contour cutting line K1 and the upper surface 12 of the main body portion 56a of each of the glass plates 11a and 11b extending to the vicinity of the inner side of the contour cutting line K1.

In the glass plate sandwiching means (glass plate sandwiching step), when the first and second support members 108a and 108b are raised by the second support member raising/lowering mechanism 109 (fourth raising/lowering mechanism), the second support surface 117b formed in an annular shape of the second support member 108b supports the lower surface 13 of the edge portion 56b of each of the glass plates 11a and 11b extending to the vicinity of the outer side of the contour cutting line K1 across the contour cutting line K1 and the lower surface 13 of the main body portion 56a of each of the glass plates 11a and 11b extending to the vicinity of the inner side of the contour cutting line K1, and the first support surface 117a formed in a perfect circle shape of the first support member 108a supports the lower surface 13 of the main body portion 56a of each of the glass plates 11a and 11b extending to the vicinity of the inner side of the contour cutting line K1, and the vicinity of the outer peripheral edge of the first support surface 117a supports the lower surface 13 of the edge portion 56b of each of the glass plates 11a and 11b extending to the vicinity of the outer side of the outer cut-out line K1.

After the first pressing surface 105a of the first pressing member 95a and the first and second support surfaces 117a and 117b of the first and second support members 108a and 108b sandwich the main body portion 56a and the edge portion 56b of each of the glass plates 11a and 11b by the glass plate sandwiching means (glass plate sandwiching step), the second support member 108b is lowered in the up-down direction in the first pressing area by the second support member raising/lowering mechanism 109 (fourth raising/lowering mechanism) (second support member lowering means (second support member lowering step)). When the second support member 108b lowers, a gap is formed between the lower surface 13 of each of the glass plates 11a and 11b and the second support surface 117b (a step is formed between the first support surface 117a and the second support surface 117b). Note that sandwiching of the main body portion 56a of each of the glass plates 11a and 11b by the first pressing surface 105a of the first pressing member 95a and the first support surface 117a of the first support member 108a is maintained.

After the second support member 108b is lowered by the second support member lowering means (second support member lowering step), the second pressing member 95b is lowered in the up-down direction by the second pressing member raising/lowering mechanism 96b (third raising/lowering mechanism) while maintaining the sandwiching of the main body portion 56a of each of the glass plates 11a and 11b by the first pressing surface 105a of the first pressing member 95a and the first support surface 117a of the first support member 108a, the second pressing surface 105b formed in an annular shape of the second pressing member 95b abuts on the upper surface 12 of the edge portion 56b of each of the glass plates 11a and 11b extending to the vicinity of the outer side of the contour cutting line K1, and the second pressing surface 105b of the second pressing member 95b presses the edge portion 56b of each of the glass plates 11a and 11b extending to the outer side of the contour cutting line K1 downward. When the second pressing surface 105b presses the edge portion 56b downward, the edge portion 56b is bend-broken (edge portion bend-breaking means (edge portion bend-breaking step)). In the edge portion bend-breaking means (edge portion bend-breaking step), the main body portion 56a and the edge portion 56b of each of the glass plates 11a and 11b are separated from each other. The edge portion 56b (peripheral edge portion) of each of the bend-broken (separated) glass plates 11a and 11b remains on the belt conveyor 76.

After the edge portion 56b is bend-broken by the edge portion bend-breaking means (edge portion bend-breaking step) in the first pressing area, the second support member 108b is raised in the up-down direction by the second support member raising/lowering mechanism 109 (fourth raising/lowering mechanism), the first pressing member 95a is raised in the up-down direction by the first pressing member raising/lowering mechanism 96a (second raising/lowering mechanism), and the second pressing member 95b is raised in the up-down direction by the second pressing member raising/lowering mechanism 96b (third raising/lowering mechanism).

After the first and second pressing members 95a and 95b and the second support member 108b are raised, the first and second bend-breaking devices 75a and 75b are moved to the second (next) end cutting line forming area of the edge portion 56b of each of the glass plates 11a and 11b (bend-breaking device moving means (bend-breaking device moving step)). The first bend-breaking jig 84a is positioned at the bend-breaking start position in the second (next) end cutting line forming area on the outer side in the width direction of the glass plates 11a and 11b, and the second bend-breaking jig 84b is positioned at the bend-breaking start position in the second (next) end cutting line forming area on the outer side in the width direction of the glass plates 11a and 11b. The first and second support devices 76a and 76b move to the rolling direction changing area in the second (next) end cutting line forming area in synchronization with the first and second bend-breaking devices 75a and 75b.

After the first and second bend-breaking devices 75a and 75b move to the rolling direction changing area in the second (next) end cutting line forming area, the holder raising/lowering mechanism 94 (first raising/lowering mechanism) operates to lower the bend-breaking cutter holder 92 toward the upper surface 12 of the edge portion 56b of each of the glass plates 11a and 11b (holder lowering means (holder lowering step)), and the bend-breaking cutter wheel 93 abuts on the upper surface 12 of each of the glass plates 11a and 11b with a predetermined pressing force.

After the bend-breaking cutter holder 92 is lowered (abutted) to the upper surface 12 of the edge portion 56b of each of the glass plates 11a and 11b in the second (next) rolling direction changing area by the holder lowering means (holder lowering step), as described above, the first and second bend-breaking jigs 84a and 84b (bend-breaking jigs) travel (move) in a circular shape to define a circular trajectory, and a caster effect is exerted on the bend-breaking cutter wheel 93, so that the rolling (moving) direction of the peripheral edge 102 of the bend-breaking cutter wheel 93 is directed to the traveling (moving) direction (direction in which the virtual end cutting line extends) of the first and second bend-breaking jigs 84a and 84b (bend-breaking cutter holder 92) (rolling direction changing means (rolling direction changing step), and the rolling (moving) direction of the peripheral edge 102 of the bend-breaking cutter wheel 93 is changed to the traveling direction (direction in which the virtual end cutting line extends) of the first and second bend-breaking jigs 84a and 84b (bend-breaking cutter holder 92).

After the rolling direction of the peripheral edge 102 of the bend-breaking cutter wheel 93 is changed to the traveling direction of the first and second bend-breaking jigs 83a and 83b (direction in which the virtual end cutting line extends) (after the rolling direction of the bend-breaking cutter wheel 92 becomes the same as the traveling direction of the first and second bend-breaking jigs 83a and 83b), the first and second bend-breaking jigs 83a and 83b linearly travel from the vicinity of the contour cutting line K1 of each of the glass plates 11a and 11b toward the edge of each of the glass plates 11a and 11b, and the bend-breaking cutter wheel 92 forms the end cutting lines K2 in the second (next) end cutting line forming area (predetermined area) of the edge portion 56 of each of the glass plates 11a and 11b along the traveling direction of the first and second bend-breaking jigs 83a and 83b (end cutting line forming means (end cutting line forming step)).

After the end cutting line K2 is formed in the second (next) end cutting line forming area of the edge portion 56b of each of the glass plates 11a and 11b, the bend-breaking cutter holder 92 is raised from the edge of the edge portion 56b of each of the glass plates 11a and 11b by the holder raising/lowering mechanism 94 (first raising/lowering mechanism) (holder raising means (holder raising step)). After the bend-breaking cutter holder 92 is raised, the first and second bend-breaking devices 75a and 75b (first and second bend-breaking jigs 84a and 84b) move to the second (next) pressing area (bend-breaking device moving means (bend-breaking device moving step)).

After the first and second bend-breaking devices 75a and 75b move to the first (next) pressing area, the first pressing member 95a of each of the first and second bend-breaking devices 75a and 75b is lowered in the up-down direction by the first pressing member raising/lowering mechanism 96a (second raising/lowering mechanism), and the first pressing surface 105a of the first pressing member 95a and the first and second support surfaces 117a and 117b of the first and second support members 108a and 108b sandwich the main body portion 56a and the edge portion 56b of each of the glass plates 11a and 11b in the second (next) pressing area (glass plate sandwiching means (glass plate sandwiching step)).

After the first pressing surface 105a of the first pressing member 95a and the first and second support surfaces 117a and 117b of the first and second support members 108a and 108b sandwich the main body portion 56a and the edge portion 56b of each of the glass plates 11a and 11b, the second support member 108b is lowered in the up-down direction in the second (next) pressing area by the second support member raising/lowering mechanism (fourth raising/lowering mechanism) 109 (second support member lowering means (second support member lowering step)).

After the second support member 108b is lowered, the second pressing member 95b is lowered in the up-down direction by the second pressing member raising/lowering mechanism 96b (third raising/lowering mechanism) while maintaining the sandwiching of the main body portion 56a of each of the glass plates 11a and 11b by the first pressing surface 105a of the first pressing member 95a and the first support surface 117a of the first support member 108a, and the second pressing surface 105b of the second pressing member 95b presses the edge portion 56b of each of the glass plates 11a and 11b extending to the outer side of the contour cutting line K1 downward in the second (next) pressing area. When the second pressing surface 105b presses the edge portion 56b downward, the edge portion 56b is bend-broken (edge portion bend-breaking means (edge portion bend-breaking step)). The edge portion 56b (peripheral edge portion) of each of the bend-broken (separated) glass plates 11a and 11b remains on the belt conveyor 76.

In the bend-breaking system 10a and the bend-breaking processing method (glass plate processing system 10), after the bend-breaking cutter wheel and the first and second pressing members are raised by the holder raising/lowering mechanism 94 (first raising/lowering mechanism) and the first and second pressing member raising/lowering mechanisms 96a and 96b (second and third raising/lowering mechanisms), the first and second bend-breaking devices 75a and 75b are moved in the front-rear direction (horizontal direction) or the width direction (horizontal direction) on the upper surface side of the glass plates 11a and 11b (bend-breaking device moving means (bend-breaking device moving **step)),** after the second support member 108b is raised by the second support member raising/lowering mechanism 109 (fourth raising/lowering mechanism), the first and second support device 76a and 76b move in the front-rear direction (horizontal direction) and the width direction (horizontal direction) in synchronization with the first and second bend-breaking devices 75a and 75b on the lower surface 13 side of the glass plates 11a and 11b (support device moving means (support device moving step)), and after the first and second bend-breaking devices 75a and 75b and the first and the second support devices 76a and 76b move in synchronization by the bend-breaking device moving means (bend-breaking device moving step) and the support device moving means (support device moving step), the first bend-breaking device 75a and the first support device 76a cooperate with each other, and the second bend-breaking device 75b and the second support device 76b cooperate with each other to perform the end cutting line forming means (end cutting line forming step), the glass plate sandwiching means (glass plate sandwiching step), and the edge portion bend-breaking means (edge portion bend-breaking step).

By repeating the above-described procedure, all the edge portions 56 of the glass plates 11a and 11b on which the end cutting line K2 is formed are broken. In the glass plates 11a and 11b shown in Fig. 27, the first to third end cutting lines K2 are formed by the first bend-breaking jig 83a, and the first to third end cutting lines K2 are formed by the second bend-breaking jig 83b. However, the number of end cutting lines K2 is not particularly limited, and the number of end cutting lines K2 is determined depending on the sizes (areas) and thickness dimensions of the glass plates 11a and 11b, and the shapes of the main bodies of the glass plates 11a and 11b formed by the contour cutting lines K1.

After the bend-breaking processing is completed and the glass plates 11a and 11b subjected to the bend-breaking processing are raised upward by the glass plate third holder 40c, the controller transmits a drive signal (ON signal) to the control unit of the conveyor drive motor 77. The control unit of the conveyor drive motor 77 that has received the drive signal (ON signal) drives the belt conveyor 76. The belt conveyor 76 moves from one side to the other side in the width direction. Due to the movement of the belt conveyor 76 in the width direction, the bend-broken edge portion 56b (peripheral edge portion) of each of the glass plates 11a and 11b remaining on the belt conveyor 76 gradually moves from one side to the other side in the width direction, and the edge portion 56b falls from the belt conveyor 76 and is stored (discarded) in a dust box (not shown).

After the bend-breaking processing of the glass plates 11a and 11b is completed, the main body portion 56a of each of the glass plates 11a and 11b subjected to the bend-breaking processing is conveyed from the bend-breaking processing area 21 to the grinding processing area 22 by the glass plate third holder 40c, and the main body portion 56a of each of the glass plates 11a and 11b is placed on the grinding processing table 118. After the main body portion 56a of each of the glass plates 11a and 11b is placed on the grinding processing table 118, the controller transmits a drive signal to the control unit of the vacuum mechanism of the grinding processing table 118 and transmits a rearward movement signal (ON signal) to the control unit of the first servomotor 34. The control unit of the vacuum mechanism that has received the drive signal drives the vacuum mechanism. The main body portion 56a of each of the glass plates 11a and 11b is sucked and held by the suction pad 120 (grinding processing table 118) by drive of the vacuum mechanism.

The control unit of the first servomotor 34 that has received the rearward movement signal (ON signal) drives the first servomotor 34. The rotation of the shaft of the first servomotor 34 moves the first slide blocks in the front-rear direction from the front side toward the rear side of the first guide frame 30, whereby the grinding device 119 moves to the rear side in the front-rear direction in the grinding processing area 22 together with the first traveling frame 32, and the grinding device 119 is positioned on the outer side in the width direction (grinding processing start position) of the first corner portion 18a (front side edge) of the main body portion 56a of each of the glass plates 11a and 11b. The grinding device 119 moves on the peripheral edge (side edge, front and rear end edge) of the main body portion 56a of each of the glass plates 11a and 11b in synchronization with the cutting device 55.

After the grinding device 119 is positioned on the outer side in the width direction (grinding processing start position) of the first corner portion 18a of the main body portion 56a of each of the glass plates 11a and 11b, the controller transmits a stop signal (OFF signal) to the control unit of the first servomotor 34 and transmits a drive signal (ON signal) to the control unit of the fourteenth servomotor 121. The control unit of the first servomotor 34 that has received the stop signal (OFF signal) stops the first servomotor 34, and the control unit of the fourteenth servomotor 121 that has received the drive signal (ON signal) drives the fourteenth servomotor 121. The rotation of the shaft of the fourteenth servomotor 121 causes the slide block 63b to move the feed screw 60b in the width direction from the other side edge portion 48b toward the one side edge portion 48a in the grinding processing area 22, so that the grinding processing table 118 moves in the width direction from the side of the other side edge portion 48b toward the side of the one side edge portion 48a in the grinding processing area 22, and the grinding wheel 128 of the grinding device 119 is positioned at the first corner portion 18a of the main body portion 56a of each of the glass plates 11a and 11b. The first corner portion 18a of the main body portion 56a of each of the glass plates 11a and 11b enters the slit 132 of the cover 130 of the grinding jig 122.

After the grinding wheel 128 of the grinding device 119 is positioned at the first corner portion 18a of each of the glass plates 11a and 11b, the controller transmits a drive signal (ON signal) and an NC control signal to the control units of the fifteenth to seventeenth servomotors 123 to 125 and the control unit of the spindle motor 131 of the grinding device 119, transmits a rearward movement signal (ON signal) and an NC control signal to the control unit of the first servomotor 34, and transmits an NC control signal to the control unit of the fourteenth servomotor 121. The control units of the fifteenth to seventeenth servomotors 123 to 125, the control unit of the spindle motor 131, the control unit of the first servomotor 34, and the control unit of the fourteenth servomotor 121 that have received the drive signal (ON signal) and the NC control signal drive the fifteenth to seventeenth servomotors 123 to 125, the spindle motor 131, the first servomotor 34, and the fourteenth servomotor 121, perform contour control motion by NC control on the vicinity of one side edge (one side edge portion) of the main body portion 56a of each of the glass plates 11a and 11b, and the grinding wheel 128 performs grinding processing on the vicinity of one side edge (one side edge portion) of the main body portion 56a of each of the glass plates 11a and 11b (grinding processing means (grinding processing step)).

The control unit of the first servomotor 34 that has received the rearward movement signal (ON signal) drives the first servomotor 34 during the grinding processing (during the cutting processing) to move the grinding device 119 rearward in the front-rear direction in the grinding processing area 22, and the control unit of the fourteenth servomotor 121 drives the fourteenth servomotor 121 during the grinding processing (during the cutting processing) to reciprocate the grinding device 119 in the width direction in the grinding processing area 22. The grinding wheel 128 of the grinding device 119 moves from the first corner portion 18a toward the second corner portion 18b of each of the glass plates 11a and 11b while grinding the vicinity of one side edge (one side edge portion) of the main body portion 56a of each of the glass plates 11a and 11b along the edge (contour cutting line K1) of the main body portion 56a of each of the glass plates 11a and 11b.

After the grinding processing in the vicinity of one side edge (one side edge portion) of the main body portion 56a of each of the glass plates 11a and 11b is completed by the grinding wheel 128 of the grinding device 119, and the grinding wheel 128 is positioned at the second corner portion 18b of the main body portion 56a of each of the glass plates 11a and 11b, the grinding processing table 118 moves in the width direction from the side of the one side edge portion 48a toward the side of the other side edge portion 48b in the grinding processing area 22, and the grinding wheel 128 performs the grinding processing on the vicinity of the rear end edge (rear end edge portion) of the main body portion 56a of each of the glass plates 11a and 11b with the movement of the grinding processing table 118 in the width direction (grinding processing means (grinding processing step)).

The control unit of the fourteenth servomotor 121 drives the fourteenth servomotor 121 during the grinding processing (during the cutting processing) to move the grinding processing table 118 in the width direction in the grinding processing area 22, and the control unit of the first servomotor 34 drives the first servomotor 34 during the grinding processing (during the cutting processing) to reciprocate the grinding device 119 in the front-rear direction in the grinding processing area 22. The grinding wheel 128 of the grinding device 119 moves from the second corner portion 18b toward the third corner portion 18c of the main body portion 56a of each of the glass plates 11a and 11b while grinding the vicinity of the rear end edge (rear end edge portion) of the main body portion 56a of each of the glass plates 11a and 11b along the edge (contour cutting line K1) of the main body portion 56a of each of the glass plates 11a and 11b.

After the grinding processing in the vicinity of the rear end edge (rear end edge portion) of the main body portion 56a of each of the glass plates 11a and 11b is completed by the grinding wheel 128 of the grinding device 119, and the grinding wheel 128 is positioned at the third corner portion 18c of the main body portion 56a of each of the glass plates 11a and 11b, the grinding device 119 moves forward in the front-rear direction, and the grinding wheel 128 performs the grinding processing in the vicinity of the second side edge (second side edge portion) of the main body portion 56a of each of the glass plates 11a and 11b with the movement of the grinding device 119 forward in the front-rear direction (grinding processing means (grinding processing step)).

The control unit of the first servomotor 34 drives the first servomotor 34 during the grinding processing (during the cutting processing) to move the grinding device 119 forward in the front-rear direction in the grinding processing area 22, and the control unit of the fourteenth servomotor 121 drives the fourteenth servomotor 121 during the grinding processing (during the cutting processing) to reciprocate the grinding processing table 118 in the width direction in the grinding processing area 22. The grinding wheel 128 of the grinding device 119 moves from the third corner portion 18c toward the fourth corner portion 18d of the main body portion 56a of each of the glass plates 11a and 11b while grinding the vicinity of the second side edge (second side edge portion) of the main body portion 56a of each of the glass plates 11a and 11b along the edge (contour cutting line K1) of the main body portion 56a of each of the glass plates 11a and 11b.

After the grinding processing in the vicinity of the second side edge (second side edge portion) of the main body portion 56a of each of the glass plates 11a and 11b is completed by the grinding wheel 128 of the grinding device 119, and the grinding wheel 128 is positioned at the fourth corner portion 18d of the main body portion 56a of each of the glass plates 11a and 11b, the grinding processing table 118 moves in the width direction from the side of the other side edge portion 48b toward the side of the one side edge portion 48a in the grinding processing area 22, and the grinding wheel 128 performs the grinding processing in the vicinity of the front end edge (front end edge portion) of the main body portion 56a of each of the glass plates 11a and 11b with the movement of the grinding processing table 118 in the width direction (grinding processing means (grinding processing step)).

The control unit of the fourteenth servomotor 121 drives the fourteenth servomotor 121 during the grinding processing (during the cutting processing) to move the grinding processing table 118 in the width direction in the grinding processing area 22, and the control unit of the first servomotor 34 drives the first servomotor 34 during the grinding processing (during the cutting processing) to reciprocate the grinding device 118 in the front-rear direction in the grinding processing area 22. The grinding wheel 128 of the grinding device 118 moves from the fourth corner portion 18d toward the first corner portion 18a of the main body portion 56a of each of the glass plates 11a and 11b while grinding the vicinity of the front end edge (front end edge portion) of the main body portion 56a of each of the glass plates 11a and 11b along the edge (contour cutting line K1) of the main body portion 56a of each of the glass plates 11a and 11b. When the grinding processing in the vicinity of the front end edge (front end edge portion) of the main body portion 56a of each of the glass plates 11a and 11b is completed by the grinding wheel 128 of the grinding device 119, the grinding device 119 moves to the outer side in the width direction (grinding processing start position) of the first corner portion 18a (front end edge) of the main body portion 56a of each of the glass plates 11a and 11b and stands by.

In the grinding processing area 22, for example, in a case where, after the outermost side edge (in the shown glass plate 11b, the one side edge 14) located on the outermost side in the width direction in the one side edge 14 extending in the front-rear direction on one side in the width direction of the small-sized (small-area) glass plate 11b having small areas of the upper surface 12 and the lower surface 13 to be processed later is positioned (matched) at the position (positioning first reference L1 (virtual positioning first reference line)) of the outermost side edge (in the shown glass plate 11a, the one side edge 14) located on the outermost side in the width direction in the one side edge 14 extending in the front-rear direction on one side in the width direction of the large-sized (large-area) glass plate 11a having large areas of the upper surface 12 and the lower surface 13 to be processed first by the first positioning means (first positioning step), so that the glass plates 11a and 11b in which the areas of the upper surface 12 and the lower surface 13 are different are positioned, and the front-rear direction center O1 (center line L2 extending in the width direction by dividing the dimension of the glass plate 11b in the front-rear direction by 2) of the side edge 14 extending in the front-rear direction on one side in the width direction of the small-sized glass plate 11b to be processed later is positioned (matched) at the position (positioning second reference L2 (virtual positioning second reference line)) of the front-rear direction center O1 (center line L2 extending in the width direction by dividing the dimension of the glass plate 11a in the front-rear direction by 2) of the side edge 14 extending in the front-rear direction on one side in the width direction of the large-sized glass plate 11a to be processed first by the second positioning means (second positioning step), so that the glass plates 11a and 11b in which the areas of the upper surface 12 and the lower surface 13 are different are positioned, the grinding processing of the glass plate 11b having a different area to be processed later is performed, the moving distance of the grinding device 119 until reaching the side edge 14 of the large-sized glass plate 11a (moving distance in the width direction of the grinding processing table 118) and the moving distance of the grinding device 119 until reaching the side edge 14 of the small-sized glass plate 11b (moving distance in the width direction of the grinding processing table 118) are equal, and the moving distance until the grinding device 119 returns from the outermost side edge (side edge 14) of the large-sized glass plate 11a to the outer side in the width direction of the glass plate 11a and the moving distance from the outermost side edge (side edge 14) of the small-sized glass plate 11b to the outer side in the width direction of the glass plate 11b are equal.

The moving distance of the grinding device 119 until reaching the outermost side edge (side edge 14) of the small-sized glass plate 11b is shortened, the moving distance of the grinding device 119 until returning from the outermost side edge (side edge 14) of the small-sized glass plate 11b to the outer side in the width direction of the glass is shortened, the arrival time (non-processing time) until the grinding device 119 reaches the outermost side edge (side edge 14) of the small-sized glass plate 11b is shortened, and the return time until the grinding device 119 returns from the outermost side edge (side edge 14) of the small-sized glass plate 11b to the outer side in the width direction of the glass is shortened.

After the grinding processing of the main body portion 56a of each of the glass plates 11a and 11b is completed, the main body portion 56a of each of the glass plates 11a and 11b subjected to the grinding processing is conveyed from the grinding processing area 22 to the unloading area 23 by the glass plate fourth holder 40d. In the unloading area 23, the main body portion 56a of each of the glass plates 11a and 11b subjected to the cutting processing, the bend-breaking processing, and the grinding processing is moved forward from the rear end portion toward the front end portion of the unloading area 23 by the unloading conveyor 135, and the main body portion 56a of each of the glass plates 11a and 11b subjected to each processing is unloaded from the unloading area 23.

When the main body portion 56a of each of the glass plates 11a and 11b subjected to each processing is positioned on the unloading conveyor 135 in the unloading area 23, the main body portion 56a of each of the glass plates 11a and 11b subjected to the grinding processing is positioned on the grinding processing table 118 in the grinding processing area 22, the main body portion 56a of each of the glass plates 11a and 11b subjected to the bend-breaking processing is positioned on the bend-breaking processing table 74 in the bend-breaking processing area 21, the glass plates 11a and 11b subjected to the cutting processing are positioned on the cutting processing table 59 in the cutting processing area 20, and the glass plates 11a and 11b before processing subjected to the positioning by the first positioning means (first positioning step) and the second positioning means (second positioning step) are positioned on the loading conveyor 43 in the loading area 19. As described above, in the bend-breaking system 10a and the bend-breaking processing method (glass plate processing system 10), a plurality of glass plates are sequentially conveyed from the loading area 19 toward the unloading area 23, and processing of the plurality of glass plates 11a and 11b is continuously performed.

In the bend-breaking system 10a and the bend-breaking processing method (glass plate processing system 10), after the bend-breaking cutter wheel 93 lowered in the up-down direction by the holder raising/lowering mechanism 94 (first raising/lowering mechanism) forms the end cutting line K2 at the edge portion 56b of each of the glass plates 11a and 11b and forms the end cutting line K2 at the edge portion 56b of each of the glass plates 11a and 11b, the bend-breaking cutter wheel 93 is raised in the up-down direction by the holder raising/lowering mechanism 94 (first raising/lowering mechanism), and the first pressing member 95a is lowered in the up-down direction by the first pressing member raising/lowering mechanism 96a (second raising/lowering mechanism), and after the main body and the edge portion of each of the glass plates are sandwiched by the semicircular first pressing surface 105a of the first pressing member 95a and the first and second support surfaces 117a and 117b of the first and second support members 108a and 108b, which abut on the upper surface 12 of the edge portion 56b of each of the glass plates 11a and 11b extending to the vicinity of the outer side of the contour cutting line K1 across the contour cutting line K1 and the upper surface 12 of the main body portion 56a of each of the glass plates 11a and 11b extending to the vicinity of the inner side of the contour cutting line K1, and the first pressing member 105a and the first and second support members 108a and 108b sandwich the main body portion 56a and the edge portion 56b, the second support member 108b is lowered in the up-down direction by the second support member raising/lowering mechanism 109 (fourth raising/lowering mechanism), the second pressing member 95b is lowered in the up-down direction by the second pressing member raising/lowering mechanism 96b (third raising/lowering mechanism) while maintaining the sandwiching of the main body portion 56a by the first pressing surface 105a of the first pressing member 95a and the first support surface 117a of the first support member 108a, and the second pressing surface 105b of the second pressing member 95b presses the edge portion 56b of each of the glass plates 11a and 11b extending the outer side of the contour cutting line K1 downward, bend-breaks the edge portion 56b. Therefore, the main body portion 56a of each of the glass plates 11a and 11b is sandwiched by the first pressing surface 105a of the first pressing member 95a and the first support surface 117a of the first support member 108a, and the first support surface 117a having a predetermined area molded in a perfect circle shape supports the lower surface 13 of the main body portion 56a of each of the glass plates 11a and 11b extending to the vicinity of the inner side of the contour cutting line K1, and the vicinity of the outer peripheral edge of the first support surface 117a supports the lower surface 13 of the edge portion 56b of each of the glass plates 11a and 11b extending to the vicinity of the outer side of the contour cutting line K1, so that the main body portion 56b of each of the glass plates 11a and 11b is firmly fixed by the first pressing member 95a and the first support member 108a. As a result, even if the second pressing surface 105b of the second pressing member 95b presses the edge portion 56b of each of the glass plates 11a and 11b extending outer side of the contour cutting line K1 downward, and the pressing force of the second pressing member 95b acts on the edge portion 56b, elastic deformation of the main body portion 56a and the edge portion 56b of each of the glass plates 11a and 11b extending to the vicinity of the contour cutting line K1 can be prevented, and the edge portion 56b of each of the glass plates 11a and 11b is bend-broken at the contour cutting line K1 and the end cutting line K2 by the pressing force of the second pressing member 95b without curving the main body portion 56a and the edge portion 56b upward, so that the edge portion 56b of each of the glass plates 11a and 11b can be smoothly and reliably bend-broken.

In the bend-breaking system 10a and the bend-breaking processing method (glass plate processing system 10), since the first pressing surface 105a of the first pressing member 95a is formed in a semi-annular shape surrounding the second pressing member 95b, when the second pressing member 95b is positioned at the edge portion 56b of each of the glass plates 11a and 11b extending to the vicinity of the outer side of the contour cutting line K1, a part of the first pressing surface 105a of the first pressing member 95a is always positioned at the upper surface 12 of the main body portion 56a of each of the glass plates 11a and 11b extending to the vicinity of the inner side of the contour cutting line K1, the main body portion 56a of each of the glass plates 11a and 11b can be reliably sandwiched by the semicircular first pressing surface 105a of the first pressing member 95a and the first support member 108a, and the main body portion 56a of each of the glass plates 11a and 11b can be firmly fixed by the first pressing surface 105a of the first pressing member 95a and the first support member 108a.

In the bend-breaking system 10a and the bend-breaking processing method (glass plate processing system 10), the second support surface 117b formed in an annular shape of the second support member 108b extending in the direction around the first support member 108a supports the lower surface 13 of the edge portion 56b of each of the glass plates 11a and 11b extending to the vicinity of the outer side of the contour cutting line K1 across the contour cutting line K1 and the lower surface 13 of the main body portion 56a of each of the glass plates 11a and 11b extending to the vicinity of the inner side of the contour cutting line K1, so that when the first pressing member 95a presses the main body portion 56a and the edge portion 56b of each of the glass plates 11a and 11b downward, it is possible to prevent downward curving of the edge portion 56b of each of the glass plates 11a and 11b extending to the vicinity of the outer side of the contour cutting line K1 supported by the second support surface 117b of the second support member 108b and the main body portion 56a of each of the glass plates 11a and 11b extending to the vicinity of the inner side of the contour cutting line K1, and to prevent inadvertent cracking or breakage of the main body portion 56a and the edge portion 56b when the first pressing member 95a and the first and second support members 108a and 108b sandwich the main body portion 56a and the edge portion 56b of each of the glass plates 11a and 11b.

In the bend-breaking system 10a and the bend-breaking processing method (glass plate processing system 10), the cutter wheel axis O3 of the bend-breaking cutter wheel 93 is eccentric radially outward with respect to the cutter holder center axis O2 of the bend-breaking cutter holder 92 (holder main body 97), and the bend-breaking cutter wheel 93 has a caster effect. Therefore, only by traveling (moving) the first and second bend-breaking jigs 84a and 84b (bend-breaking jigs) in a circular shape from the vicinity of the start point of the end cutting line K2 and simply defining a circular trajectory (by the bend-breaking jigs slightly traveling (moving) in a predetermined direction from the vicinity of the start point of the end cutting line K2), the bend-breaking cutter wheel 93 rotates in the direction (around the axis) around the cutter holder center axis O2, the rolling (rotating) direction of the peripheral edge 102 of the bend-breaking cutter wheel 93 is directed to the traveling (moving) direction (direction in which the virtual end cutting line extends) of the first and second bend-breaking jigs 84a and 84b (bend-breaking cutter holder 92), and the rolling direction of the peripheral edge 102 of the bend-breaking cutter wheel 93 can be quickly and easily changed.

In the bend-breaking system 10a and the bend-breaking processing method (glass plate processing system 10), the first and second bend-breaking jigs 84a and 84b (bend-breaking jigs) define a circular trajectory from the vicinity of the start point of the end cutting line K2 in parallel to the upper surface 12 of the edge portion 56b of each of the glass plates 11a and 11b (slightly travel in a predetermined direction from the vicinity of the start point of the end cutting line K2 on the upper surface 12), so that the bend-breaking cutter wheel 93 abutting on the upper surface 12 of the edge portion 56b of each of the glass plates 11a and 11b rotates in the direction around the cutter holder center axis O2 (around the axis), and the rolling direction of the peripheral edge 102 of the bend-breaking cutter wheel 93 is the same as the traveling (moving) direction of the first and second bend-breaking jigs 83a and 83b (bend-breaking cutter holder 92). Therefore, the rolling direction of the peripheral edge 102 of the bend-breaking cutter wheel 93 can be made to match the traveling direction (direction in which the virtual end cutting line extends at the edge portion 56b of each of the glass plates 11a and 11b) of the first and second bend-breaking jigs 84a and 84b (bend-breaking jigs), and the rolling (rotating) direction of the peripheral edge 102 of the bend-breaking cutter wheel 93 and the traveling direction of the first and second bend-breaking jigs 84a and 84b (bend-breaking jigs) can be made the same in an initial action in a series of movements of forming the end cutting line K2 at the edge portion 56b of each of the glass plates 11a and 11b.

In the bend-breaking system 10a and the bend-breaking processing method (glass plate processing system 10), in each end cutting line forming area of the edge portion 56b of each of the glass plates 11a and 11b to be processed, while the rolling direction of the peripheral edge 102 of the bend-breaking cutter wheel 93 matches the traveling direction (direction in which the virtual end cutting line of the edge portion 56b of each of the glass plates 11a and 11b extends) of the first and second bend-breaking jigs 84a and 84b (bend-breaking jigs), the end cutting line K2 can be put in the end cutting line forming area, and the plurality of end cutting lines K2 can be efficiently formed in the end cutting line forming area of the edge portion 56b of each of the glass plates 11a and 11b in a short time.

In the bend-breaking system 10a and the bend-breaking processing method (glass plate processing system 10), the bend-breaking cutter wheel 93 itself is rotated in the direction around the cutter holder center axis O2 of the bend-breaking cutter holder 92 (around the axis) (around the rotation center), the rotation control axis for rotating the bend-breaking cutter wheel 93 itself is set as the cutter holder center axis O2 of the bend-breaking cutter holder 92, and the angle of the rotation control axis is adjusted to the rolling direction of the bend-breaking cutter wheel 93 (moving direction of the bend-breaking jigs 84a and 84b), whereby an error due to eccentricity can be minimized.

In the bend-breaking system 10a and the bend-breaking processing method (glass plate processing system 10), it is not necessary to install a θ-axis servomotor installed in the glass plate processing system disclosed in Patent Literature 1 or a transmission member (a pulley, a belt, or the like) that transmits a rotation force of the θ-axis servomotor to a bend-breaking cutter holder, and miniaturization, energy saving, and cost reduction of the glass plate processing system 10 can be achieved. Furthermore, it is not necessary to make the rolling direction of the peripheral edge 102 of the bend-breaking cutter wheel 93 the same as the direction in which the virtual end cutting line of the edge portion 56b of each of the glass plates 11a and 11b extends (traveling direction of the first and second bend-breaking jigs 84a and 84b (bend-breaking jigs)) by rotating the θ-axis servomotor in the bend-breaking processing, and it is not necessary to change the rolling direction of the peripheral edge 102 of the bend-breaking cutter wheel 93 using the θ-axis servomotor every time the end cutting line K2 is formed. Therefore, it is possible to shorten the time and improve the efficiency of the bend-breaking processing in the glass plate processing system 10.

### Reference Signs List

10 glass plate processing system
10a bend-breaking system
11a large-sized glass plate
11b small-sized glass plate
12 upper surface
13 lower surface
14 first side edge (one side edge)
15 second side edge (other side edge)
16 front end edge
17 rear end edge
18a to 18d first to fourth corner portions
19 loading area
20 cutting processing area
21 bend-breaking processing area
22 grinding processing area
23 unloading area
24 conveyance mechanism
25 system stand
26a, 26b first and second pillars
27 fixed frame
28 first moving unit (first moving means)
29 second moving unit (second moving means)
30 first guide frame
31 first guide rail
32 first traveling frame
33 first guide shoe
34 first servomotor
35 second guide frame
36 second guide rail
37 second traveling frame
38 guide shoe
39 second servomotor
40a to 40d glass plate first to fourth holders
41 pad installing plate
42 suction pad
43 loading conveyor
44 stopper
45 roller
45a roller
46 roller raising/lowering mechanism
47 moving mechanism
48a one side edge portion
48b other side edge portion
49 shaft
50 rod
51 third servomotor
52 moving arm
53 abutment member
54 cutting processing table
55 cutting device
56a main body portion
56b edge portion (peripheral edge portion)
57a, 57b base lane
58a first moving mechanism
58b second moving mechanism
59a, 59b traveling guide rail
60a, 60b feed screw
61 fourth servomotor
62a, 62b guide shoe
63a, 63b slide block (housing nut)
64 cutting jig
65 air cylinder
66 fifth servomotor
67 cutting cutter wheel
68 cutting cutter holder
69 cutter raising/lowering shaft
70 cutter raising/lowering guide
71 support shaft
72 bracket
73 timing belt
74 bend-breaking processing table
75 bend-breaking device
75a first bend-breaking device
75b second bend-breaking device
76 support device
76a first support device
76b second support device
77 belt conveyor
78 conveyor drive motor
79 belt
80 pulley
81 carrier roller
82 conveyor frame
83 suspension frame
84a first bend-breaking jig
84b second bend-breaking jig
85 sixth servomotor (X-axis servomotor)
86a X-axis first actuator
86b X-axis second actuator
87 seventh servomotor (Y-axis servomotor)
88a Y-axis first actuator
88b Y-axis second actuator
89a X-axis first actuator frame
89b X-axis second actuator frame
89c Y-axis first actuator frame
89d Y-axis second actuator frame
90 eighth servomotor (X-axis servomotor)
91 ninth servomotor (Y-axis servomotor)
92 bend-breaking cutter holder
93 bend-breaking cutter wheel
94 holder raising/lowering mechanism (first raising/lowering mechanism)
95a first pressing member
95b second pressing member
96a first pressing member raising/lowering mechanism (second raising/lowering mechanism)
96b second pressing member raising/lowering mechanism (third raising/lowering mechanism)
97 holder main body
98 holder head
99a rolling direction changing start point
99b rolling direction changing end point
100 bearing
101 rolling shaft
102 peripheral edge
103 coupling portion
104 bracket
105a first pressing surface
105b second pressing surface
106 through hole
107 guide frame
108a first support member
108b second support member
109 second support member raising/lowering mechanism (fourth raising/lowering mechanism)
110 tenth servomotor (X-axis servomotor)
111a X-axis third actuator
111b X-axis fourth actuator
112 eleventh servomotor (Y-axis servomotor)
113a Y-axis third actuator
113b Y-axis fourth actuator
114a X-axis third actuator frame
114b X-axis fourth actuator frame
114c Y-axis third actuator frame
114d Y-axis fourth actuator frame
115 twelfth servomotor (X-axis servomotor)
116 thirteenth servomotor (Y-axis servomotor)
117a first support surface
117b second support surface
118 grinding processing table
119 grinding device
120 suction pad
121 fourteenth servomotor
122 grinding jig
123 fifteenth servomotor
124 sixteenth servomotor
125 seventeenth servomotor
126 grinding wheel raising/lowering screw
127 grinding wheel cutting screw
128 grinding wheel
129 grinding holder
130 cover
131 spindle motor
132 slit
133 motor housing
134 bracket
135 unloading conveyor
140 bend-breaking device
141 bend-breaking jig
142 first raising/lowering mechanism (air cylinder)
143 pressing roller
144 second raising/lowering mechanism (air cylinder)
145 bend-breaking cutter wheel
146 bend-breaking cutter holder
147 θ-axis servomotor
K1 contour cutting line (cutting line)
K2 end cutting line
L1 positioning first reference (virtual positioning first reference line)
L2 positioning second reference (virtual positioning second reference line) (center line)
O1 front-rear direction center of side edge
O2 cutter holder center axis
O3 cutter wheel axis
S separation dimension (eccentric dimension)

## Claims

1. A bend-breaking system that bend-breaks an edge portion of a glass plate to be processed,
wherein the bend-breaking system includes a bend-breaking device that is positioned on a side of an upper surface of the glass plate and bend-breaks the edge portion of the glass plate, and a support device that is positioned on a side of a lower surface of the glass plate and supports the glass plate,
the bend-breaking device includes a bend-breaking cutter wheel that forms an end cutting line on an outer side of a contour cutting line formed at the edge portion of the glass plate, a first pressing member that presses a main body portion of the glass plate extending to an inner side of the contour cutting line downward, a second pressing member that presses the edge portion of the glass plate extending to the outer side of the contour cutting line downward, a first raising/lowering mechanism that raises and lowers the bend-breaking cutter wheel in an up-down direction, a second raising/lowering mechanism that raises and lowers the first pressing member in the up-down direction, and a third raising/lowering mechanism that raises and lowers the second pressing member in the up-down direction, the support device includes a first support member that supports the main body portion of the glass plate, a second support member that supports the edge portion of the glass plate, and a fourth raising/lowering mechanism that raises and lowers the second support member in the up-down direction, and
the bend-breaking system includes a cutter wheel raising means that raises the bend-breaking cutter wheel in the up-down direction by the first raising/lowering mechanism after the bend-breaking cutter wheel lowered in the up-down direction by the first raising/lowering mechanism forms an end cutting line at the edge portion of the glass plate, a glass plate sandwiching means that lowers the first pressing member in the up-down direction by the second raising/lowering mechanism so that the first pressing member and the first and second support members sandwich the main body portion and the edge portion of the glass plate, a second support member lowering means that lowers the second support member in the up-down direction by the fourth raising/lowering mechanism after the first pressing member and the first and second support members sandwich the main body portion and the edge portion by the glass plate sandwiching means, and an edge portion bend-breaking means that lowers the second pressing member in the up-down direction by the third raising/lowering mechanism and presses the edge portion of the glass plate extending to the outer side of the contour cutting line downward while maintaining the sandwiching of the main body portion by the first pressing member and the first support member and bend-breaks the edge portion of the glass plate.

2. The bend-breaking system according to claim 1, wherein the second pressing member is located in a vicinity of an outer side of the bend-breaking cutter wheel and extends in a direction around the bend-breaking cutter wheel, and the first pressing member is located in a vicinity of an outer side of the second pressing member and extends in a direction around the second pressing member, and, in the glass plate sandwiching means, when the first pressing member is lowered by the second raising/lowering mechanism, the first pressing member abuts on an upper surface of the edge portion of the glass plate extending to the vicinity of the outer side of the contour cutting line across the contour cutting line and an upper surface of the main body portion of the glass plate extending to a vicinity of an inner side of the contour cutting line, and in the edge portion bend-breaking means, when the second pressing member is lowered by the third raising/lowering mechanism, the second pressing member abuts on the upper surface of the edge portion of the glass plate extending to the vicinity of the outer side of the contour cutting line.

3. The bend-breaking system according to claim 2, wherein the first pressing member has a first pressing surface having a predetermined area that abuts on the upper surface of the glass plate, the second pressing member has a second pressing surface having a predetermined area that abuts on the upper surface of the glass plate, the second pressing surface of the second pressing member is formed in an annular shape surrounding the bend-breaking cutter wheel, and a first pressing surface of the first pressing member is formed in a semi-annular shape surrounding the second pressing member, and, in the glass plate sandwiching means, when the first pressing member is lowered by the second raising/lowering mechanism, the first pressing surface formed in the semi-annular shape abuts on the upper surface of the edge portion of the glass plate extending to the vicinity of the outer side of the contour cutting line across the contour cutting line and the upper surface of the main body portion of the glass plate extending to the vicinity of the inner side of the contour cutting line, and in the edge portion bend-breaking means, when the second pressing member is lowered by the third raising/lowering mechanism, the second pressing surface formed in the annular shape abuts on the upper surface of the edge portion of the glass plate extending to the vicinity of the outer side of the contour cutting line.

4. The bend-breaking system according to any one of claims 1 to 3, wherein the second support member is positioned in a vicinity of an outer side of the first support member and extends in a direction around the first support member, and, in the glass plate sandwiching means, when the second support member is raised by the fourth raising/lowering mechanism, the second support member supports a lower surface of the edge portion of the glass plate extending to a vicinity of the outer side of the contour cutting line and a lower surface of the main body portion of the glass plate extending to a vicinity of an inner side of the contour cutting line.

5. The bend-breaking system according to claim 4, wherein the second support member has a second support surface having a predetermined area for supporting the lower surface of the glass plate, and the second support surface of the second support member is formed in an annular shape surrounding the first support member, and, in the glass plate sandwiching means, when the second support member is raised by the fourth raising/lowering mechanism, the second support surface formed in the annular shape supports the lower surface of the edge portion of the glass plate extending to the vicinity of the outer side of the contour cutting line across the contour cutting line and the lower surface of the main body portion of the glass plate extending to the vicinity of the inner side of the contour cutting line.

6. The bend-breaking system according to claim 5, wherein the first support member has a first support surface having a predetermined area for supporting the lower surface of the glass plate, and the first support surface of the first support member is formed in a perfect circle shape, and, in the glass plate sandwiching means, the first support surface formed in the perfect circle shape supports the lower surface of the main body portion of the glass plate extending to the vicinity of the inner side of the contour cutting line, and a vicinity of an outer peripheral edge of the first support surface supports the lower surface of the edge portion of the glass plate extending to the vicinity of the outer side of the contour cutting line.

7. The bend-breaking system according to any one of claims 1 to 6, wherein the bend-breaking system includes a bend-breaking device moving means that moves the bend-breaking device in a horizontal direction on the side of the upper surface of the glass plate after the bend-breaking cutter wheel and the first and second pressing members are raised by the first to third raising/lowering mechanisms, and a support device moving means that moves the support device in the horizontal direction in synchronization with the bend-breaking device on the side of the lower surface of the glass plate, and, after the bend-breaking device and the support device are moved in synchronization by the bend-breaking device moving means and the support device moving means, the bend-breaking device and the support device cooperate with each other to perform the glass plate sandwiching means and the edge portion bend-breaking means.

8. The bend-breaking system according to claim 7, wherein the bend-breaking system includes an end cutting line forming means in which the bend-breaking cutter wheel forms an end cutting line at the edge portion of the glass plate in a state where the first and second support members support the lower surface of the edge portion extending to the outer side of the contour cutting line of the glass plate while the bend-breaking device and the support device move in synchronization.

9. The bend-breaking system according to any one of claims 1 to 8, wherein the bend-breaking device includes a bend-breaking cutter holder that is located above the bend-breaking cutter wheel and holds the bend-breaking cutter wheel, a cutter wheel axis extending in an up-down direction of the bend-breaking cutter wheel is eccentric radially outward with respect to a cutter holder center axis extending in an up-down direction of the bend-breaking cutter holder, and the bend-breaking cutter wheel is rotatable by 360° in a direction around the cutter wheel axis with respect to the bend-breaking cutter holder, and the bend-breaking system causes the bend-breaking device to travel slightly in a predetermined direction on the upper surface of the edge portion of the glass plate in parallel to the upper surface, rotates the bend-breaking cutter wheel abutting on the upper surface of the edge portion of the glass plate in the direction around the cutter wheel axis, and further includes a rolling direction changing means that makes a rolling direction of the bend-breaking cutter wheel the same as a traveling direction of the bend-breaking device.

10. The bend-breaking system according to claim 9, wherein, in the end cutting line forming means, after the bend-breaking device is caused to slightly travel in a predetermined direction by the rolling direction changing means to make the rolling direction of the bend-breaking cutter wheel the same as the traveling direction of the bend-breaking device, the bend-breaking device travels in a predetermined direction so that the bend-breaking cutter wheel forms an end cutting line at the edge portion of the glass plate along the traveling direction of the bend-breaking device.

11. A bend-breaking processing method for bend-breaking an edge portion of a glass plate to be processed,
wherein the bend-breaking processing method uses a bend-breaking device that is positioned on a side of an upper surface of the glass plate and bend-breaks the edge portion of the glass plate, and a support device that is positioned on a side of a lower surface of the glass plate and supports the glass plate,
the bend-breaking device includes a bend-breaking cutter wheel that forms an end cutting line on an outer side of a contour cutting line formed at the edge portion of the glass plate, a first pressing member that presses a main body portion of the glass plate extending to an inner side of the contour cutting line downward, a second pressing member that presses the edge portion of the glass plate extending to the outer side of the contour cutting line downward, a first raising/lowering mechanism that raises and lowers the bend-breaking cutter wheel in an up-down direction, a second raising/lowering mechanism that raises and lowers the first pressing member in the up-down direction, and a third raising/lowering mechanism that raises and lowers the second pressing member in the up-down direction,
the support device includes a first support member that supports the main body portion of the glass plate, a second support member that supports the edge portion of the glass plate, and a fourth raising/lowering mechanism that raises and lowers the second support member in the up-down direction, and
the bend-breaking processing method includes a cutter wheel raising step of raising the bend-breaking cutter wheel in the up-down direction by the first raising/lowering mechanism after the bend-breaking cutter wheel lowered in the up-down direction by the first raising/lowering mechanism forms an end cutting line at the edge portion of the glass plate, a glass plate sandwiching step of lowering the first pressing member in the up-down direction by the second raising/lowering mechanism so that the first pressing member and the first and second support members sandwich the main body portion and the edge portion of the glass plate, a second support member lowering step of lowering the second support member in the up-down direction by the fourth raising/lowering mechanism after the first pressing member and the first and second support members sandwich the main body portion and the edge portion by the glass plate sandwiching step, and an edge portion bend-breaking step of lowering the second pressing member in the up-down direction by the third raising/lowering mechanism and presses the edge portion of the glass plate extending to the outer side of the contour cutting line downward while maintaining the sandwiching of the main body portion by the first pressing member and the first support member and bend-breaks the edge portion of the glass plate.

12. The bend-breaking processing method according to claim 11, wherein the second pressing member is located in a vicinity of an outer side of the bend-breaking cutter wheel and extends in a direction around the bend-breaking cutter wheel, and the first pressing member is located in a vicinity of an outer side of the second pressing member and extends in a direction around the second pressing member, and, in the glass plate sandwiching means, when the first pressing member is lowered by the second raising/lowering mechanism, the first pressing member abuts on an upper surface of the edge portion of the glass plate extending to the vicinity of the outer side of the contour cutting line across the contour cutting line and an upper surface of the main body portion of the glass plate extending to a vicinity of an inner side of the contour cutting line, and in the edge portion bend-breaking step, when the second pressing member is lowered by the third raising/lowering mechanism, the second pressing member abuts on the upper surface of the edge portion of the glass plate extending to the vicinity of the outer side of the contour cutting line.

13. The bend-breaking processing method according to claim 12, wherein the first pressing member has a first pressing surface having a predetermined area that abuts on the upper surface of the glass plate, the second pressing member has a second pressing surface having a predetermined area that abuts on the upper surface of the glass plate, the second pressing surface of the second pressing member is formed in an annular shape surrounding the bend-breaking cutter wheel, and a first pressing surface of the first pressing member is formed in a semi-annular shape surrounding the second pressing member, and, in the glass plate sandwiching step, when the first pressing member is lowered by the second raising/lowering mechanism, the first pressing surface formed in the semi-annular shape abuts on the upper surface of the edge portion of the glass plate extending to the vicinity of the outer side of the contour cutting line across the contour cutting line and the upper surface of the main body portion of the glass plate extending to the vicinity of the inner side of the contour cutting line, and in the edge portion bend-breaking step, when the second pressing member is lowered by the third raising/lowering mechanism, the second pressing surface formed in the annular shape abuts on the upper surface of the edge portion of the glass plate extending to the vicinity of the outer side of the contour cutting line.

14. The bend-breaking processing method according to any one of claims 11 to 13, wherein the second support member is positioned in a vicinity of an outer side of the first support member and extends in a direction around the first support member, and, in the glass plate sandwiching step, when the second support member is raised by the fourth raising/lowering mechanism, the second support member supports a lower surface of the edge portion of the glass plate extending to a vicinity of the outer side of the contour cutting line across the contour cutting line and a lower surface of the main body portion of the glass plate extending to a vicinity of an inner side of the contour cutting line.

15. The bend-breaking processing method according to claim 14, wherein the second support member has a second support surface having a predetermined area for supporting the lower surface of the glass plate, and the second support surface of the second support member is formed in an annular shape surrounding the first support member, and, in the glass plate sandwiching step, when the second support member is raised by the fourth raising/lowering mechanism, the second support surface formed in the annular shape supports the lower surface of the edge portion of the glass plate extending to the vicinity of the outer side of the contour cutting line across the contour cutting line and the lower surface of the main body portion of the glass plate extending to the vicinity of the inner side of the contour cutting line.

16. The bend-breaking processing method according to claim 15, wherein the first support member has a first support surface having a predetermined area for supporting the lower surface of the glass plate, and the first support surface of the first support member is formed in a perfect circle shape, and, in the glass plate sandwiching step, the first support surface formed in the perfect circle shape supports the lower surface of the main body portion of the glass plate extending to the vicinity of the inner side of the contour cutting line, and a vicinity of an outer peripheral edge of the first support surface supports the lower surface of the edge portion of the glass plate extending to the vicinity of the outer side of the contour cutting line.

17. The bend-breaking system according to any one of claims 1 to 6, wherein the bend-breaking processing method includes a bend-breaking device moving step of moving the bend-breaking device in a horizontal direction on the side of the upper surface of the glass plate after the bend-breaking cutter wheel and the first and second pressing members are raised by the first to third raising/lowering mechanisms, and a support device moving step of moving the support device in the horizontal direction in synchronization with the bend-breaking device on the side of the lower surface of the glass plate, and, after the bend-breaking device and the support device are moved in synchronization by the bend-breaking device moving step and the support device moving step, the bend-breaking device and the support device cooperate with each other to perform the glass plate sandwiching step and the edge portion bend-breaking step.

18. The bend-breaking processing method according to claim 17, wherein the bend-breaking processing method includes an end cutting line forming step in which the bend-breaking cutter wheel forms an end cutting line at the edge portion of the glass plate in a state where the first and second support members support the lower surface of the edge portion extending to the outer side of the contour cutting line of the glass plate while the bend-breaking device and the support device move in synchronization.

19. The bend-breaking processing method according to any one of claims 11 to 18, wherein the bend-breaking device includes a bend-breaking cutter holder that is located above the bend-breaking cutter wheel and holds the bend-breaking cutter wheel, a cutter wheel axis extending in an up-down direction of the bend-breaking cutter wheel is eccentric radially outward with respect to a cutter holder center axis extending in an up-down direction of the bend-breaking cutter holder, and the bend-breaking cutter wheel is rotatable by 360° in a direction around the cutter wheel axis with respect to the bend-breaking cutter holder, and the bend-breaking processing method causes the bend-breaking device to travel slightly in a predetermined direction on the upper surface of the edge portion of the glass plate in parallel to the upper surface, rotates the bend-breaking cutter wheel abutting on the upper surface of the edge portion of the glass plate in the direction around the cutter wheel axis, and further includes a rolling direction changing step of making a rolling direction of the bend-breaking cutter wheel the same as a traveling direction of the bend-breaking device.

20. The bend-breaking processing method according to claim 19, wherein, in the end cutting line forming step, after the bend-breaking device is caused to slightly travel in a predetermined direction by the rolling direction changing step to make the rolling direction of the bend-breaking cutter wheel the same as the traveling direction of the bend-breaking device, the bend-breaking device travels in a predetermined direction so that the bend-breaking cutter wheel forms an end cutting line at the edge portion of the glass plate along the traveling direction of the bend-breaking device.
